# EUROPEAN PATENT APPLICATION

(11) **EP 4 783 678 A1**
(43) Date of publication of application: **29.07.2026**
(21) Application number: 26154512.3
(22) Date of filing: 27.01.2026
(51) Int. Cl.: H04W 48/18, H04W 48/08, H04W 48/12, H04W 48/16

(54) **CONTROL OF ACCESS UTILIZATION**

(30) Priority: 27.01.2025 US 202563750046 P
(71) Applicant: Comcast Cable Communications, LLC, Philadelphia, PA 19103 (US)
(72) Inventor: CHUN, SungDuck, Philadelphia, 19103 (US); RYU, Jinsook, Philadelphia, 19103 (US); DINAN, Esmael Hejazi, Philadelphia, 19103 (US); PARK, Kyungmin, Philadelphia, 19103 (US); KIM, Taehun, Philadelphia, 19103 (US); SIVAVAKEESAR, Sivapathalingham, Philadelphia, 19103 (US); TSAI, Hsin-Hsi, Philadelphia, 19103 (US); FILIN, Stanislav, Philadelphia, 19103 (US); LIN, Huifa, Philadelphia, 19103 (US); KAZMI, Muhammad Ali, Philadelphia, 19103 (US); XU, Jian, Philadelphia, 19103 (US)
(74) Representative: V.O.

(57) **Abstract**

Methods are described for a wireless device to select a cell for registration. Information, shared with the wireless device, may provide details the wireless device may use to select a cell for registration. The information may provide the wireless device with details on which access technologies are available or unavailable, which are restricted or allowed, and/or which frequencies are available and/or their priority of use. Using the provided information, the wireless device may determine possible cells for selection, and based on measurements of the possible cells, the wireless device may select a cell for registration.

## Description

### CROSS-REFERENCE TO RELATED APPLICATIONS

This application claims the benefit of U.S. Provisional Application No. 63/750,046, filed on January 27, 2025. The above-referenced application is hereby incorporated by reference in its entirety.

### BACKGROUND

Based on policies, subscriptions, and roaming agreements, a network allows different sets of radio access technologies for different wireless devices. A wireless device is configured with access utilization information indicating which radio access technologies the wireless device is allowed to use.

### SUMMARY

The following summary presents a simplified summary of certain features. The summary is not an extensive overview and is not intended to identify key or critical elements.

A wireless device may use control information for configuration of communications via a cell. The control information may include one or more indications of whether certain access technologies are restricted. For example, the control information may indicate whether one or more access technologies of a public land mobile network are restricted. Status of access technology restriction may be used to improve cell selection by the wireless device. For example, the wireless device may perform measurements of neighboring cells, and the wireless device may select a cell based on the measurements of the neighboring cells and whether an access technology is restricted on one or more cells. For example, the wireless device may determine to select a cell that has a highest measurement among cells that are not restricted. By performing cell selection as described herein, advantages may be achieved such as reduced overhead signaling, reduced cell reselection procedures, and/or overall improved service by selected cells.

These and other features and advantages are described in greater detail below.

### BRIEF DESCRIPTION OF THE DRAWINGS

Examples of several of the various embodiments of the present disclosure are described herein with reference to the drawings.
FIG. 1A and FIG. 1B show example communication networks.
FIG. 2A, FIG. 2B, FIG. 2C, and FIG. 2D show examples frameworks for a service-based architecture within a core network.
FIG. 3 shows an example communication network.
FIG. 4A and FIG. 4B show example core network architectures.
FIG. 5 shows an example of a core network architecture.
FIG. 6 shows an example of network slicing.
FIG. 7A shows an example a user plane protocol stack.
FIG. 7B shows an example a control plane protocol stack.
FIG. 7C shows example services provided between protocol layers of the user plane protocol stack.
FIG. 8 shows an example quality of service (QoS) model.
FIG. 9A, FIG. 9B, FIG. 9C, and FIG. 9D show example states and state transitions of a wireless device.
FIG. 10 shows an example registration procedure for a wireless device.
FIG. 11 shows an example service request procedure for a wireless device.
FIG. 12 shows an example of a protocol data unit session establishment procedure for a wireless device.
FIG. 13A shows example elements in a communications network.
FIG. 13B shows example elements of a computing device that may be used to implement any of the various devices described herein.
FIG. 14A, FIG. 14B, FIG. 14C, and FIG. 14D show various example arrangements of physical core network deployments.
FIG. 15 shows an example of how a network can manage usage of one or more RATs and/or one or more access technologies allowable to a wireless device.
FIG. 16 shows an example of an unnecessary registration attempt by a wireless device.
FIG. 17 shows an example of a triggered measurement of cells performed by a wireless device and a subsequent cell reselection by the wireless device.
FIG. 18 shows an example of a wireless device receiving control information and determining frequencies to measure based on the control information.
FIG. 19 shows an example of a wireless device receiving control information and performing cell selection.
FIG. 20 shows an example method of a wireless device receiving control information and performing cell selection.
FIG. 21 shows an example method of a wireless device to select a cell, from one or more cells, for registration using received control information.
FIG. 22 shows an example method of a wireless device to determine one or more cells for measurement based on inter-RAT frequency priority and RAT restriction information.
FIG. 23 shows an example method of a wireless device to select a cell, from one or more cells, for registration using received control information.
FIG. 24 shows an example method of a wireless device to select a cell, from one or more cells, for registration using control information and based on measurements of the one or more cells.
FIG. 25 shows an example method for a wireless device to select a cell, from one or more cells, for registration using control information and a list of forbidden tracking areas.
FIG. 26 shows an example method for a wireless device to determine whether to perform cell selection based on control information, system information, and measurements of one or more cells.
FIG. 27 shows an example method for a wireless device to determine whether to select a cell based on measurements of one or more cells and cell restrictions.
FIG. 28 shows an example method for a wireless device to select a highest priority, unrestricted cell for registration.
FIG. 29 shows an example method for a wireless device to establish sidelink communication.
FIG. 30 shows an example method for a wireless device to prevent attempts to establish sidelink communication using a restricted RAT.
FIG. 31 shows an example method for a wireless device to perform sidelink communication using a RAT.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to a multiple access procedure for wireless communications.

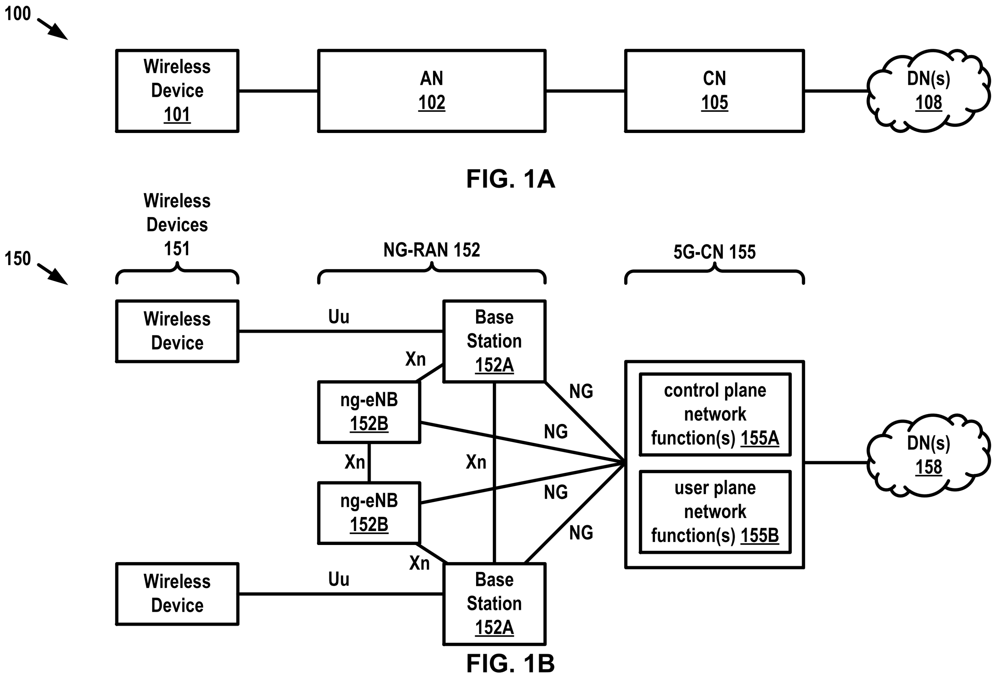

FIG. 1A shows an example communication network 100. The communication network 100 may comprise, for example, a public land mobile network (PLMN) operated/managed/run by a network operator. The communication network 100 comprise one or more of a wireless device 101, an access network (AN) 102, a core network (CN) 105, and/or one or more data network(s) (DNs) 108.

The wireless device 101 may communicate with DNs 108, for example, via AN 102 and/or CN 105. As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, an unmanned aerial vehicle, an urban air mobility aircraft, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The AN 102 may connect the wireless device 101 to the CN 105. A communication direction from the AN 102 to the wireless device 101 may be referred to as a downlink and/or a downlink communication direction. The communication direction from the wireless device 101 to the AN 102 may be referred to as an uplink and/or an uplink communication direction. Downlink transmissions may be separated and/or distinguished from uplink transmissions using frequency division duplexing (FDD), time-division duplexing (TDD), any other duplexing and/or multiplexing schemes, and/or some combination of the two duplexing techniques. The AN 102 may connect to and/or communicate with wireless device 101 via radio communications over an air interface. An AN that at least partially operates over the air interface may be referred to as a radio access network (RAN). A RAN may comprise one or more of: a radio unit (RU), distributed unit (DU), and/or a centralized unit (CU). A RAN may operate in a virtualized and/or in a non-virtualized environment. A RAN may perform one or more network functions in hardware. A RAN may perform one or more network functions in software. A RAN may perform one or more network functions in hardware and/or software. The CN 105 may set up/configure one or more end-to-end connections between wireless device 101 and the one or more DNs 108. The CN 105 may authenticate wireless device 101, provide a charging functionality, and/or provide/configure one or more additional functionalities/services for the wireless device 101.

As used throughout, the term "base station" may refer to, comprise, and/or encompass any element of the AN 102 that facilitates communication between wireless device 101 and the AN 102 (and/or any other elements of the communication network 100). A base station may comprise an RU. ANs and base stations may be referred to by other terminologies and/or may have other implementations. The base station may be a terrestrial base station at a fixed location on the earth. The base station may be a mobile base station with a moving coverage area. The base station may be on an aerial vehicle and/or may be located in space. For example, the base station may be on board an aircraft or a satellite. The RAN may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

The base station may be referred to using different terminologies in different communication standards/protocols. For example, WiFi and other standards may use the term access point. The Third-Generation Partnership Project (3GPP) has produced specifications for three generations of mobile networks, each of which uses a different terminology. Third Generation (3G) and/or Universal Mobile Telecommunications System (UMTS) standards may use the term Node B. 4G, Long Term Evolution (LTE), and/or Evolved Universal Terrestrial Radio Access (E-UTRA) standards may use the term Evolved Node B (eNB). 5G and/or New Radio (NR) standards may describe AN 102 as a next-generation radio access network (NG-RAN) and may refer to base stations as Next Generation eNB (ng-eNB) and/or Generation Node B (gNB). Future standards (for example, 6G, 7G, 8G) may use different terminologies to refer to the elements/components which implement the methods described in the present disclosure (e.g., wireless devices, base stations, ANs, CNs, components thereof, and/or other elements in a communication network). A base station may be and/or comprise a repeater or relay node used to extend the coverage area of a donor node. A repeater node may amplify and rebroadcast a radio signal received from a donor node. A relay node may perform the same/similar functions as a repeater node. A relay node may decode radio signals received from the donor node (e.g., to remove noise) before amplifying and rebroadcasting the radio signal.

The AN 102 may include one or more base stations. The one or more base stations may have/serve one or more coverage areas. A geographical size and/or an extent of a coverage area may be based on a range at which a receiver of AN 102 can successfully receive transmissions from a transmitter (e.g., the wireless device 101) operating within the coverage area (and/or vice-versa). The coverage areas may be referred to as sectors or cells. In some contexts, the term cell may refer to a carrier frequency used in a particular coverage area. Base stations with large coverage areas may be referred to as macrocell base stations. Base stations may cover/serve smaller areas, for example, to provide coverage in areas/locations with weak macrocell coverage, and/or to provide additional coverage in areas with high traffic (e.g., referred to as hotspots). Examples of small cell base stations comprise (e.g., in order of decreasing coverage areas) microcell base stations, picocell base stations, femtocell base stations, and/or home base stations. In combination, the coverage areas of the base stations may provide radio coverage/service to the wireless device 101 over a wide geographic area to support wireless device mobility.

A base station may comprise one or more sets of antennas for communicating with the wireless device 101 over an air interface. Each set of antennas may be separately controlled by the base station. Each set of antennas may have a corresponding coverage area. For example, a base station may comprise three sets of antennas to respectively control three coverage areas (e.g., on three different sides) of the base station. A base station may comprise any quantity of antennas, which may correspond to any quantity of coverage areas. The entirety of the base station (and its corresponding antennas) may be deployed at a single location or at a plurality of locations. A controller (e.g., at a central location) may control/operate one or more sets of antennas at one or more distributed locations. The controller may be, for example, a baseband processing unit that comprises a centralized and/or cloud-based RAN architecture. The baseband processing unit may be either centralized in a pool of baseband processing units or may be virtualized. A set of antennas at a distributed location may be referred to as a remote radio head (RRH).

FIG. 1B shows another example communication network 150. The communication network 150 may comprise, for example, a PLMN operated/run by a network operator. The communication network 150 may comprise wireless devices 151, a next generation radio access network (NG-RAN) 152, a 5G core network (5G-CN) 155, and one or more DNs 158. The NG-RAN 152 may comprise one or more base stations (e.g., generation node Bs (gNBs) 152A and/or next generation evolved Node Bs (ng eNBs) 152B). The 5G-CN 155 may comprise one or more network functions (NFs). The one or more NFs may comprise control plane functions 155A and user plane functions 155B. The one or more DNs 158 may comprise public DNs (e.g., the Internet), private DNs, and/or intra-operator DNs. The components/elements shown in FIG. 1B may represent specific implementations and/or terminology of components/elements shown in FIG. 1A.

The base stations of the NG-RAN 152 may be connected to the wireless devices 151 via one or more Uu interfaces. The base stations of the NG-RAN 152 may be connected to each other via one or more first interface(s) (e.g., Xn interface(s)). The base stations of the NG-RAN 152 may be connected to 5G-CN 155 via one or more second interfaces (e.g., NG interface(s)). An interfaces may comprise one or more air interfaces, direct physical connections, indirect connections, and/or combinations thereof. For example, the Uu interface may comprise an air interface. The NG and Xn interfaces may comprise an air interface, direct physical connections, and/or indirect connections over an underlying transport network (e.g., an internet protocol (IP) transport network).

Each of the Uu, Xn, and NG interfaces may be associated with a protocol stack. The protocol stacks may comprise a user plane (UP) protocol stack and a control plane (CP) protocol stack. User plane data may comprise data corresponding to (e.g., associated with and/or pertaining to) users of the wireless devices 151. For example, user plane data may comprise internet content downloaded via a web browser application, sensor data uploaded via a tracking application, and/or email data communicated to and/or from an email server. Control plane data may comprise signaling and/or control message messages. For example, control plane data may facilitate packaging and routing of user plane data such that the user plane data may be communicated with (e.g., sent to and/or received from) the DN(s). The NG interface may be divided into (e.g., may comprise) an NG user plane interface (NG-U) and an NG control plane interface (NG-C). The NG-U interface may provide/perform delivery of user plane data between the base stations and the one or more user plane network functions 155B. The NG-C interface may be used for control signaling between the base stations and the one or more control plane network functions 155A. The NG-C interface may provide, for example, NG interface management, wireless device context management, wireless device mobility management, transport of non-access stratum (NAS) messages, paging, protocol data unit (PDU) session management, and configuration transfer and/or warning message transmission. In at least some scenarios, the NG C interface may support transmission of user data (e.g., a small data transmission for an IoT device).

One or more of the base stations of the NG-RAN 152 may be split into a central unit (CU) and one or more distributed units (DUs). A CU may be coupled to one or more DUs via an interface (e.g., an F1 interface). The CU may handle one or more upper layers in the protocol stack and the DU may handle one or more lower layers in the protocol stack. For example, the CU may handle a radio resource control (RRC) layer, a physical data convergence protocol (PDCP) layer, and/or a service data application protocol (SDAP) layer, and the DU may handle radio link control (RLC) layer, a medium access control (MAC) layer, and/or a physical (PHY) layer. The one or more DUs may be in geographically diverse locations relative to the CU and/or each other. The CU/DU split architecture may permit increased coverage and/or better coordination.

The gNBs 152A and ng-eNBs 152B may provide different user plane and control plane protocol termination towards the wireless devices 151. For example, the gNB 154A may provide new radio (NR) protocol terminations over a Uu interface associated with a first protocol stack. The ng eNBs 152B may provide Evolved UMTS Terrestrial Radio Access (E UTRA) protocol terminations over a Uu interface associated with a second protocol stack.

The 5G-CN 155 may authenticate wireless devices 151, set up end-to-end connections between wireless devices 151 and the one or more DNs 158, and/or provide charging functionality. The 5G-CN 155 may be based on a service-based architecture. The service-based architecture may enable the NFs comprising the 5G-CN 155 to offer services to each other and to other elements of the communication network 150 via interfaces. The 5G-CN 155 may include any quantity of other NFs and any quantity of instances of each NF.

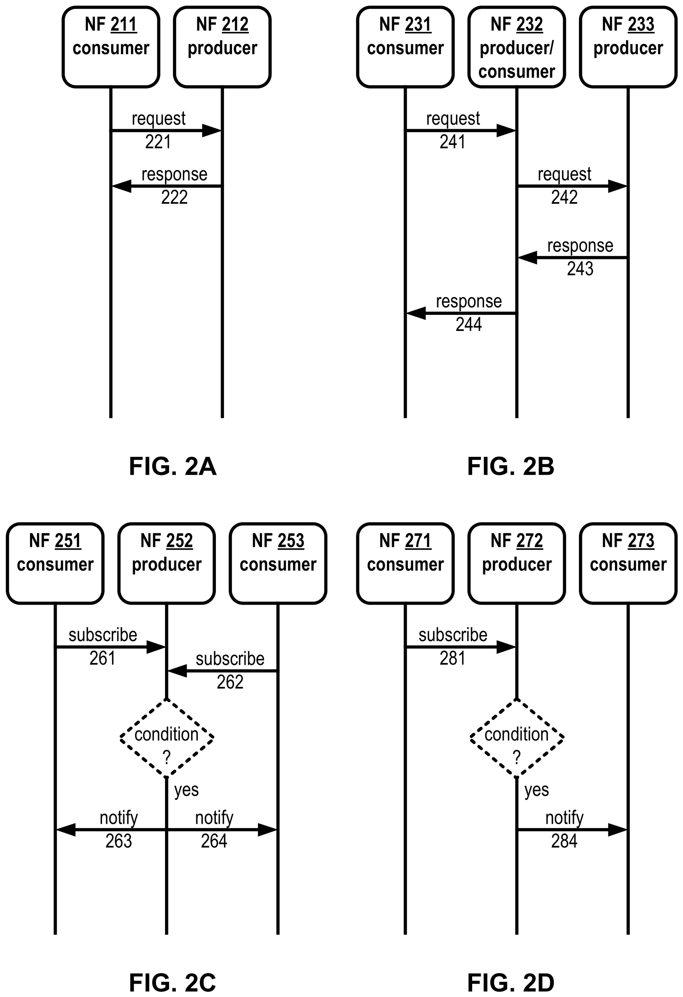

FIG. 2A, FIG. 2B, FIG. 2C, and FIG. 2D show example frameworks for a service-based architecture within a core network. A service, in a service-based architecture, may be requested/sought by a service consumer and provided by a service producer. An NF may determine, prior to obtaining the requested service, where the requested service may be obtained. The NF may communicate with a network repository function (NRF) to discover a service. For example, an NF that provides one or more services may register with a network repository function (NRF). The NRF may store data relating to the one or more services that the NF is prepared to provide to other NFs in the service-based architecture. A consumer NF may query the NRF to discover/determine a producer NF. For example, the consumer NF may obtain, from the NRF, a list of NF instances that provide a particular service).

As shown in FIG. 2A, an NF 211 (e.g., a consumer NF) may send a request 221 to an NF 212 (e.g., a producer NF). The request 221 may be a request for a particular service. The request 221 may be sent based on a discovery that NF 212 is a producer of that service. The request 221 may comprise data relating to NF 211 and/or the requested service. The NF 212 may receive the request 221, perform one or more actions associated with the requested service (e.g., retrieving data), and provide/send a response 221. The one or more actions performed by the NF 212 may be based on request data included in the request 221, data stored by the NF 212, and/or data retrieved by the NF 212. The response 222 may notify/indicate, to the NF 211, that the one or more actions have been completed. The response 222 may comprise response data relating to the NF 212, the one or more actions, and/or the requested service.

As shown in FIG. 2B, an NF 231 may send a request 241 to an NF 232. A service produced/provided by the NF 232 may comprise sending a request 242 to an NF 233 (e.g., based on receiving the request 241). The NF 233 may perform one or more actions and provide/send a response 243 to the NF 232. The NF 232 may send a response 244 to the NF 231, for example, based on receiving the response 243. As shown in FIG. 2B, an NF (e.g., a single NF) may perform the role of a producer of services, consumer of services, and/or both. A particular NF service may comprise any quantity/number of nested NF services produced by one or more other NFs.

FIG. 2C shows an example of subscribe-notify interactions between a consumer NF and a producer NF. An NF 251 may send a subscription 261 (e.g., a subscription request) to an NF 252. An NF 253 may send a subscription 262 (e.g., a subscription request) to the NF 252. Although FIG. 2C shows two NFs and the NF 252 providing multiple subscription services to the two NFs, a subscribe-notify interaction may comprise one subscriber, and/or any other quantity of subscribers. The NFs 251, 253 may be independent from one another. For example, the NFs 251, 253 may independently discover the NF 252 and/or independently determine to subscribe to the service offered by the NF 252. The NF 252 may provide/send a notification to a subscribing NF, for example, based on receiving the subscription. For example, the NF 252 may send a notification 263 to the NF 251 based on the subscription 261 and/or may send a notification 264 to the NF 253 based on the subscription 262.

The sending of the notifications 263, 264 may be conditional. The sending of the notifications 263, 264 may be based on a determination that a condition has occurred. The notifications 263, 264 may be based on a determination that a particular event has occurred, a determination that a particular condition is outstanding, and/or a determination that a duration of time associated with the subscription has elapsed. The duration of time may be a time period associated with a subscription for notifications (e.g., periodic notifications). The NF 252 may send the notifications 263, 264 to the NFs 251, 253 simultaneously, substantially simultaneously, and/or based on/in response to a same condition. The NF 252 may send the notifications 263, 264 at different times and/or based on/in response to different notification conditions. The NF 251 may request a notification based on a certain parameter, as measured by the NF 252, exceeding a first threshold. The NF 252 may request a notification based on the parameter exceeding a second threshold (e.g., different from the first threshold). A parameter of interest and/or a corresponding threshold may be indicated in the subscriptions 261, 262.

FIG. 2D shows another example of a subscribe-notify interaction. An NF 271 may send a subscription 281 to an NF 272. The NF 272 may send a notification 284, for example, based on/in response to receipt of the subscription 281 and/or a determination that a notification condition has occurred. The notification 284 may be sent to an NF 273. While the example of FIG. 2C shows a notification being sent to the subscribing NF, the example of FIG. 2D shows that a subscription and its corresponding notification may be associated with (e.g., received from and sent to) different NFs. For example, the NF 271 may subscribe to the service provided by the NF 272 on behalf of the NF 273.

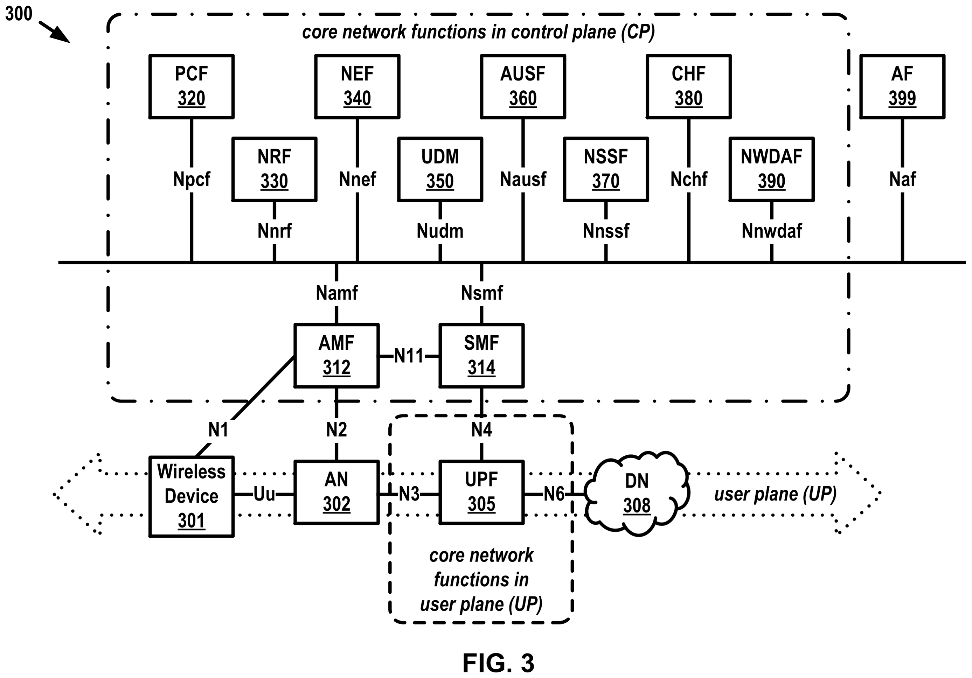

FIG. 3 shows an example communication network 300. The Communication network 300 may comprise a wireless device 301, an AN 302, and/or a DN 308. The other elements shown in FIG. 3 may be included in and/or associated with a core network. An element (e.g., each element) of the core network may be an NF.

The NFs may comprise a user plane function (UPF) 305, an access and mobility management function (AMF) 312, a session management function (SMF) 314, a policy control function (PCF) 320, a network repository function (NRF) 330, a network exposure function (NEF) 340, a unified data management (UDM) 350, an authentication server function (AUSF) 360, a network slice selection function (NSSF) 370, a charging function (CHF) 380, a network data analytics function (NWDAF) 390, and/or an application function (AF) 399. The UPF 305 may be a user plane core network function. The NFs 312, 314, and 320-390 may be control plane core network functions. The core network may comprise additional instances of any of the NFs shown in FIG. 3 and/or one or more different types of NF that provide different services. Other examples of NF type may comprise a gateway mobile location center (GMLC), a location management function (LMF), an operations, administration, and maintenance function (OAM), a public warning system (PWS), a short message service function (SMSF), a unified data repository (UDR), and/or an unstructured data storage function (UDSF).

An element (e.g., each element) shown in FIG. 3 may comprise an interface with at least one other element. The interface may be a logical connection and/or a direct physical connection. Any interface may be identified/indicated using a reference point representation and/or a service-based representation. In a reference point representation, the letter N may be used followed by a numeral to indicate an interface between two specific elements. For example, as shown in FIG. 3, the AN 302 and the UPF 305 may interface via N3, whereas UPF 305 and DN 308 may interface via N6. In a service-based representation, the letter N may be followed by one or more alphabets/letters. The letters may identify/indicate an NF that provides services to the core network. For example, PCF 320 may provide services via interface Npcf. The PCF 320 may provide services to any NF in the core network via Npcf. A service-based representation may correspond to a bundle of reference point representations. For example, the Npcf interface between PCF 320 and the core network may generally correspond to an N7 interface between PCF 320 and SMF 314, an N30 interface between PCF 320 and NEF 340, and/or an N# interface between any functions where # may indicate any number.

The UPF 305 may serve as a gateway for user plane traffic between the AN 302 and the DN 308. The wireless device 301 may connect to UPF 305 via a Uu interface and an N3 interface (also described as NG U interface). The UPF 305 may connect to the DN 308 via an N6 interface. The UPF 305 may connect to one or more other UPFs (not shown) via an N9 interface. The wireless device 301 may be configured to receive services through a protocol data unit (PDU) session. The PDU session may be a logical connection between the wireless device 301 and the DN 308. The UPF 305 (or a plurality of UPFs) may be selected by the SMF 314 to handle/process a particular PDU session between the wireless device 301 and the DN 308. The SMF 314 may control the functions of the UPF 305 with respect to the PDU session. The SMF 314 may connect to the UPF 305 via an N4 interface. The UPF 305 may handle/process any quantity of PDU sessions associated with any quantity of wireless devices (via any quantity of ANs). The UPF 305 may be controlled, for handling the one or more PDU sessions, by any quantity of SMFs via any quantity of corresponding N4 interfaces.

The AMF 312 may control wireless device access to the core network. The wireless device 301 may register with the network via the AMF 312. for the wireless device 301 may register with the network prior to establishing a PDU session. The AMF 312 may manage a registration area of the wireless device 301, which may enable the network to track the physical location of wireless device 301 within the network. The AMF 312 may manage wireless device mobility for a wireless device in connected mode. For example, the AMF 312 may manage wireless device handovers from one AN (or portion thereof) to another. The AMF 312 may perform, for a wireless device in idle mode, registration updates, and/or page the wireless device to transition the wireless device to connected mode.

The AMF 312 may receive, from the wireless device 301, NAS messages. The NAS messages may be sent/transmitted in accordance with NAS protocol. NAS messages may relate to communications between the wireless device 301 and the core network. NAS messages may be relayed to the AMF 312 via the AN 302. Communication between the wireless device 301 and the AMF 312 may be represented as communication via the N1 interface. NAS messages may facilitate wireless device registration and mobility management, for example, by authenticating, identifying, configuring, and/or managing a connection of the wireless device 301. NAS messages may support session management procedures for maintaining user plane connectivity and quality of service (QoS) of a session between the wireless device 301 and the DN 309. The AMF 312 may send a NAS message to SMF 314, for example, if the NAS message involves (e.g., is associated with, corresponds to) session management. NAS messages may be used to transport messages between wireless device 301 and other components of the core network (e.g., core network components other than AMF 312 and SMF 314). The AMF 312 may act on/process a NAS message, or alternatively, forward the NAS message to an appropriate core NF (e.g., SMF 314, etc.).

The SMF 314 may establish, modify, and/or release a PDU session based on messaging received from the wireless device 301. The SMF 314 may allocate, manage, and/or assign an IP address to the wireless device 301, for example, based on establishment of a PDU session. Multiple SMFs may be in/associated with the network. Each of the SMFs may be associated with a respective group of wireless devices, base stations, and/or UPFs. A wireless device with multiple PDU sessions may be associated with a different SMF for each PDU session. The SMF 314 may select one or more UPFs to handle/process a PDU session. The SMF 314 may control the handling/processing of the PDU session by the selected UPF by providing rules for packet handling (e.g., packet detection rules (PDRs), forwarding action rules (FARs), QoS enforcement rules (QERs), etc.). Rules relating to QoS and/or charging for a particular PDU session may be obtained from the PCF 320 and provided to the UPF 305 (e.g., by the SMF 314).

The PCF 320 may provide/send, to other NFs, services relating to policy rules. The PCF 320 may use subscription data and information about network conditions to determine policy rules. The PCF 320 may provide the policy rules to a particular NF which may be responsible for enforcement of those rules. Policy rules may relate to policy control for access and mobility, and may be enforced by the AMF 312. Policy rules may relate to session management, and may be enforced by the SMF 314. Policy rules may be network-specific, wireless device-specific, session-specific, and/or data flow-specific.

The NRF 330 may provide service discovery functions. The NRF 330 may belong/correspond to a particular PLMN. The NRF 330 may maintain NF profiles relating to other NFs in the communication network 300. The NF profile may comprise, for example, an address, PLMN, and/or type of the NF, a slice indicator/identifier, a list of the one or more services provided by the NF, and/or authorization required to access the services.

The NEF 340 may provide an interface to external domains, permitting the external domains to selectively access the control plane of the communication network 300. The external domain may comprise, for example, third-party network functions, application functions, and/or any other functions. The NEF 340 may act as a proxy between external elements and network functions such as the AMF 312, the SMF 314, the PCF 320, the UDM 350, and/or any other functions. As an example, the NEF 340 may determine a location and/or reachability status of the wireless device 301 based on reports from the AMF 312, and/or may provide status information to an external element. An external element may provide, via the NEF 340, information that facilitates the setting of parameters for establishment of a PDU session. The NEF 340 may determine which data and capabilities of the control plane are exposed to the external domain. The NEF 340 may provide secure exposure (e.g., by authenticating and/or authorizing an external entity) to exposed data or capabilities of the communication network 300. The NEF 340 may selectively control the exposure such that the internal architecture of the core network is hidden/obscured from the external domain.

The UDM 350 may provide data storage for other NFs. The UDM 350 may permit a consolidated view of network information. The consolidated view may be used to ensure that the most relevant information may be made available to different NFs from a single resource. The UDM 350 may store and/or retrieve information from a unified data repository (UDR). For example, the UDM 350 may obtain user subscription data relating to the wireless device 301 from the UDR.

The AUSF 360 may support mutual authentication of the wireless device 301 by the core network and authentication of the core network by the wireless device 301. The AUSF 360 may perform key agreement procedures and provide keying material that may be used to improve security.

The NSSF 370 may select/determine one or more network slices to be used by the wireless device 301. The NSSF 370 may select a slice based on slice selection information. For example, the NSSF 370 may receive single network slice selection assistance information (S NSSAI) and map the S NSSAI to a network slice instance identifier (NSI).

The CHF 380 may control billing-related tasks associated with wireless device 301. For example, the UPF 305 may report/send traffic usage information, associated with wireless device 301, to the SMF 314. The SMF 314 may collect usage data from the UPF 305 and one or more other UPFs. The usage data may indicate a quantity of data exchanged, a DN that the data is exchanged with, a network slice associated with the data, and/or any other information that may influence billing. The SMF 314 may share the collected usage data with the CHF 380. The CHF 380 may use the collected usage data to perform billing-related tasks associated with wireless device 301. The CHF 380 may, depending on the billing status of wireless device 301, instruct the SMF 314 to limit and/or influence/control access of the wireless device 301 and/or provide billing-related notifications to wireless device 301.

The NWDAF 390 may collect and/or analyze data from other NFs and/or offer data analysis services to other NFs. The NWDAF 390 may receive/collect, from the UPF 305, the AMF 312, and/or the SMF 314, data/information relating to a load level for a particular network slice instance. The NWDAF 390 may provide (e.g., based on the collected data) load level data to the PCF 320 and/or the NSSF 370, and/or may notify the PCF 320 and/or the NSSF 370 if a load level for a slice reaches and/or if a load level for a slice exceeds a load level threshold.

The AF 399 may be outside the core network, but may interact with the core network to provide information relating to the QoS requirements and/or traffic routing preferences associated with a particular application. The AF 399 may access the core network based on the exposure constraints imposed by the NEF 340. An operator of the core network may consider the AF 399 to be a trusted domain that may directly access the core network (and/or the communication network 300).

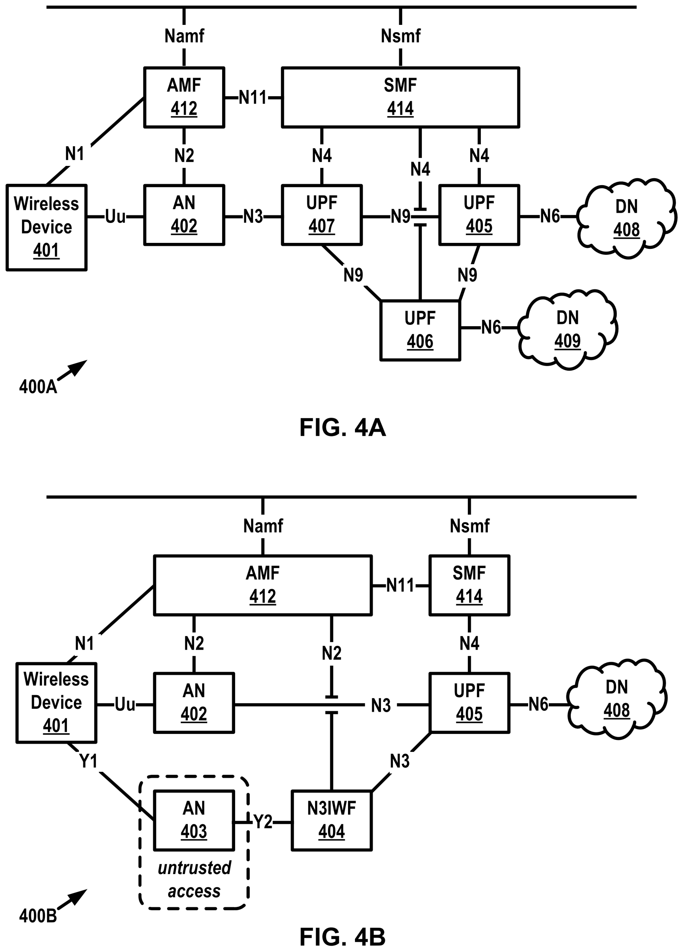

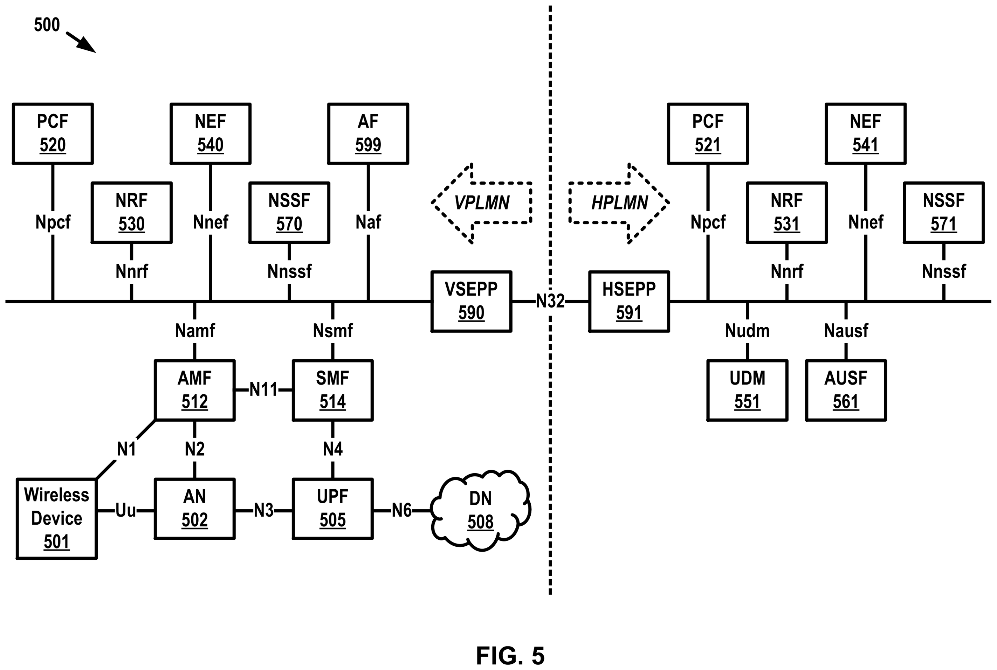

FIGS. 4A, 4B, and 5 show examples of core network architectures. The core network architectures shown in FIGS. 4A, 4B, and 5 may be analogous in some respects to the core network architecture 300 shown in FIG. 3. For brevity, some of the core network elements shown in FIG. 3 are not shown in FIGS. 4A, 4B, and 5 but may be included in one or more of these core network architectures. Many of the elements shown in FIGS. 4A, 4B, and 5 may be analogous in some respects to elements depicted in FIG. 3. For brevity, some of the details relating to their functions or operation are not shown but may be included in one or more of these core network architectures. Operation of one or more elements shown in FIGS. 4A, 4B, and 5 may be similar, or substantially similar, to corresponding elements shown in FIG. 3.

FIG. 4A shows an example of a core network architecture. The core network architecture 400A of FIG. 4A may comprise an arrangement of multiple UPFs. Core network architecture 400A may comprise one or more of: a wireless device 401, an AN 402, an AMF 412, and/or an SMF 414. The core network architecture 400A may comprise multiple UPFs (e.g., a UPF 405, a UPF 406, and a UPF 407) and multiple DNs (e.g., a DN 408 and a DN 409). Each of the multiple UPFs 405, 406, 407 may communicate with the SMF 414 via a corresponding N4 interface. The DNs 408, 409 may communicate with the UPFs 405, 406, respectively, via N6 interfaces. The multiple UPFs 405, 406, 407 may communicate with one another via N9 interfaces.

The UPFs 405, 406, 407 may perform traffic detection. The UPFs 405, 406, 407 may indicate, identify, and/or classify packets. Packet indication/identification may be performed based on PDRs provided by the SMF 414. PDRs may comprise packet detection information. Packet detection information may comprise one or more of: a source interface, a wireless device IP address, core network (CN) tunnel information (e.g., a CN address of an N3/N9 tunnel corresponding to a PDU session), a network instance indicator/identifier, a QoS flow indicator/identifier (QFI), a filter set (e.g., an IP packet filter set and/or an ethernet packet filter set), and/or an application indicator/identifier.

PDRs may indicate one or more rules for handling the packet upon detection thereof. The one or more rules may comprise, for example, FARs, multi-access rules (MARs), usage reporting rules (URRs), QERs, and/or any other rule. For example, the PDR may comprise one or more FAR identifiers, MAR identifiers, URR identifiers, and/or QER identifiers. The identifiers may indicate the rules that are prescribed/to be used for the handling of a particular detected packet.

The UPF 405 may perform traffic forwarding in accordance with a FAR. For example, the FAR may indicate that a packet associated with a particular PDR is to be forwarded, duplicated, dropped, and/or buffered. The FAR may indicate a destination interface (e.g., "access" for downlink or "core" for uplink). The FAR may indicate a buffering action rule (BAR), for example, if a packet is to be buffered. The UPF 405 may perform data buffering of a certain quantity downlink packets, for example, if a PDU session is deactivated.

The UPF 405 may perform QoS enforcement in accordance with a QER. For example, the QER may indicate a guaranteed bitrate that is authorized and/or a maximum bitrate to be enforced for a packet associated with a particular PDR. The QER may indicate that a particular guaranteed and/or maximum bitrate may be for uplink packets and/or downlink packets. The UPF 405 may mark/indicate packets belonging to a particular QoS flow with a corresponding QFI. The marking may enable a recipient of the packet to determine a QoS of the packet (e.g., a QoS to be enforced for the packet).

The UPF 405 may provide/send usage reports to the SMF 414 in accordance with a URR. The URR may indicate one or more triggering conditions for generation and/or reporting of the usage report. The reporting may be based on immediate reporting, periodic reporting, a threshold for incoming uplink traffic, and/or any other suitable triggering condition. The URR may indicate a method for measuring usage of network resources (e.g., data volume, duration, and/or event).

The DNs 408, 409 may comprise public DNs (e.g., the Internet), private DNs (e.g., private, internal corporate-owned DNs), and/or intra-operator DNs. A DN (e.g., each DN) may provide an operator service and/or a third-party service. The service provided by a DN may be an Internet service, an IP multimedia subsystem (IMS), an augmented or virtual reality network, an edge computing or mobile edge computing (MEC) network, and/or any other service. A DN (e.g., each DN) may be indicated/identified using a data network name (DNN). The wireless device 401 may be configured to establish a first logical connection with the DN 408 (e.g., a first PDU session), a second logical connection with DN 409 (e.g., a second PDU session), or both simultaneously (e.g., the first PDU session and the second PDU sessions).

A PDU session (e.g., each PDU) session may be associated with at least one UPF configured to operate as a PDU session anchor (PSA, or anchor). The anchor may be a UPF that may provide an N6 interface with a DN.

The UPF 405 may be the anchor for the first PDU session between wireless device 401 and DN 408. The UPF 406 may be the anchor for the second PDU session between wireless device 401 and DN 409. The core network may use the anchor to provide service continuity of a particular PDU session (e.g., IP address continuity) as wireless device 401 moves from one access network to another. The wireless device 401 may establish a PDU session using a data path to the DN 408 and using an access network other than AN 402. The data path may use the UPF 405 acting as anchor. The wireless device 401 may (e.g., later) move into the coverage area of the AN 402. The SMF 414 may select a new UPF (e.g., the UPF 407) to bridge the gap between the newly-entered access network (e.g., the AN 402) and the anchor UPF (e.g., the UPF 405). The continuity of the PDU session may be preserved as any quantity/number of UPFs may be added and/or removed from the data path. A UPF added to a data path (e.g., as shown in FIG. 4A) may be described as an intermediate UPF and/or a cascaded UPF.

The UPF 406 may be the anchor for the second PDU session between wireless device 401 and the DN 409. The anchor for the first PDU session and the anchor for the second PDU sessions being associated with different UPFs (e.g., as shown in FIG. 4A) is merely exemplary. Multiple PDU sessions with a single DN may correspond to any quantity/number of anchors. A UPF at the branching point (e.g., the UPF 407 in FIG. 4) may operate as an uplink classifier (UL-CL), for example, if there are multiple UPFs. The UL-CL may divert uplink user plane traffic to different UPFs.

The SMF 414 may allocate, manage, and/or assign an IP address to the wireless device 401. The SMF 414 may allocate, manage, and/or assign an IP address to the wireless device 401, for example, based on establishment of a PDU session. The SMF 414 may maintain an internal pool of IP addresses to be assigned. The SMF 414 may (e.g., if necessary) assign an IP address provided by a dynamic host configuration protocol (DHCP) server or an authentication, authorization, and accounting (AAA) server. IP address management may be performed in accordance with a session and service continuity (SSC) mode. In SSC mode 1, an IP address of wireless device 401 may be maintained (and the same anchor UPF may be used) as the wireless device moves within the network. In SSC mode 2, the IP address of wireless device 401 may be changed as the wireless device 401 moves within the network. For example, the old IP address and an old anchor UPF may be abandoned and a new IP address and a new anchor UPF may be established, for example, as the wireless device 401 moves within the network. In SSC mode 3, it may be possible to maintain an old IP address (e.g., similar to SSC mode 1) temporarily while establishing a new IP address (e.g., similar to SSC mode 2). Applications that may be sensitive to IP address changes may operate in accordance with SSC mode 1.

UPF selection may be controlled by the SMF 414. The SMF 414 may select the UPF 405 as the anchor for the PDU session and/or the UPF 407 as an intermediate UPF, for example, based on establishment and/or modification of a PDU session between the wireless device 401 and DN 408. Criteria for UPF selection may comprise path efficiency and/or speed (e.g., a data rate) between the AN 402 and the DN 408. Reliability, load status, location, slice support and/or other capabilities of candidate UPFs may also be considered for UPF selection.

FIG. 4B shows an example of a core network architecture. The core network architecture 400B of FIG. 4B may accommodate untrusted access. The wireless device 401, as shown in FIG. 4B, may communicate with (e.g., connect to) the DN 408 via the AN 402 and the UPF 405. The AN 402 and the UPF 405 may constitute/comprise/provide trusted (e.g., 3GPP) access to the DN 408. The wireless device 401 may access the DN 408 using an untrusted access network. The untrusted access network may comprise the AN 403 and/or a non-3GPP interworking function (N3IWF) 404.

The AN 403 may be a wireless local area network (WLAN) (e.g., operating in accordance with the IEEE 802.11 standard). The wireless device 401 may communicate with (e.g., connect to) the AN 403 via an interface Y1. The connection may be in a manner that is prescribed for the AN 403. The connection to the AN 403 may or may not involve authentication. The wireless device 401 may obtain/receive an IP address from the AN 403. The wireless device 401 may determine to connect to the core network 400B using untrusted access. The AN 403 may communicate with N3IWF 404 via a Y2 interface. After selecting untrusted access, the wireless device 401 may provide N3IWF 404 with sufficient information to select an AMF. The selected AMF may be, for example, the same AMF that is used by wireless device 401 for 3GPP access (AMF 412 in the present example). The N3IWF 404 may communicate with AMF 412 via an N2 interface. The UPF 405 may be selected and N3IWF 404 may communicate with UPF 405 via an N3 interface. The UPF 405 may be a PDU session anchor (PSA). The UPF 405 may remain the anchor for a PDU session, for example, even as wireless device 401 shifts between trusted access and untrusted access.

FIG. 5 shows an example of a core network architecture. The core network architecture 500 of FIG. 5 may correspond to an example in which a wireless device 501 may be roaming. The wireless device 501 (e.g., in a roaming scenario) may be a subscriber of a first PLMN (e.g., a home PLMN, or HPLMN) but may attach to a second PLMN (e.g., a visited PLMN, or VPLMN). The core network architecture 500 may comprise a wireless device 501, an AN 502, a UPF 505, and/or a DN 508. The AN 502 and the UPF 505 may be associated with a VPLMN. The VPLMN may manage the AN 502 and/or the UPF 505 using core network elements associated with the VPLMN. The core network elements associated with the VPLMN may comprise an AMF 512, an SMF 514, a PCF 520, an NRF 530, an NEF 540, and/or an NSSF 570. An AF 599 may be adjacent the core network of the VPLMN.

The wireless device 501 may not be a subscriber of the VPLMN. The AMF 512 may authorize the wireless device 501 to access the network (e.g., the VPLMN), for example, based on roaming restrictions that may apply to wireless device 501. The core network of the VPLMN may interact with core network elements of an HPLMN of the wireless device 501 (e.g., a PCF 521, an NRF 531, an NEF 541, a UDM 551, and/or an AUSF 561), for example, to obtain network services provided by the VPLMN. The VPLMN and the HPLMN may communicate using an N32 interface connecting respective security edge protection proxies (SEPPs). The respective SEPPs may be a VSEPP 590 and/or an HSEPP 591.

The VSEPP 590 and/or the HSEPP 591 may communicate via an N32 interface (e.g., for defined purposes). The VSEPP 590 and the HSEPP 591 may communicate via an N32 interface while concealing information about each PLMN from the other. The SEPPs may apply roaming policies, for example, based on communications via the N32 interface. The PCF 520 and/or the PCF 521 may communicate via the SEPPs to exchange policy-related signaling. The NRF 530 and/or the NRF 531 may communicate via the SEPPs to enable service discovery of NFs in the respective PLMNs. The VPLMN and HPLMN may independently maintain the NEF 540 and the NEF 541. The NSSF 570 and/or the NSSF 571 may communicate via the SEPPs to coordinate slice selection for the wireless device 501. The HPLMN may handle all authentication and subscription related signaling. The VPLMN may authenticate the wireless device 501 and/or obtain subscription data of the wireless device 501 by accessing, via the SEPPs, the UDM 551 and the AUSF 561 of the HPLMN, for example, if the wireless device 501 registers and/or requests service via the VPLMN.

The core network architecture 500 may be referred to as a local breakout configuration, in which the wireless device 501 may access the DN 508 using one or more UPFs of the VPLMN (i.e., the UPF 505). Other configurations are possible. For example, in a home-routed configuration (not shown in FIG. 5), the wireless device 501 may access a DN using one or more UPFs of the HPLMN. In the home-routed configuration, an N9 interface may run parallel to the N32 interface, crossing the frontier between the VPLMN and the HPLMN, to carry user plane data. One or more SMFs of the respective PLMNs may communicate, via the N32 interface, to coordinate session management for the wireless device 501. The SMFs may control their respective UPFs on either side of the frontier.

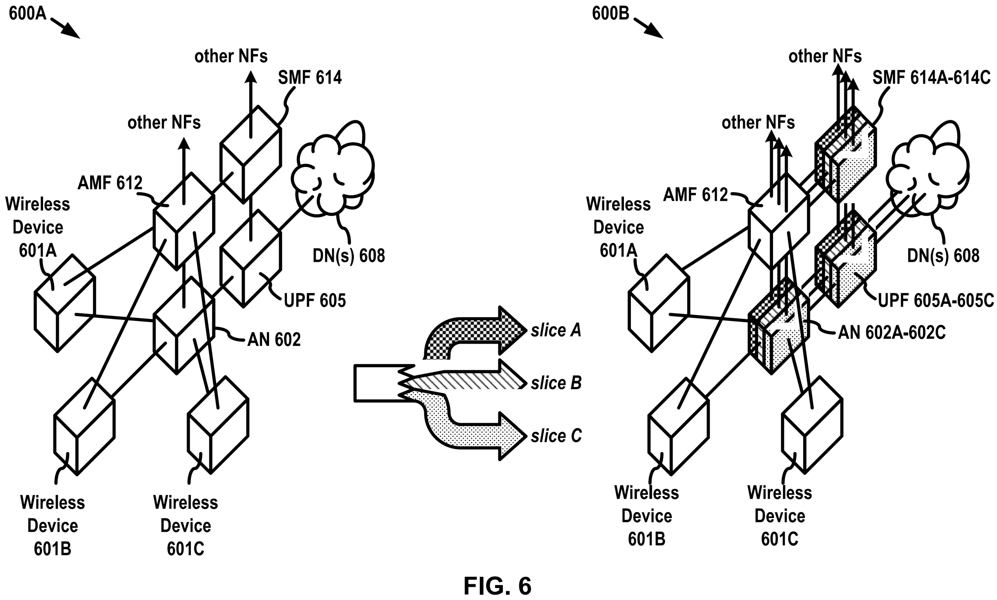

FIG. 6 shows an example of network slicing. Network slicing may refer to division of shared infrastructure (e.g., physical infrastructure) into distinct logical networks. These distinct logical networks may be independently controlled, isolated from one another, and/or associated with dedicated resources.

Network architecture 600A shows an un-sliced physical network corresponding to a single logical network. The network architecture 600A may comprise a user plane. Wireless devices 601A, 601B, 601C (collectively, wireless devices 601) may have a physical and/or a logical connection to a DN 608 via an AN 602 and a UPF 605 of the user plane. The network architecture 600A may comprise a control plane. An AMF 612 and an SMF 614, in the control plane, may control various aspects of the user plane.

The network architecture 600A may have a specific set of characteristics (e.g., relating to maximum bit rate, reliability, latency, bandwidth usage, power consumption, etc.). The set of characteristics may be affected by the nature/properties of the network elements (e.g., processing power, availability of free memory, proximity to other network elements, etc.) and/or the management thereof (e.g., optimization to maximize bit rate or reliability, reduce latency, reduce power, reduce bandwidth usage, etc.). The characteristics of the network architecture 600A may change over time. For example, by upgrading equipment and/or by modifying procedures to target a particular characteristic may change the characteristics of the network architecture 600A. At any given time, the network architecture 600A may have a single set of characteristics that may or may not be optimized for a particular use case. For example, wireless devices 601A, 601B, 601C may have different requirements, with the network architecture 600A being optimized for one of the three wireless devices.

The network architecture 600B shows an example of a sliced physical network divided into multiple logical networks. The physical network may be divided into three logical networks (e.g., slice A, slice B, and slice C). For example, the wireless device 601A may be served by AN 602A, UPF 605A, AMF 612, and SMF 614A. Wireless device 601B may be served by AN 602B, UPF 605B, AMF 612, and SMF 614B. Wireless device 601C may be served by AN 602C, UPF 605C, AMF 612, and SMF 614C. Although the respective wireless devices 601 may communicate with different network elements from a logical perspective, the network elements may be deployed by a network operator using the same physical network elements.

One or more network slices (e.g., each network slice) may be configured for providing network services with different sets of characteristics. For example, slice A may correspond to an enhanced mobile broadband (eMBB) service. Mobile broadband may refer to internet access by mobile users, commonly associated with smartphones. Slice B may correspond to ultra-reliable low-latency communication (URLLC), which may focus on reliability and speed. Relative to eMBB, URLLC may improve the feasibility of use cases such as autonomous driving and telesurgery. Slice C may correspond to massive machine type communication (mMTC), which may focus on low-power services delivered to a large number of users. For example, slice C may be optimized for a dense network of battery-powered sensors that may provide small amounts of data at regular intervals. Many mMTC use cases may be prohibitively expensive if they operated using an eMBB or URLLC network.

A network slice serving a wireless device 601 may be updated (e.g., to provide better and/or more suitable services), for example, if service requirements for one of the wireless devices 601 changes. The set of network characteristics corresponding to eMBB, URLLC, and mMTC may be varied, such that differentiated species of eMBB, URLLC, and mMTC may be provided for a wireless device. Network operators may provide entirely new services, for example, based on/in response to customer demand.

A wireless device 601 (e.g., each of the wireless devices 601) may have/use (or be associated with) a corresponding network slice. A single slice may serve any number/quantity of wireless devices and a single wireless device may operate using any number/quantity of slices. The AN 602, the UPF 605 and the SMF 614 may be separated into three separate slices, and the AMF 612 may be unsliced. A network operator may deploy any architecture that selectively utilizes any mix of sliced and unsliced network elements, with different network elements divided into different numbers/quantities of slices. Although FIG. 6 shows three core network functions (e.g., the UPF 605, the AMF 612, the SMF 614), other core network functions (e.g., such as other core network functions not shown) may be sliced. A PLMN that supports multiple network slices may maintain a separate network repository function (NFR) for each slice, which may enable other NFs to discover network services associated with that slice.

Network slice selection may be controlled by an AMF, or alternatively, by a separate network slice selection function (NSSF). For example, a network operator may define/configure and implement distinct network slice instances (NSIs). Each NSI may be associated with single network slice selection assistance information (S NSSAI). The S NSSAI may comprise a particular slice/service type (SST) indicator (e.g., indicating eMBB, URLLC, mMTC, etc.). For example, a particular tracking area may be associated with one or more configured S NSSAIs. wireless devices may identify one or more requested and/or subscribed S NSSAIs (e.g., during registration). The network may indicate to the wireless device one or more allowed and/or rejected S NSSAIs.

The S NSSAI may comprise a slice differentiator (SD) to distinguish between different tenants of a particular slice and/or service type. For example, a tenant may be a customer (e.g., a vehicle manufacture, a service provider, etc.) of a network operator that obtains (e.g., purchases) guaranteed network resources and/or specific policies for servicing its subscribers. The network operator may configure different slices and/or slice types, and use the SD to determine which tenant is associated with a particular slice.

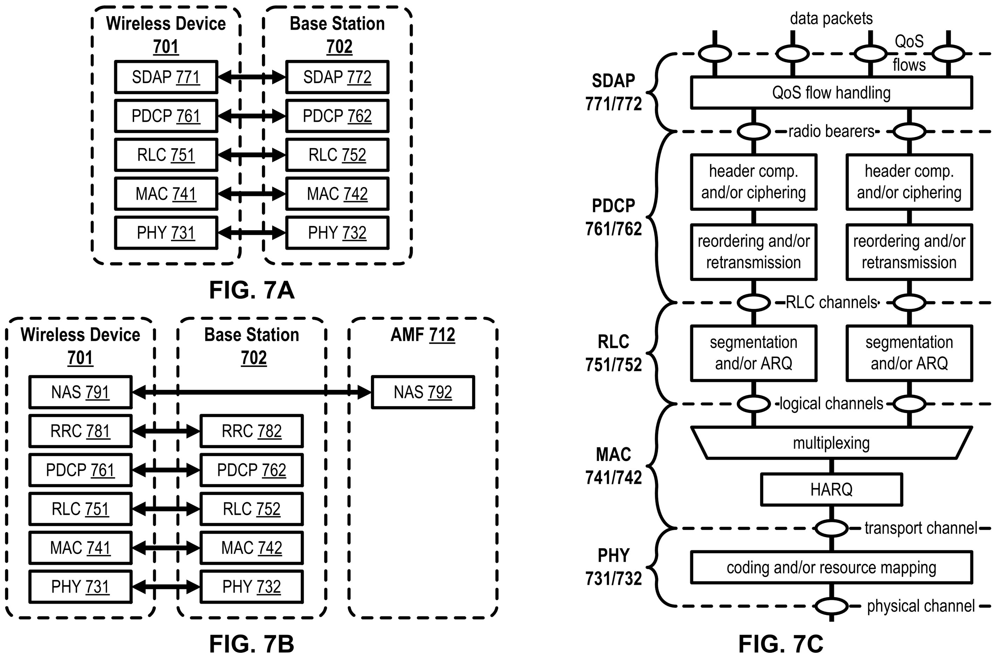

FIG. 7A shows an example UP protocol stack. FIG. 7B shows an example CP protocol stack. FIG. 7C shows example services provided between protocol layers of the UP protocol stack.

The layers may be associated with an open system interconnection (OSI) model of computer networking functionality. In the OSI model, layer 1 may correspond to the bottom layer, with higher layers on top of the bottom layer. Layer 1 may correspond to a PHY layer. PHY layer may correspond to physical infrastructure used for transfer of signals (e.g., cables, fiber optics, and/or radio frequency transceivers). Layer 1 (e.g., in NR protocols) may comprise a PHY layer. Layer 2 may correspond to a data link layer. Layer 2 may correspond to/be associated with packaging of data (into, e.g., data frames) for transfer, between nodes of the network (e.g., using the physical infrastructure of layer 1). Layer 2 (e.g., in NR protocols) may comprise a MAC layer, an RLC layer, a PDCP layer, and an SDAP layer.

Layer 3 may correspond to a network layer. Layer 3 may be associated with routing of the data which has been packaged in layer 2. Layer 3 may handle prioritization of data and traffic avoidance. Layer 3 (e.g., in NR protocols) may comprise an RRC layer and a NAS layer. Layers 4 through 7 may correspond to a transport layer, a session layer, a presentation layer, and an application layer. The application layer may interact with an end user to provide data associated with an application. An end user, implementing the application, may generate data associated with the application and initiate sending of that information to a targeted data network (e.g., the Internet, an application server, etc.). Starting at the application layer, each layer in the OSI model may manipulate and/or repackage the information and/or deliver it to a lower layer. At the lowest layer, the manipulated and/or repackaged information may be exchanged via physical infrastructure (e.g., electrically, optically, and/or electromagnetically). The information, approaching/received at the targeted data network, may be unpackaged and provided to higher layers, for example, until it reaches the application layer in a form that is usable by the targeted data network (e.g., the same form in which it was provided by the end user). The data network may perform this procedure, in reverse, for responding to the end user.

FIG. 7A shows an example UP protocol stack. The UP protocol stack may be an NR protocol stack for a Uu interface between a wireless device 701 and a base station 702. In layer 1 of the UP protocol stack, the wireless device 701 may implement a PHY layer (e.g., PHY 731) and the base station 702 may implement a PHY layer (e.g., PHY 732). In layer 2 of the UP protocol stack, the wireless device 701 may implement a MAC layer (e.g., MAC 741), an RLC layer (e.g., RLC 751), a PDCP layer (e.g., PDCP 761), and an SDAP layer (e.g., SDAP 771). The base station 702 may implement a MAC layer (e.g., MAC 742), an RLC layer (e.g., RLC 752), a PDCP layer (e.g., PDCP 762), and an SDAP layer (e.g., SDAP 772).

FIG. 7B shows a CP protocol stack. The CP protocol stack may be an NR protocol stack for the Uu interface between the wireless device 701 and the base station 702 and/or an N1 interface between the wireless device 701 and an AMF 712. In layer 1 of the CP protocol stack, the wireless device 701 may implement the PHY 731 and the base station 702 may implement the PHY 732. In layer 2 of the CP protocol stack, the wireless device 701 may implement the MAC 741, the RLC 751, the PDCP 761, an RRC layer (e.g., RRC 781), and a NAS layer (e.g., NAS 791). The base station 702 may implement the MAC 742, the RLC 752, the PDCP 762, and an RRC layer (e.g., RRC 782). The AMF 712 may implement a NAS layer (e.g., NAS 792).

The NAS (e.g., NAS 791 and NAS 792) may be concerned with/correspond to the non-access stratum. The non-access stratum may comprise communication between the wireless device 701 and the core network (e.g., the AMF 712). Lower layers may be concerned with/correspond to the access stratum. The access stratum may comprise communication between the wireless device 701 and the base station 702. Messages sent between the wireless device 701 and the core network may be referred to as NAS messages. A NAS message may be relayed by the base station 702 Content of the NAS message (e.g., information elements of the NAS message) may not be visible to the base station 702.

FIG. 7C shows an example of services provided between protocol layers (e.g., of the NR user plane protocol stack shown in FIG. 7A). The wireless device 701 may receive services through a PDU session. The PDU session may be a logical connection between the wireless device 701 and a DN. The wireless device 701 and the DN may exchange data packets associated with the PDU session. The PDU session may comprise one or more QoS flows. The SDAP 771 and/or the SDAP 772 may perform mapping and/or demapping between the one or more QoS flows of the PDU session and one or more radio bearers (e.g., data radio bearers). The mapping between the QoS flows and the data radio bearers may be determined in the SDAP 772 by the base station 702. The wireless device 701 may be notified of the mapping (e.g., based on control signaling and/or reflective mapping). The SDAP 772 of the base station 220 may mark downlink packets with a QFI and/or deliver the downlink packets to the wireless device 701 (e.g., for reflective mapping). The wireless device 701 may determine the mapping based on the QFI of the downlink packets.

The PDCP 761 and the PDCP 762 may perform header compression and/or decompression. Header compression may reduce the amount of data transmitted over the physical layer. The PDCP 761 and the PDCP 762 may perform ciphering and/or deciphering. Ciphering may reduce unauthorized decoding of data sent/transmitted over the physical layer (e.g., intercepted on an air interface), and/or may protect data integrity (e.g., to ensure control messages originate from intended sources). The PDCP 761 and/or the PDCP 762 may perform retransmissions of undelivered packets, in-sequence delivery and/or reordering of packets, duplication of packets, and/or identification and removal of duplicate packets. The PDCP 761 and/or the PDCP 762 may perform mapping between a split radio bearer and RLC channels, for example, in a dual connectivity scenario.

The RLC 751 and the RLC 752 may perform segmentation and retransmission through automatic repeat request (ARQ). The RLC 751 and the RLC 752 may perform removal of duplicate data units received from the MAC 741 and the MAC 742, respectively. The RLC 751 and the RLC 752 may provide RLC channels as a service to the PDCP 761 and the PDCP 762, respectively.

The MAC 741 and/or the MAC 742 may perform multiplexing and/or demultiplexing of logical channels. The MAC 741 and/or the MAC 742 may map logical channels to transport channels. The wireless device 701 may (e.g., in MAC 741) multiplex data units of one or more logical channels into a transport block. The wireless device 701 may send/transmit the transport block to the base station 702 using PHY 731. The base station 702 may receive the transport block using the PHY 732. The base station 702 may demultiplex data units of the transport blocks back into logical channels. The MAC 741 and/or the MAC 742 may perform error correction through hybrid automatic repeat request (HARQ), logical channel prioritization, and/or padding.

The PHY 731 and/or the PHY 732 may perform mapping of transport channels to physical channels. The PHY 731 and/or the PHY 732 may perform digital and analog signal processing functions (e.g., coding/decoding and modulation/demodulation) for sending and receiving information (e.g., transmission via an air interface). The PHY 731 and/or the PHY 732 may perform multi-antenna mapping.

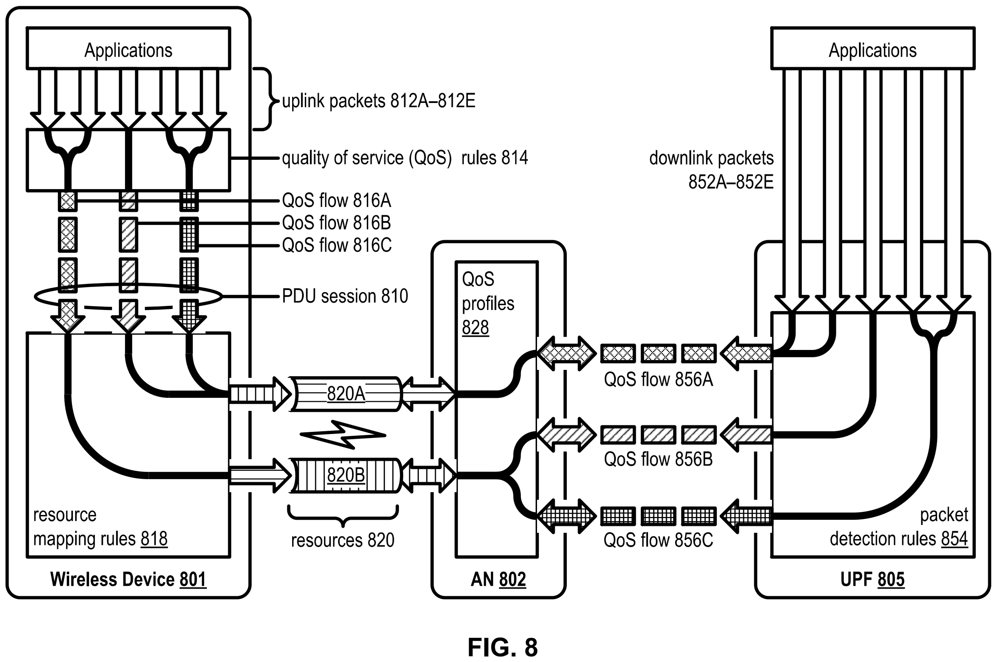

FIG. 8 shows an example of a QoS model. The QoS model may be for differentiated data exchange. The QoS model may comprise a wireless device 801, an AN 802, and/or a UPF 805. The QoS model may facilitate prioritization of PDUs (which may also be referred to as packets). Higher-priority packets may be exchanged faster and/or more reliably than lower-priority packets. The network may devote more resources to exchange of high QoS packets (e.g., high priority packets).

A PDU session 810 may be established between the wireless device 801 and the UPF 805. The PDU session 810 may be a logical connection enabling the wireless device 801 to exchange data with a particular data network (e.g., the Internet). The wireless device 801 may request establishment of the PDU session 810. The wireless device 801 may indicate/identify the targeted data network based on its data network name (DNN), for example, at the time that the PDU session 810 is established. The PDU session 810 may be managed by an SMF (not shown). The SMF may select the UPF 805 (and/or optionally, one or more other UPFs, not shown), for example, to facilitate exchange of data associated with the PDU session 810, between the wireless device 801 and the data network.

One or more applications 808 associated with wireless device 801 may generate uplink packets 812A-812E associated with the PDU session 810. The wireless device 801 may apply QoS rules 814 to the uplink packets 812A-812E in accordance with a QoS model. The QoS rules 814 may be associated with the PDU session 810. The QoS rules 814 may be determined by and/or provided to the wireless device 801, for example, based on establishment and/or modification of the PDU session 810 (e.g., if/when the PDU session 810 is established and/or modified). The wireless device 801, based on the QoS rules 814, may classify the uplink packets 812A-812E, map each of the uplink packets 812A-812E to a QoS flow, and/or mark the uplink packets 812A-812E with a QFI. A packet may be sent through the network. A packet may mix with other packets from other wireless devices (e.g., having potentially different priorities). The QFI may indicate how the packet should be handled in accordance with the QoS model. As shown in the example of FIG. 8, uplink packets 812A, 812B may be mapped to a QoS flow 816A, an uplink packet 812C may be mapped to a QoS flow 816B, and the remaining packets may be mapped to QoS flow 816C.

The QoS flows may be the finest granularity of QoS differentiation in a PDU session. In FIG. 8, three QoS flows 816A-816C are shown. A different quantity/number of QoS flows may be present/used (e.g., 1, 2, 4, 5, or any other number/quantity). One or more QoS flows may be associated with a guaranteed bit rate (e.g., guaranteed bit rate (GBR) QoS flows). One or more QoS flows may have bit rates that are not guaranteed (non-GBR QoS flows). QoS flows may be subject to per-wireless device and/or per-session aggregate bit rates. A QoS flow of the QoS flows may be a default QoS flow. QoS flows may have different priorities. For example, the QoS flow 816A may have a higher priority than the QoS flow 816B, which may have a higher priority than the QoS flow 816C. Different priorities may be reflected by different QoS flow characteristics. For example, QoS flows may be associated with flow bit rates. A particular QoS flow may be associated with a guaranteed flow bit rate (GFBR) and/or a maximum flow bit rate (MFBR). QoS flows may be associated with specific packet delay budgets (PDBs), packet error rates (PERs), and/or maximum packet loss rates. QoS flows may be subject to per-wireless device and/or per-session aggregate bit rates.

The wireless device 801 may apply resource mapping rules 818 to the QoS flows 816A-816C for operating within the QoS model. The air interface between wireless device 801 and/or the AN 802 may be associated with resources 820. The QoS flow 816A may be mapped to resource 820A, and the QoS flows 816B, 816C may be mapped to resource 820B. The resource mapping rules 818 may be provided by the AN 802. The resource mapping rules 818 may designate more resources for relatively high priority QoS flows for meeting QoS requirements. A high priority QoS flow (e.g., the QoS flow 816A) may, based on the resources, be more likely to obtain the high flow bit rate, low packet delay budget, and/or other satisfy other characteristics associated with QoS rules 814. The resources 820 may comprise radio bearers. The radio bearers (e.g., data radio bearers) may be established between the wireless device 801 and the AN 802. The radio bearers in 5G, between the wireless device 801 and the AN 802, may be distinct from bearers in LTE (e.g., evolved packet system (EPS) bearers between a wireless device and a packet data network gateway (PGW), S1 bearers between an eNB and a serving gateway (SGW), and/or an S5/S8 bearer between an SGW and a PGW).

A packet associated with a particular QoS flow may be received at the AN 802 via the resource 820A or the resource 820B. The AN 802 may separate packets into respective QoS flows 856A-856C based on QoS profiles 828. The QoS profiles 828 may be received from an SMF. A QoS profile (e.g., each QoS profile) may correspond to a QFI (e.g., the QFI marked on the uplink packets 812A-812E). A QoS profile (e.g., each QoS profile) may comprise QoS parameters. The QoS parameters may comprise/indicate one or both of 5G QoS identifier (5QI) and/or an allocation and retention priority (ARP). The QoS profile for non-GBR QoS flows may comprise/indicate other/additional QoS parameters (e.g., a reflective QoS attribute (RQA)). The QoS profile for GBR QoS flows may further comprise/indicate additional QoS parameters (e.g., a GFBR, an MFBR, and/or a maximum packet loss rate). The 5QI may be a standardized 5QI having one-to-one mapping to a standardized combination of 5G QoS characteristics. The 5QI may be a dynamically assigned 5QI for which the standardized 5QI values may not be defined. The 5QI may represent 5G QoS characteristics. The 5QI may comprise/indicate one or more of a resource type, a default priority level, a packet delay budget (PDB), a packet error rate (PER), a maximum data burst volume, and/or an averaging window. The resource type may indicate a non-GBR QoS flow, a GBR QoS flow, and/or a delay-critical GBR QoS flow. The averaging window may represent a duration over which the GFBR and/or MFBR may be calculated/determined. The ARP may be a priority level comprising pre-emption capability and a pre-emption vulnerability. The AN 802 may apply admission control for the QoS flows (e.g., if resource limitations are determined), for example, based on the ARP.

The AN 802 may select/determine one or more N3 tunnels for transmission of the QoS flows 856A-856C. The packets (e.g., the uplink packets 812A-812E) may be sent to the UPF 805 (e.g., towards a DN) via the selected one or more N3 tunnels. The UPF 805 may verify that the QFIs of the uplink packets 812A-812E are aligned with the QoS rules 814 provided to the wireless device 801. The UPF 805 may measure, count packets, and/or provide packet metrics to one or more other entities in the network (e.g., a NF such as a PCF).

FIG. 8 shows a process that may comprise downlink transmissions. One or more applications may generate downlink packets 852A-852E. The UPF 805 may receive the downlink packets 852A-852E from one or more DNs and/or one or more other UPFs. The UPF 805 may apply PDRs 854 to downlink the packets 852A-852E, for example, based on the QoS model. The UPF 805 may map, based on the PDRs 854, the packets 852A-852E into QoS flows. As shown in FIG. 8, downlink packets 852A, 852B may be mapped to a QoS flow 856A, downlink packet 852C may be mapped to a QoS flow 856B, and/or the remaining packets may be mapped to a QoS flow 856C.

The QoS flows 856A-856C may be sent to the AN 802. The AN 802 may apply resource mapping rules to the QoS flows 856A-856C. The QoS flow 856A may be mapped to the resource 820A. The QoS flows 856B, 856C may be mapped to the resource 820B. The resource mapping rules may designate more resources to high priority QoS flows in order to meet QoS requirements.

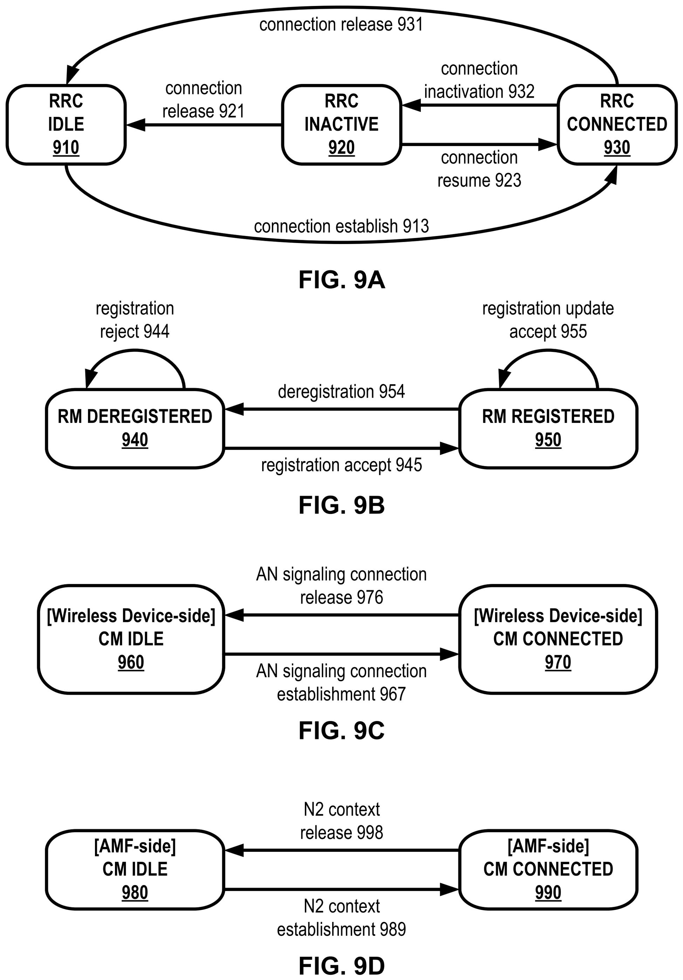

FIGS. 9A- 9D show example states and state transitions of a wireless device. The wireless device, at any given time, may have (or be associated with) one or more of an RRC state, a registration management (RM) state, and/or a connection management (CM) state.

FIG. 9A shows RRC state transitions of a wireless device. The wireless device may be in one of three RRC states: RRC idle 910 (e.g., RRC_IDLE), RRC inactive 920 (e.g., RRC_INACTIVE), or RRC connected 930 (e.g., RRC_CONNECTED). The wireless device may implement/apply/use different RAN-related control plane procedures, for example, depending on the RRC state of the wireless device. Other elements of the network (e.g., a base station) may track RRC state(s) of one or more wireless devices and/or implement/apply/use RAN-related control plane procedures appropriate to an RRC state of each wireless device.

The wireless device may exchange data with a network (e.g., a base station) in an RRC connected state (e.g., RRC connected 930). The parameters necessary for exchange of data may be established and/or may be known to both the wireless device and the network. The parameters may be referred to (and/or may be included in) an RRC context of the wireless device (e.g., which may be referred to as a wireless device context). The parameters may comprise, for example, one or more access stratum (AS) contexts, one or more radio link configuration parameters, bearer configuration information (e.g., relating to a data radio bearer, signaling radio bearer, logical channel, QoS flow, and/or PDU session), security information, and/or PHY layer, MAC layer, RLC layer, PDCP layer, and/or SDAP layer configuration information. The base station with which the wireless device may be connected may store the RRC context of the wireless device.

Mobility of the wireless device, in the RRC connected state, may be managed by the access network. The wireless device may manage mobility, for example, if the wireless device is in an RRC idle state (e.g., the RRC idle 910) and/or an RRC inactive state (e.g., the RRC inactive 920). The wireless device may manage mobility, for example, by measuring signal levels (e.g., reference signal levels) of signals from a serving cell and neighboring cells, and/or by reporting measurements to the base station currently serving the wireless device. The network may initiate handover, for example, based on the reported measurements. The RRC state may transition from the RRC connected state to the RRC idle state via a connection release procedure 930. The RRC state may transition from the RRC connected state to the RRC inactive state via a connection inactivation procedure 932.

An RRC context may not be established for the wireless device. For example, this may be during the RRC idle state. During the RRC idle state (e.g., the RRC idle 910), an RRC context may not be established for the wireless device. During the RRC idle state (e.g., the RRC idle 910), the wireless device may not have an RRC connection with the base station. During the RRC idle state (e.g., the RRC idle 910), the wireless device may be in a sleep state for the majority of the time (e.g., to conserve battery power). The wireless device may wake up periodically (e.g., each discontinuous reception (DRX) cycle) to monitor for paging messages (e.g., paging messages set from the AN). Mobility of the wireless device may be managed by the wireless device via a procedure of a cell reselection. The RRC state may transition from the RRC idle state (e.g., the RRC idle 910) to the RRC connected state (e.g., the RRC connected 930) via a connection establishment procedure 913, which may involve a random-access procedure.

A previously established RRC context may be maintained for the wireless device. For example, this may be during the RRC inactive state. During the RRC inactive state (e.g., the RRC inactive 920), the RRC context previously established may be maintained in the wireless device and the base station. The maintenance of the RRC context may enable/allow a fast transition to the RRC connected state (e.g., the RRC connected 930) with reduced signaling overhead as compared to the transition from the RRC idle state (e.g., the RRC idle 910) to the RRC connected state (e.g., the RRC connected 930). The RRC state may transition from the RRC inactive state (e.g., the RRC inactive 920) to the RRC connected state (e.g., the RRC connected 930) via a connection resume procedure 923. The RRC state may transition from the RRC inactive state (e.g., the RRC inactive 920) to the RRC idle state (e.g., the RRC idle 910) via a connection release procedure 921 that may be the same as or similar to connection release procedure 931.

An RRC state may be associated with a mobility management mechanism. During the RRC idle state (e.g., RRC idle 910) and the RRC inactive state (e.g., the RRC inactive 920), mobility may be managed/controlled by the wireless device via a cell reselection. The purpose of mobility management during the RRC idle state (e.g., the RRC idle 910) or during the RRC inactive state (e.g., the RRC inactive 920) may be to enable/allow the network to be able to notify the wireless device of an event via a paging message without having to broadcast the paging message over the entire mobile communications network. The mobility management mechanism used during the RRC idle state (e.g., the RRC idle 910) and/or during the RRC inactive state (e.g., the RRC inactive 920) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms may be based on different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN may send to the wireless device a list of TAIs associated with a wireless device registration area (e.g., a wireless device registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 920), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 920).

FIG. 9B shows example registration management (RM) state transitions of a wireless device. The states may be RM deregistered 940, (e.g., an RM deregistered state, RM-DEREGISTERED) and RM registered 950 (e.g., an RM deregistered state, RM-REGISTERED).

The wireless device (e.g., in RM deregistered state) may not be registered with the network, and/or the wireless device may not be reachable by the network. The wireless device may perform an initial registration, for example, in order to be reachable by the network. The wireless device may register with an AMF of the network. The wireless device may remain in the RM deregistered state, for example, if registration is rejected (e.g., via a registration reject procedure 944). The wireless device may transition to the RM registered state, for example, if the registration is accepted (e.g., via a registration accept procedure 945). The network may store, keep, and/or maintain a wireless device context for the wireless device, for example, if (e.g., while) the wireless device is in RM registered state. The wireless device context corresponding to network registration (e.g., maintained by the core network) may be different from the RRC context corresponding to RRC state (e.g., maintained by an access network or an element thereof, such as a base station). The wireless device context may comprise a wireless device indicator/identifier and a record of information relating to the wireless device. The information relating to the wireless device may comprise one or more of wireless device capability information, policy information for access and mobility management of the wireless device, lists of allowed or established slices or PDU sessions, and/or a registration area of the wireless device (i.e., a list of tracking areas covering the geographical area where the wireless device is likely to be found).

The network may store the wireless device context of the wireless device, for example, if (e.g., while) the wireless device is in an RM registered state. The network may (e.g., if necessary) use the wireless device context to reach/communicate the wireless device, for example, if (e.g., while) the wireless device is in an RM registered state. Some services may not be provided by the network unless the wireless device is registered. The wireless device may update its wireless device context while remaining in the RM registered state (e.g., via a registration update accept procedure 955). The wireless device may provide a tracking area indicator/identifier to the network, for example, if the wireless device leaves one tracking area and enters another tracking area. The network may deregister the wireless device, or the wireless device may deregister itself (e.g., via a deregistration procedure 954). The network may automatically deregister the wireless device if the wireless device is inactive for a certain amount of time. The wireless device may transition to the RM deregistered state, for example, based on the deregistration.

FIG. 9C shows example connection management (CM) state transitions of a wireless device. The example CM state transitions of the wireless device as shown in FIG. 9C are from a perspective of the wireless device. The wireless device may be in CM idle 960 (e.g., CM idle state, CM-IDLE) or CM connected 970 (e.g., CM connected state, CM-CONNECTED).

The wireless device may not have a NAS signaling connection with the network, for example, if the wireless device is in a CM idle state. The wireless device may not communicate with core network functions, for example, based on not having the NAS signaling connection. The wireless device may transition to a CM connected state by establishing an AN signaling connection (e.g., via an AN signaling connection establishment procedure 967). The transition may be initiated by sending an initial NAS message. The initial NAS message may be a registration request (e.g., if the wireless device is in an RM deregistered state) or a service request (e.g., if the wireless device is in an RM registered state). The wireless device may initiate the AN signaling connection establishment by sending a service request and/or the network may send a page (e.g., triggering the wireless device to send the service request), for example, If the wireless device is in an RM registered state.

The wireless device may communicate with core network functions using NAS signaling, for example, if the wireless device is in a CM connected state. For example, the wireless device may exchange (e.g., send and/or receive) NAS signaling with an AMF for registration management purposes, service request procedures, and/or authentication procedures. The wireless device may exchange NAS signaling, with an SMF, to establish and/or modify a PDU session. The network may disconnect the wireless device, or the wireless device may disconnect itself (e.g., via an AN signaling connection release procedure 976). The wireless device may transition to the CM idle state, for example, if the wireless device transitions to the RM deregistered state. The network may deactivate a user plane connection of a PDU session of the wireless device, for example, based on the wireless device transitioning to the CM idle state.

FIG. 9D shows example CM state transitions of the wireless device. The example CM state transitions of the wireless device as shown in FIG. 9D may be from a network perspective (e.g., an AMF perspective). The CM state of the wireless device, as tracked by the AMF, may be CM idle 980 (e.g., CM idle state, CM-IDLE) or CM connected 990 (e.g., CM connected state, CM-CONNECTED). The AMF many establish an N2 context of the wireless device (e.g., via an N2 context establishment procedure 989), for example, based on the wireless device transitioning from CM idle 980 to CM connected 990. The AMF may release the N2 context of the wireless device (e.g., via an N2 context release 998 procedure), for example, based on the wireless device transitioning from CM connected 990 to CM idle 980.

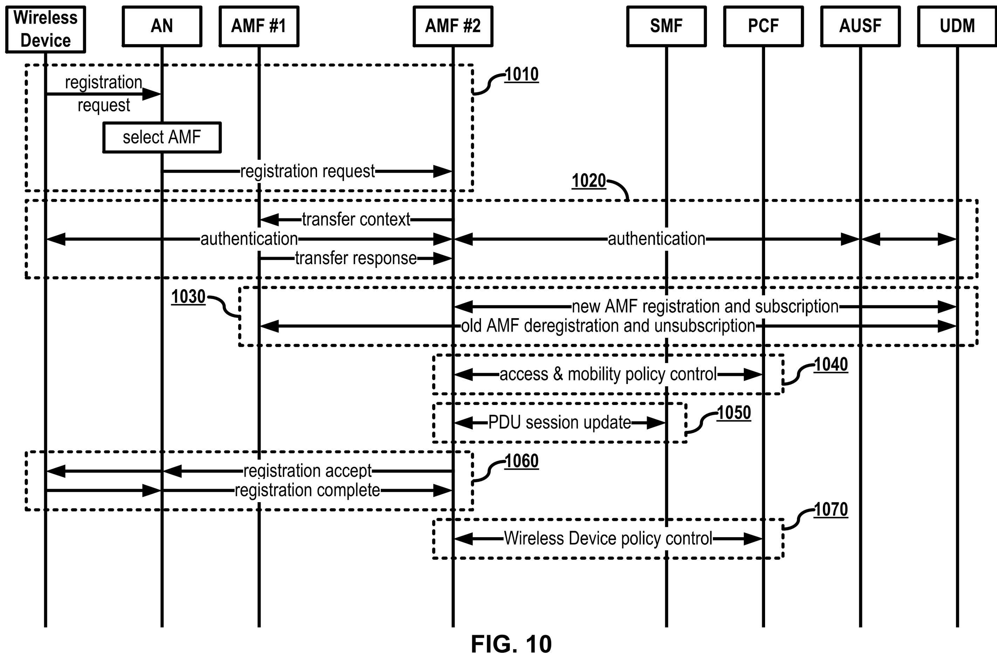

FIG. 10, FIG. 11, and FIG. 12 show example procedures for registering, service request, and PDU session establishment of a wireless device. FIG. 10 shows an example registration procedure for a wireless device. The wireless device 1002 may transition from an RM deregistered state (e.g., RM deregistered 940) to an RM registered state (e.g., RM registered 950), for example, based on the registration procedure.

Registration may be initiated by a wireless device 1002 for obtaining authorization to receive services, enabling mobility tracking, enabling reachability, and/or any other purpose. The wireless device 1002 may perform an initial registration (e.g., as a first step toward connecting to the network). For example, the wireless device 1002 may perform an initial registration based on the wireless device being powered on (e.g., if the wireless device is powered on), based on an airplane mode being turned off (e.g., if an airplane mode is turned off), and/or based on one or more other conditions and/or events. Registration may be performed periodically which may keep the network informed of the wireless device's presence (e.g., while the wireless device 1002 is in a CM idle state). Registration may be performed based on (e.g., in response to) a change in wireless device capability and/or registration area. Deregistration (not shown in FIG. 10) may be performed to stop network access.

At step 1010, the wireless device 1002 may send/transmit a registration request to an AN 1004. For example, the wireless device 1002 may have moved from a coverage area of a previous AMF (e.g., AMF 1006) into a coverage area of a new AMF (e.g., AMF 1008). The registration request may be/comprise a NAS message. The registration request may comprise a wireless device identifier. The AN 1004 may determine/select an AMF for registration of the wireless device. The AN 1004 may select a default AMF, or may determine/select an AMF that is already mapped to the wireless device 1002 (e.g., a previous AMF). The NAS registration request may comprise a network slice identifier. The AN 1004 may determine/select an AMF based on the requested slice. The AN 1004 may send the registration request to the selected AMF, for example, based on determination of the selected AMF. The selected AMF (e.g., AMF 1008) may receive the registration request.

At step 1020, the AMF that receives the registration request (e.g., AMF 1008) may perform a context transfer. The context may be a wireless device context (e.g., an RRC context for the wireless device). The AMF 1008 may send, to the AMF 1006, a message (e.g., an Namf_Communication_UEContextTransfer message) requesting a context of the wireless device. The message may comprise the wireless device indicator/identifier. The AMF 1006 may send, to the AMF 1008, a message (e.g., an Namf_Communication_UEContextTransfer message) that comprises the requested wireless device context. The AMF 1008 may coordinate authentication of the wireless device 1002, for example, based on receiving the wireless device context. The AMF 1008 may send, to the AMF 1006 and based on completion of authentication, a message (e.g., an Namf_Communication_UEContextTransfer Response message) indicating that the wireless device context transfer is complete.

The authentication may involve participation of one or more of the wireless device 1002, an AUSF 1016, a UDM 1018 and/or a UDR (not shown). The AMF 1008 may request that the AUSF 1016 authenticate the wireless device 1002. The AUSF may execute authentication of the wireless device 1002 (e.g., based on the request). The AUSF 1016 may get authentication data from the UDM 1018. The AUSF 1016 may send, to the AMF 1008, a subscription permanent identifier (SUPI), for example, based on the authentication being successful. The AUSF 1016 may provide an intermediate key to the AMF 1008. The intermediate key may be used to derive an access-specific security key for the wireless device 1002. The access-specific security key may enable the AMF 1008 to perform security context management (SCM). The AUSF 1016 may obtain subscription data from the UDM 1018. The subscription data may be based on information obtained from the UDM 1018 (and/or the UDR). The subscription data may comprise subscription identifiers/indicators, security credentials, access and mobility related subscription data, and/or session related data.

At step 1030, the AMF 1008 may register and/or subscribe to the UDM 1018. The AMF 1008 may perform registration using a wireless device context management service of the UDM 1018 (e.g., Nudm_UECM). The AMF 1008 may obtain subscription information of the wireless device 1002 using a subscriber data management service of the UDM 1018 (e.g., Nudm_SDM). The AMF 1008 may further request that the UDM 1018 notify/send a notification to the AMF 1008 if the subscription information of the wireless device 1002 changes. The AMF 1006 may deregister and unsubscribe, for example, based on the AMF 1008 registering and/or subscribing. The AMF 1006 may no longer need to perform mobility management of the wireless device 1006, for example, based on (e.g., after) deregistering.

At step 1040, the AMF 1008 may retrieve access and mobility (AM) policies from the PCF 1014. The AMF 1008 may provide subscription data of the wireless device 1002 to the PCF 1014. The PCF 1014 may determine access and mobility policies for the wireless device 1002, for example, based on the subscription data, network operator data, current network conditions, and/or other suitable information. For example, the owner/user of a first wireless device may purchase a higher level of service than the owner/user of a second wireless device. The PCF 1014 may provide the rules associated with the different levels of service. The network may apply different policies which facilitate different levels of service, for example, based on the subscription data of the respective wireless devices.

Access and mobility policies may relate to (e.g., may be based on and/or comprise) service area restrictions, radio access technology (RAT) frequency selection priority (RFSP), authorization and prioritization of access type (e.g., LTE versus NR), and/or selection of non-3GPP access (e.g., access network discovery and selection policy (ANDSP)). The service area restrictions may comprise list(s) of tracking areas where the wireless device is allowed to be served (and/or forbidden from being served). The access and mobility policies may comprise a wireless device (e.g., UE) route selection policy (URSP) that may influence routing to an established PDU session and/or a new PDU session. Different policies may be obtained and/or be enforced based on subscription data of the wireless device, location of the wireless device (e.g., location of the AN and/or AMF), and/or other suitable factors.

At step 1050, the AMF 1008 may update a context of a PDU session. The AMF 1008 may coordinate/communicate with an SMF (e.g., SMF 1012) to activate a user plane connection associated with an existing PDU session, for example, if the wireless device has/is associated with the existing PDU session. The SMF 1012 may update and/or release a session management context of the PDU session (e.g., Nsmf_PDUSession_UpdateSMContext, Nsmf_PDUSession_ReleaseSMContext).

At step 1060, the AMF 1008 may send a registration accept message to the AN 1004. The AN 1004 may forward the registration accept message to the wireless device 1002. The registration accept message may comprise a new wireless device indicator/identifier and/or a new configured slice indicator/identifier. The wireless device 1002 may send/transmit a registration complete message to the AN 1004. The AN 1004 may forward the registration complete message to the AMF 1008. The registration complete message may acknowledge receipt of the new wireless device identifier and/or new configured slice identifier.

At step 1070, the AMF 1008 may receive/obtain wireless device policy control information from the PCF 1014. The PCF 1014 may send/provide an ANDSP (e.g., to facilitate non-3GPP access). The PCF 1014 may provide URSP to facilitate mapping of particular data traffic to particular PDU session connectivity parameters. The URSP may indicate that data traffic associated with a particular application should be mapped to a particular SSC mode, network slice, PDU session type, and/or preferred access type (e.g., 3GPP or non-3GPP).

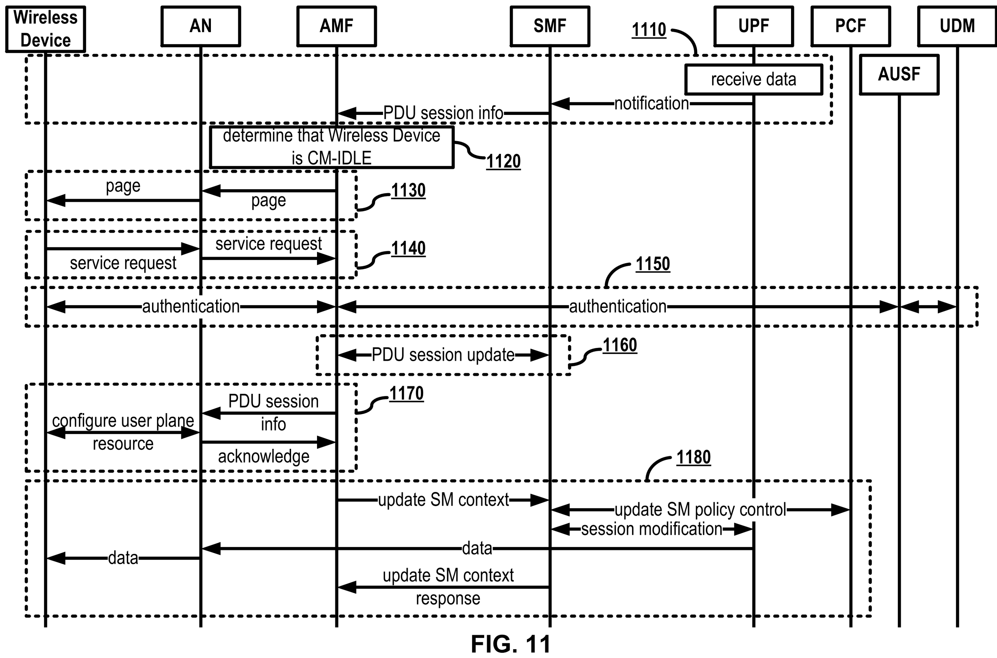

FIG. 11 shows an example service request procedure for a wireless device. The service request procedure may be a network-triggered service request procedure for a wireless device in a CM idle state. Other service request procedures (e.g., a wireless device-triggered service request procedure) may be performed in a manner similar to that described with reference to FIG. 11.

At step 1110, a UPF 1112 may receive data. The data may be downlink data for transmission to a wireless device (e.g., wireless device 1102). The data may be associated with an existing PDU session between the wireless device 1102 and a DN. The data may be received from a DN and/or another UPF. The UPF 1112 may buffer the received data. The UPF 1112 may notify an SMF (e.g., SMF 1108) of the received data, for example, based on (e.g., in response to) receiving the data. The identity of the SMF to be notified may be determined based on the received data. The notification may be an N4 session report. The notification may indicate that the UPF 1112 has received data associated with the wireless device 1102 and/or a particular PDU session associated with the wireless device 1102. The SMF 1108 may send PDU session information to an AMF 1106, for example, based on (e.g., in response to) receiving the notification. The PDU session information may be sent in an N1N2 message transfer for forwarding to an AN 1104. The PDU session information may comprise UPF tunnel endpoint information and/or QoS information.

At step 1120, the AMF 1106 may determine that the wireless device 1102 is in a CM idle state. The determining may be based on (e.g., in response to) the receiving of the PDU session information. The service request procedure may proceed to steps 1130 and 1140, for example, based on the determination that the wireless device is in CM idle state. The steps 1130 and 1140 may be skipped, and the service request procedure may proceed directly to 1150, for example, based on determining that the wireless device is not in CM idle state (e.g., the wireless device is in CM connected state).

At step 1130, the AMF 1106 may page the wireless device 1102. The paging at step 1130 may be performed based on the wireless device being in a CM idle state. The AMF 1106 may send a page to the AN 1104 to perform the paging. The page may be referred to as a paging or a paging message. The page may be an N2 request message. The AN 1104 may be one of a plurality of ANs in a RAN notification area of the wireless device 1102. The AN may send a page to the wireless device 1102. The wireless device 1102 may be in a coverage area of the AN 1104 and may receive the page.

At step 1140, the wireless device 1102 may request service. The wireless device 1102 may send/transmit a service request to the AMF 1106 via the AN 1104. The wireless device 1102 may request service at step 1140, for example, based on (e.g., in response to) receiving the paging at step 1130. The wireless device 1102 may receive the page and request service based on the service request procedure being a network-triggered service request procedure. The wireless device 1102 may commence a wireless device-triggered service request procedure in some scenarios (e.g., if uplink data becomes available at the wireless device). The wireless device-triggered service request procedure may commence starting at step 1140 (e.g., one or more of steps 1110 and 1120 may be skipped).

At step 1150, the network may authenticate the wireless device 1102. Authentication may require participation of the wireless device 1102, an AUSF 1116, and/or a UDM 1118 (e.g., as described herein). The authentication at step 1150 may be skipped, for example, in one or more scenarios (e.g., if the wireless device 1102 has recently been authenticated).

At step 1160, the AMF 1106 and the SMF 1108 may perform a PDU session update. The PDU session update may comprise the SMF 1108 providing, to the AMF 1106, with one or more UPF tunnel endpoint identifiers. The SMF 1108 may coordinate with one or more other SMFs and/or one or more other UPFs to set up a user plane.

At step 1170, the AMF 1106 may send PDU session information to the AN 1104. The PDU session information may be included in an N2 request message. The AN 1104 may configure a user plane resource for the wireless device 1102, for example, based on the PDU session information. The AN 1104 may perform an RRC reconfiguration of the wireless device 1102, for example, to configure the user plane resource. The AN 1104 may acknowledge the AMF 1106 (e.g., send an acknowledgment message to the AMF 1106 indicating) that the PDU session information has been received. The AN 1104 may notify the AMF 1106 (e.g., via the acknowledgment message) that the user plane resource has been configured, and/or provide information relating to the user plane resource configuration.

The wireless device 1102 may receive (e.g., at step 1170), for a wireless device-triggered service procedure, a NAS service accept message from the AMF 1106 via the AN 1104. The wireless device 1102 may send/transmit uplink data (e.g., the uplink data that caused the wireless device 1102 to trigger the service request procedure), for example, based on (e.g., after) configuring the user plane resource.

At step 1180, the AMF 1106 may update a session management (SM) context of the PDU session. The AMF 1106 may notify the SMF 1108 (and/or one or more other associated SMFs) that the user plane resource has been configured, and/or may provide information relating to the user plane resource configuration. The AMF 1106 may provide/send to the SMF 1108 (and/or one or more other associated SMFs) one or more AN tunnel endpoint identifiers/indicators of the AN 1104. The SMF 1108 may send an update SM context response message to the AMF 1106, for example, based on (e.g., after) the SM context update being complete.

The SMF 1108 may update a PCF (e.g., the PCF 1114) for purposes of policy control, for example, based on the update of the session management context. For example, the SMF 1108 may notify (e.g., via PCF 1114 update) the PCF 1114 of a new location of the wireless device 1102 if a location of the wireless device 1102 has changed. The SMF 1108 and the UPF 1112 may perform a session modification, for example, based on the update of the session management context. The session modification may be performed using N4 session modification messages. The UPF 1112 may send/transmit downlink data (e.g., the downlink data that caused the UPF 1112 to trigger the network-triggered service request procedure) to the wireless device, for example, based on the session modification being completed. The sending/transmitting of the downlink data may be based on the one or more AN tunnel endpoint identifiers of the AN 1104.

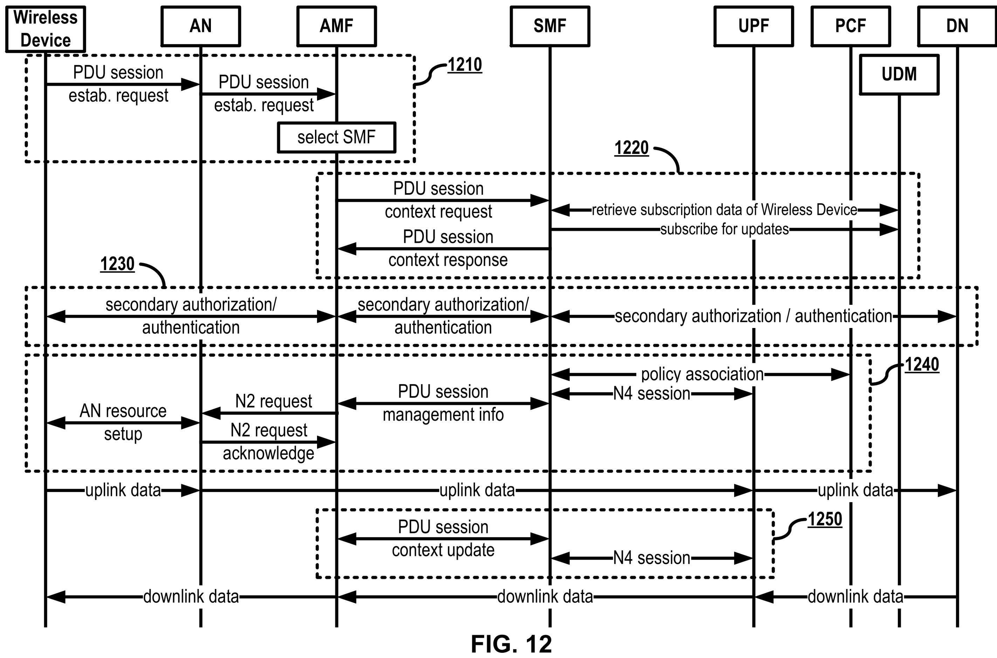

FIG. 12 shows an example PDU session establishment procedure for a wireless device. The wireless device 1202 may determine to send/transmit a PDU session establishment request (e.g., for the PDU session establishment procedure) to create a new PDU session, to hand over an existing PDU session to a 3GPP network, and/or for any other suitable reason.

At step 1210, the wireless device 1202 may initiate PDU session establishment. The wireless device 1202 may send/transmit a PDU session establishment request, via an AN 1204, to an AMF 1206. The PDU session establishment request may be a NAS message. The PDU session establishment request may indicate/comprise one or more of: a PDU session indicator/ID; a requested PDU session type (e.g., whether the requested PDU session is new or existing); a requested DN (e.g., a DNN); a requested network slice (S NSSAI); a requested SSC mode; and/or any other suitable information. The PDU session ID may be generated by the wireless device 1202. The PDU session type may be, for example, an Internet Protocol (IP)-based type (e.g., IPv4, IPv6, or dual stack IPv4/IPv6), an Ethernet type, or an unstructured type.

The AMF 1206 may determine/select an SMF (e.g., SMF 1208) based on the PDU session establishment request. The requested PDU session may, in at least some scenarios, already be associated with a particular SMF. For example, the AMF 1206 may store a wireless device context of the wireless device 1202, and the wireless device context may indicate that the PDU session ID of the requested PDU session is already associated with the particular SMF. In some scenarios, the AMF 1206 may select the SMF based on a determination that the SMF is prepared to handle the requested PDU session. For example, the requested PDU session may be associated with a particular DNN and/or S NSSAI. The SMF may be selected based on a determination that the SMF can manage a PDU session associated with the particular DNN and/or S NSSAI.

At step 1220, the network may manage a context of the PDU session. The AMF 1206 may send a PDU session context request to the SMF 1208, for example, based on (e.g., after) selecting the SMF 1208 at 1210. The PDU session context request may comprise the PDU session establishment request received from the wireless device 1202 at step 1210. The PDU session context request may be a Nsmf_PDUSession_CreateSMContext Request and/or a Nsmf_PDUSession_UpdateSMContext Request. The PDU session context request may indicate/comprise indicators/identifiers of the wireless device 1202; the requested DN; and/or the requested network slice. The SMF 1208 may retrieve subscription data from a UDM 1216, for example, based on the PDU session context request. The subscription data may be session management subscription data of the wireless device 1202. The SMF 1208 may subscribe for updates to the subscription data. The PCF 1208 may send, to the SMF 1208, new information if the subscription data of the wireless device 1202 changes, for example, based on the SMF 1208 subscribing for the updates. The SMF 1208 may send/transmit a PDU session context response to the AMF 1206, for example, based on (e.g., after) receiving/obtaining the subscription data of the wireless device 1202. The PDU session context response may be a Nsmf_PDUSession_CreateSMContext Response and/or a Nsmf_PDUSession_UpdateSMContext Response. The PDU session context response may include/comprise a session management context ID.

At step 1230, secondary authorization/authentication may be performed, if necessary. The secondary authorization/authentication may involve the wireless device 1202, the AMF 1206, the SMF 1208, and/or the DN 1218. The SMF 1208 may access the DN 1218 via a server (e.g., a data network authentication, authorization, and accounting (DN AAA) server).

At step 1240, the network may set up a data path for uplink data associated with the PDU session. The SMF 1208 may select/determine a PCF (e.g., a PCF 1214). The SMF 1208 may establish a session management policy association. The PCF 1214 may provide an initial set of policy control and charging rules (PCC rules) for the PDU session, for example, based on the association. The PCF 1214 may (e.g., if targeting a particular PDU session) indicate, to the SMF 1208, one or more of a method for allocating an IP address to the PDU Session, a default charging method for the PDU session, an address of the corresponding charging entity, triggers for requesting new policies, and/or any other method, action, and/or information. The PCF 1214 may target a service data flow (SDF) comprising one or more PDU sessions. The PCF may (e.g., if targeting an SDF) indicate, to the SMF 1208, policies for one or more of applying QoS requirements, monitoring traffic (e.g., for charging purposes), steering traffic (e.g., by using one or more particular N6 interfaces), and/or any other purpose.

The SMF 1208 may determine and/or allocate an IP address for the PDU session. The SMF 1208 may select one or more UPFs (e.g., a single UPF 1212 as shown in FIG. 12) to handle the PDU session. The SMF 1208 may send an N4 session message to the selected UPF 1212. The N4 session message may be an N4 session establishment request and/or an N4 session modification request. The N4 session message may include/comprise packet detection, enforcement, and/or reporting rules associated with the PDU session. The UPF 1212 may acknowledge the N4 session message by sending an N4 session establishment response and/or an N4 session modification response.

The SMF 1208 may send PDU session management information to the AMF 1206. The PDU session management information may be/comprise a Namf_Communication_N1N2MessageTransfer message. The PDU session management information may include/comprise the PDU session ID. The PDU session management information may be/comprise a NAS message. The PDU session management information may include/comprise N1 session management information and/or N2 session management information. The N1 session management information may include/comprise a PDU session establishment accept message. The PDU session establishment accept message may include/comprise tunneling endpoint information of the UPF 1212 and QoS information associated with the PDU session.

The AMF 1206 may send an N2 request to the AN 1204. The N2 request may include/comprise the PDU session establishment accept message. The AN 1204 may determine AN resources for the wireless device 1202, for example, based on the N2 request. The AN resources may be used by the wireless device 1202 to establish the PDU session, via the AN 1204, with the DN 1218. The AN 1204 may determine resources to be used for the PDU session and indicate, to the wireless device 1202, the determined resources. The AN 1204 may send the PDU session establishment accept message to the wireless device 1202. The AN 1204 may perform an RRC reconfiguration of the wireless device 1202. The AN 1204 may send an N2 request acknowledge to the AMF 1206, for example, based on (e.g., after) the AN resources being set up. The N2 request acknowledge may include/comprise N2 session management information (e.g., the PDU session ID and tunneling endpoint information of the AN 1204).

The wireless device 1202 may (e.g., optionally) send uplink data associated with the PDU session, for example, based on the data path for uplink data being set up (e.g., at step 1240). The uplink data may be sent to a DN 1218, associated with the PDU session, via the AN 1204 and the UPF 1212.

At step 1250, the network may update the PDU session context. The AMF 1206 may send/transmit a PDU session context update request to the SMF 1208. The PDU session context update request may be a Nsmf_PDUSession_UpdateSMContext request. The PDU session context update request may comprise the N2 session management information received from the AN 1204. The SMF 1208 may acknowledge (e.g., send an acknowledgment message based on/in response to) the PDU session context update. The acknowledgement may be a Nsmf_PDUSession_UpdateSMContext response. The acknowledgement may comprise a subscription requesting that the SMF 1208 be notified of any wireless device mobility event. The SMF 1208 may send an N4 session message to the UPF 1212, for example, based on the PDU session context update request. The N4 session message may be an N4 session modification request. The N4 session message may comprise tunneling endpoint information of the AN 1204. The N4 session message may comprise forwarding rules associated with the PDU session. The UPF 1212 may acknowledge (e.g., reception of the N4 session message) by sending an N4 session modification response.

The UPF 1212 may relay downlink data associated with the PDU session, for example, based on (e.g., after) the UPF 1212 receiving the tunneling endpoint information of the AN 1204The downlink data may be received from a DN 1218, associated with the PDU session, via the AN 1204 and the UPF 1212.

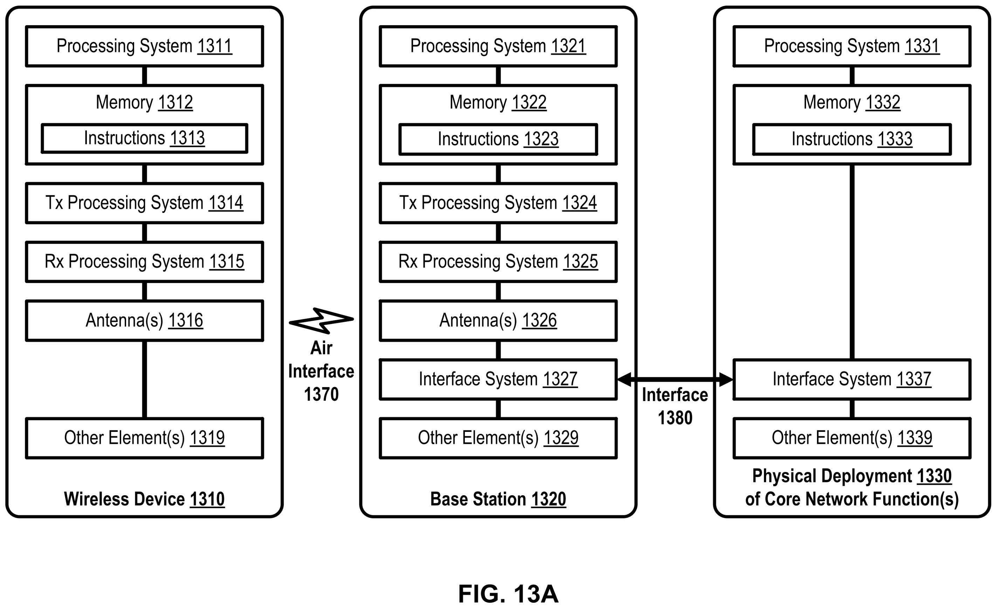

FIG. 13A shows example elements in a communications network. FIG. 13A shows a wireless device 1310, a base station 1320, and a physical deployment of one or more network functions 1330 (henceforth, "deployment 1330"). Any wireless device described herein may have similar components and/or may be implemented in a similar manner as the wireless device 1310. Any base station described herein (or any portion of the base station, depending on the architecture of the base station) may have similar components and/or may be implemented in a similar manner as the base station 1320. Any physical core network deployment described herein (or any portion of the deployment, depending on the architecture of the deployment) may have similar components and may be implemented in a similar manner as the deployment 1330.

The wireless device 1310 may communicate with base station 1320 over an air interface 1370. A communication direction from wireless device 1310 to base station 1320 over air interface 1370 may be known as uplink, and a communication direction from base station 1320 to wireless device 1310 over air interface 1370 may be known as downlink. Downlink transmissions may be separated from uplink transmissions using FDD, TDD, and/or some combination of duplexing techniques. FIG. 13A shows a single wireless device 1310 and a single base station 1320, but it may be understood that wireless device 1310 may communicate with any number/quantity of base stations and/or other access network components over air interface 1370, and it may be understood that that base station 1320 may communicate with any number/quantity of wireless devices over air interface 1370.

The wireless device 1310 may comprise a processing system 1311 and a memory 1312. The memory 1312 may comprise one or more computer-readable media (e.g., one or more non-transitory computer readable media). The memory 1312 may include/comprise/store instructions 1313. The processing system 1311 may process and/or execute the instructions 1313. Processing and/or execution of the instructions 1313 may cause the wireless device 1310 and/or the processing system 1311 to perform one or more functions or activities. The memory 1312 may include/comprise data (not shown). One of the functions or activities performed by the processing system 1311 may be to store data in the memory 1312 and/or retrieve previously-stored data from the memory 1312. For example, downlink data received from the base station 1320 may be stored in the memory 1312, and uplink data for transmission to the base station 1320 may be retrieved from the memory 1312. The wireless device 1310 may communicate with the base station 1320 using a transmission processing system 1314 and/or a reception processing system 1315. Alternatively, transmission processing system 1314 and reception processing system 1315 may be implemented as a single processing system, or both may be omitted and all processing in the wireless device 1310 may be performed by the processing system 1311. Although not shown in FIG. 13A, the transmission processing system 1314 and/or the reception processing system 1315 may be coupled to a dedicated memory that may be analogous to but separate from the memory 1312. The dedicated memory may comprise instructions that may be processed and/or executed to carry out one or more respective functionalities of the transmission processing system 1314 and/or the reception processing system 1315. The wireless device 1310 may comprise one or more antennas 1316 to access the air interface 1370.

The wireless device 1310 may comprise one or more other elements 1319. The one or more other elements 1319 may comprise software and/or hardware that may provide features and/or functionalities. For example, the one or more other elements 1319 may comprise one or more of a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1310 may receive user input data from and/or provide user output data to the one or more one or more other elements 1319. The one or more other elements 1319 may comprise a power source. The wireless device 1310 may receive power from the power source and may be configured to distribute the power to the other components in wireless device 1310. The power source may comprise or connect to one or more sources of power (e.g., a battery, a solar cell, a fuel cell, a wall outlet, an electrical grid, and/or any combination thereof).

The wireless device 1310 may send/transmit uplink data to and/or receive downlink data from the base station 1320 via the air interface 1370. One or more of the processing system 1311, transmission processing system 1314, and/or reception system 1315 may implement open systems interconnection (OSI) functionality to perform transmission and/or reception. For example, the transmission processing system 1314 and/or the reception system 1315 may perform layer 1 OSI functionality, and the processing system 1311 may perform higher layer functionality. The wireless device 1310 may transmit and/or receive data over the air interface 1370 via/using one or more antennas 1316. For scenarios where the one or more antennas 1316 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise a processing system 1321 and a memory 1322. The memory 1322 may comprise one or more computer-readable media (e.g., one or more non-transitory computer readable media). The memory 1322 may comprise instructions 1323. The processing system 1321 may process and/or execute the instructions 1323. Processing and/or execution of the instructions 1323 may cause the base station 1320 and/or the processing system 1321 to perform one or more functions or activities. The memory 1322 may comprise data (not shown). One of the functions or activities performed by the processing system 1321 may be to store data in the memory 1322 and/or retrieve previously-stored data from the memory 1322. The base station 1320 may communicate with the wireless device 1310 using a transmission processing system 1324 and/or a reception processing system 1325. The transmission processing system 1324 and/or the reception processing system 1325 may be coupled to a dedicated memory (not shown) that may be analogous to but separate from memory 1322. The dedicated memory may comprise instructions that may be processed and/or executed to carry out one or more of their respective functionalities. The base station 1320 may comprise one or more antennas 1326 to access the air interface 1370.

The base station 1320 may send/transmit downlink data to and/or receive uplink data from wireless device 1310 via the air interface 1370. To perform the transmission and/or reception, one or more of the processing system 1321, the transmission processing system 1324, and/or the reception system 1325 may implement OSI functionality. For example, the transmission processing system 1324 and/or the reception system 1325 may perform layer 1 OSI functionality, and the processing system 1321 may perform higher layer functionality. The base station 1320 may transmit and/or receive data via the air interface 1370 using one or more antennas 1326. For scenarios where the one or more antennas 1326 comprise multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise an interface system 1327. The interface system 1327 may communicate with one or more base stations and/or one or more elements of the core network via an interface 1380. The interface 1380 may be wired and/or wireless. The interface system 1327 may comprise one or more components suitable for communicating via the interface 1380. As shown in FIG. 13A, the interface 1380 may connect the base station 1320 to a single deployment 1330 (e.g., as shown in FIG. 13A), but it may be understood that wireless device 1310 may communicate with any number/quantity of base stations and/or CN deployments via the interface 1380, and it may be understood that that deployment 1330 may communicate with any number/quantity of base stations and/or other CN deployments via the interface 1380. The base station 1320 may comprise one or more other elements 1329 analogous to one or more of the one or more other elements 1319.

The deployment 1330 may comprise any quantity/number of portions of any quantity /number of instances of one or more NFs. The deployment 1330 may comprise a processing system 1331 and a memory 1332. The memory 1332 may comprise one or more computer-readable media (e.g., one or more non-transitory computer readable media). The memory 1332 may comprise instructions 1333. The processing system 1331 may process and/or execute instructions 1333. Processing and/or execution of the instructions 1333 may cause the deployment 1330 and/or the processing system 1331 to perform one or more functions or activities. The memory 1332 may comprise data (not shown). One of the functions or activities performed by processing system 1331 may be to store data in the memory 1332 and/or retrieve previously-stored data from the memory 1332. The deployment 1330 may access the interface 1380 using an interface system 1337. The deployment 1330 may comprise one or more other elements 1339 analogous to one or more of the one or more other elements 1319.

One or more of the systems 1311, 1314, 1315, 1321, 1324, 1325, and/or 1331 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. One or more of the systems 1311, 1314, 1315, 1321, 1324, 1325, and/or 1331 may perform signal coding/processing, data processing, power control, input/output processing, and/or any other functionality that may enable wireless device 1310, base station 1320, and/or deployment 1330 to operate in a mobile communications system.

The wireless device 1310, the base station 1320, and/or the deployment 1330 may implement timers and/or counters. A timer/counter may start and/or restart at an initial value. The timer/counter may run based on the starting. Running of the timer/counter may be associated with an occurrence. The value of the timer/counter may change (e.g., increment or decrement). The occurrence may be an exogenous event (e.g., a reception of a signal, a measurement of a condition, etc.), an endogenous event (e.g., a transmission of a signal, a calculation, a comparison, a performance of an action or a decision to so perform, etc.), and/or any combination thereof. The occurrence may be the passage of a particular amount of time. A timer may be described and/or implemented as a counter that counts the passage of a particular unit of time. A timer/counter may run in a direction of a final value until it reaches the final value. The reaching of the final value may be referred to as expiration of the timer/counter. The final value may be referred to as a threshold. A timer/counter may be paused (e.g., a present value of the timer/counter may be held, maintained, and/or carried over), for example, even after an occurrence of one or more occurrences that would otherwise cause the value of the timer/counter to change. The timer/counter may be un-paused or continued (e.g., the value that was held, maintained, and/or carried over may begin changing again), for example, after an occurrence of the one or more occurrence occur. A timer/counter may be set and/or reset. As used herein, setting may comprise resetting. The value of the timer/counter may be set to the initial value, for example, if the timer/counter sets and/or resets. A timer/counter may be started and/or restarted. Starting may comprise restarting. The value of the timer/counter may be set to the initial value and the timer/counter may begin to run (e.g., increment or decrement), for example, if the timer/counter restarts.

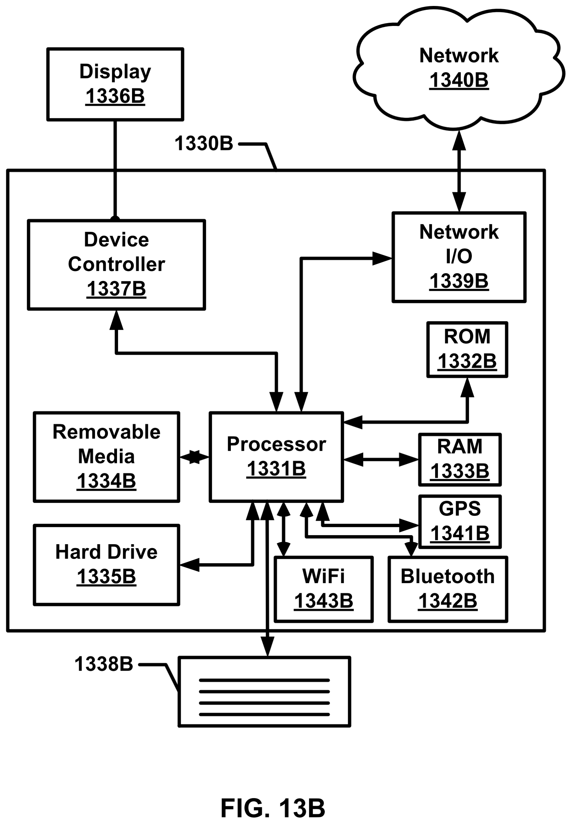

FIG. 13B shows example elements of a computing device that may be used to implement any of the various devices described herein, including, for example, a base station 152A, 152B, 302, 402, 403, 502 602, 602A, 602B, 602C, 702, 802, 1004, 1104, 1204, 1816, and/or 1818, a wireless device 101, 151, 301, 401, 501, 601A, 601B, 601C, 701, 801, 1002, 1102, 1202, 1310, 1502, 1512, 1602, 1702, 1802, 1902, 2010, 2102, 2202, 2302, 2402, 2502, 2802, 2902, 3002, 3102, 3202, 3302, 3402, 3502, and/or 3602,, or any other base station, wireless device, node, NF (e.g., AMF, SMF, UPF, PCF, etc.), UDM, OAM, UDM/OAM, network device, or computing device described herein. The computing device 1330B may include one or more processors 1331B, which may execute instructions stored in the random-access memory (RAM) 1333B, the removable media 1334B (such as a Universal Serial Bus (USB) drive, compact disk (CD) or digital versatile disk (DVD), or floppy disk drive), or any other desired storage medium. Instructions may also be stored in an attached (or internal) hard drive 1335B. The computing device 1330B may also include a security processor (not shown), which may execute instructions of one or more computer programs to monitor the processes executing on the processor 1331B and any process that requests access to any hardware and/or software components of the computing device 1330B (e.g., ROM 1332B, RAM 1333B, the removable media 1334B, the hard drive 1335B, the device controller 1337B, a network interface 1339B, a GPS 1341B, a Bluetooth interface 1342B, a WiFi interface 1343B, etc.). The computing device 1330B may include one or more output devices, such as the display 1336B (e.g., a screen, a display device, a monitor, a television, etc.), and may include one or more output device controllers 1337B, such as a video processor. There may also be one or more user input devices 1338B, such as a remote control, keyboard, mouse, touch screen, microphone, etc. The computing device 1330B may also include one or more network interfaces, such as a network interface 1339B, which may be a wired interface, a wireless interface, or a combination of the two. The network interface 1339B may provide an interface for the computing device 1330B to communicate with a network 1340B (e.g., a RAN, or any other network). The network interface 1339B may include a modem (e.g., a cable modem), and the external network 1340B may include communication links, an external network, an in-home network, a provider's wireless, coaxial, fiber, or hybrid fiber/coaxial distribution system (e.g., a DOCSIS network), or any other desired network. Additionally, the computing device 1330B may include a location-detecting device, such as a global positioning system (GPS) microprocessor 1341B, which may be configured to receive and process global positioning signals and determine, with possible assistance from an external server and antenna, a geographic position of the computing device 1330B.

The example in FIG. 13B may be a hardware configuration, although the components shown may be implemented as software as well. Modifications may be made to add, remove, combine, divide, etc. components of the computing device 1330B as desired. Additionally, the components may be implemented using basic computing devices and components, and the same components (e.g., processor 1331B, ROM storage 1332B, display 1336B, etc.) may be used to implement any of the other computing devices and components described herein. For example, the various components described herein may be implemented using computing devices having components such as a processor executing computer-executable instructions stored on a computer-readable medium, as shown in FIG. 13B. Some or all of the entities described herein may be software based, and may co-exist in a common physical platform (e.g., a requesting entity may be a separate software process and program from a dependent entity, both of which may be executed as software on a common computing device).

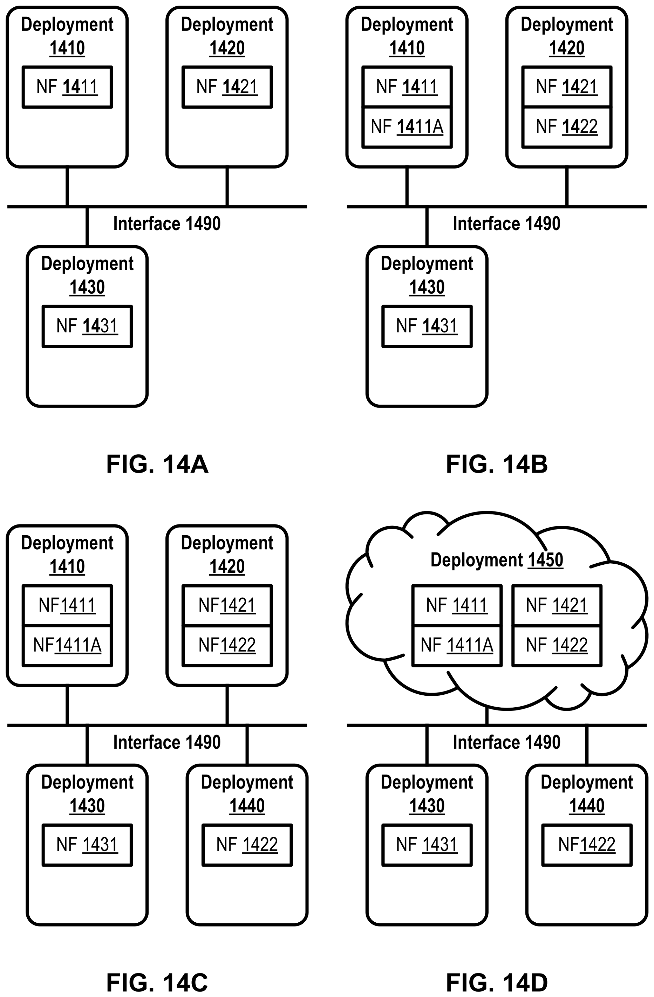

FIGS. 14A, 14B, 14C, and 14D show various example arrangements of physical core network deployments. Each of the arrangements may comprise one or more network functions and/or portions thereof. The core network deployments may comprise a deployment 1410, a deployment 1420, a deployment 1430, a deployment 1440, and/or a deployment 1450. Any of the deployments (e.g., each deployment) may be analogous to the deployment 1330 as shown in FIG. 13A. Any of the deployments (e.g., each deployment) may comprise a processing system for performing one or more functions and/or activities, memory for storing data and/or instructions, and/or an interface system for communicating with other network elements (e.g., other core network deployments). Any of the deployments (e.g., each deployment) may comprise one or more NFs. An NF may refer to a particular set of functionalities and/or one or more physical elements configured to perform those functionalities (e.g., a processing system and memory comprising instructions that, when executed by the processing system, cause the processing system to perform the functionalities). As described herein, a network function performing X, Y, and Z, may comprise the one or more physical elements configured to perform X, Y, and Z (e.g., irrespective of configuration and/or location of the deployment of the one or more physical elements), where X, Y, and Z, each may refer to one or more operations. An NF may comprise one or more of a network node, network element, and/or network device.

Different types of NF may be present in a deployment. Each type of NF may be associated with a different set of one or more functionalities. A plurality of different NFs may be flexibly deployed at different locations (e.g., in different physical core network deployments) or in a same location (e.g., co-located in a same deployment). A single NF may be flexibly deployed at different locations (e.g., implemented using different physical core network deployments) or in a same location. Physical core network deployments may also implement one or more base stations, application functions (AFs), data networks (DNs), and/or any portions thereof. NFs may be implemented in many ways, including as network elements on dedicated or shared hardware, as software instances running on dedicated or shared hardware, and/or as virtualized functions instantiated on a platform (e.g., a cloud-based platform).

FIG. 14A shows an example arrangement of core network deployments. Any of the core network deployments (e.g., each of the core network deployments) may comprise one network function. A deployment 1410 may comprise an NF 1411, a deployment 1420 may comprise an NF 1421, and a deployment 1430 may comprise an NF 1431. The deployments 1410, 1420, 1430 may communicate via an interface 1490. The deployments 1410, 1420, 1430 may have different physical locations with different signal propagation delays relative to other network elements. The diversity of physical locations of deployments 1410, 1420, 1430 may enable provision of services to a wide area with improved speed, coverage, security, and/or efficiency.

FIG. 14B shows an example arrangement where a single deployment may comprise more than one NF. Multiple NFs may be deployed in deployments 1410, 1420. Deployments 1410, 1420 may implement a software-defined network (SDN) and/or a network function virtualization (NFV).

Deployment 1410 may comprise an additional network function, NF 1411A. The NFs 1411, 1411A may comprise multiple instances of the same NF type, co-located at a same physical location within the same deployment 1410. The NFs 1411, 1411A may be implemented independently from one another (e.g., isolated and/or independently controlled). For example, the NFs 1411, 1411A may be associated with different network slices. A processing system and memory associated with the deployment 1410 may perform all of the functionalities associated with the NF 1411 in addition to all of the functionalities associated with the NF 1411A. NFs 1411, 1411A may be associated with different PLMNs, but deployment 1410, which implements NFs 1411, 1411A, may be owned and/or operated by a single entity.

Deployment 1420 may comprise a NF 1421 and an additional NF 1422. The NFs 1421, 1422 may be different NF types. Similar to NFs 1411, 1411A, the NFs 1421, 1422 may be co-located within the same deployment 1420, but may be separately implemented. For example, a first PLMN may own and/or operate deployment 1420 comprising NFs 1421, 1422. As another example, the first PLMN may implement the NF 1421 and a second PLMN may obtain, from the first PLMN (e.g., rent, lease, procure, etc.), at least a portion of the capabilities of deployment 1420 (e.g., processing power, data storage, etc.) in order to implement NF 1422. As yet another example, the deployment may be owned and/or operated by one or more third parties, and the first PLMN and/or second PLMN may procure respective portions of the capabilities of the deployment 1420. Networks may operate with greater speed, coverage, security, and/or efficiency, for example, if multiple NFs are provided at a single deployment.

FIG. 14C shows an example arrangement of core network deployments in which a single instance of an NF may be implemented using a plurality of different deployments. For example, a single instance of NF 1422 may be implemented at deployments 1420, 1440. The functionality provided by NF 1422 may be implemented as a bundle or sequence of subservices. Any subservice (e.g., each subservice) may be implemented independently, for example, at a different deployment. Any subservice (e.g., each subservice) may be implemented in a different physical location. By distributing implementation of subservices of a single NF across different physical locations, the mobile communications network may operate with greater speed, coverage, security, and/or efficiency.

FIG. 14D shows an example arrangement of core network deployments in which one or more network functions may be implemented using a data processing service. As shown in FIG. 14D, NFs 1411, 1411A, 1421, 1422 may be included in a deployment 1450 that may be implemented as a data processing service. The deployment 1450 may comprise a cloud network and/or data center. The deployment 1450 may be owned and/or operated by a PLMN or by a non-PLMN third party. The NFs 1411, 1411A, 1421, 1422 that are implemented using the deployment 1450 may belong to the same PLMN or to different PLMNs. The PLMN(s) may obtain (e.g., rent, lease, procure, etc.) at least a portion of the capabilities of the deployment 1450 (e.g., processing power, data storage, etc.). By providing one or more NFs using a data processing service, the mobile communications network may operate with greater speed, coverage, security, and/or efficiency.

As shown in the FIGS. 14A-14D, different network elements (e.g., NFs) may be located in different physical deployments, or co-located in a single physical deployment. Sending and receiving of messages among different network elements, as described herein, is not limited to inter-deployment transmission or intra-deployment transmission, unless explicitly indicated.

A deployment may be a black box that may be preconfigured with one or more NFs and preconfigured to communicate, in a prescribed manner, with other black box deployments (e.g., via the interface 1490). Additionally or alternatively, a deployment may be configured to operate in accordance with open-source instructions (e.g., software) designed to implement NFs and communicate with other deployments in a transparent manner. The deployment may operate in accordance with open RAN (O RAN) standards.

A wireless device may perform one or more registration procedures for one or more systems of a network of a network operator. The network operator may operate the network. The network may comprise one or more systems, to address various demands, based on different characteristics of the one or more systems. Each registration procedure of the one or more registration procedures may comprise sending a request requesting registration and/or receiving a response, to, from, and/or via a node of the one or more systems, to the one or more systems.

The system may be a network system, a communication system, and/or the like. The system may comprise at least one of a wireless device, a RAN, a core network, and/or the like.

A response may, for example, be an accept of registration and/or a reject of registration. The response may indicate accept (acceptance) of the registration and/or reject of the registration. The request message may be at least one of an Attach request message, a Registration request message, a TA update request message, a message indicating request associated with mobility management, a message for requesting registration to 6G system (6GS), and/or the like. A response message may be at least one of an Attach accept message, an Attach reject message, a Registration accept message, a Registration reject message, a TA update accept message, a TA update reject message, a message indicating accept for mobility management, a message indicating reject for mobility management, a message for accepting registration to 6GS, a message for rejecting registration to 6GS and/or the like.

The one or more registration procedures may comprise a first registration procedure to a first system, a second registration procedure to a second system, a third registration procedure to a third system, and/or the like. The first registration procedure to the first system may be an Attach procedure to EPS, the second registration procedure to the second system may be a Registration procedure to 5GS, and/or the third registration procedure to the third system may be a 6G registration procedure to 6GS (e.g., 6G system). The first registration procedure may, for example, comprise: sending by a wireless device to a mobility management entity (MME), an Attach request message (or TA update request message); receiving by the wireless device and from the MME, at least one of the Attach Reject message (or TA update reject message) or the Attach Accept message (or TA update accept message). The second registration procedure may, for example, comprise: sending by the wireless device to an AMF, the registration request message; or receiving by the wireless device from the AMF, at least one of the Registration Reject message or the Registration Accept message. The third registration procedure may, for example, comprise: sending by the wireless device to an 6GMF (e.g., a mobility management function of 6GS), the message for requesting registration to the 6GS; or receiving by the wireless device from the 6GMF, at least one of the message for accepting registration to 6GS or the message for rejecting registration to 6GS.

A wireless device may send a first NAS message to a first core network node of a first network system. The first NAS message may be at least one of a first attach request message or a first TA update request message. The first core network node of a first core network may be a first MME. The first network system may be a first EPS. A first core network associated with the first core network node may be an evolved packet core (EPC). The wireless device may send the first NAS message via a first radio access network (RAN) to the first core network node. The first radio access network may be a first E-UTRAN. The first E-UTRAN may use a first RAT toward the wireless device. The first RAT may be at least one of a E-UTRA, NR, and/or a 6GR (6G Radio). The first RAT may be a first access technology.

A wireless device may receive a second NAS message from the first core network node, via the first RAN. The second NAS message may be at least one of a second attach accept message, a second TA update accept message, and/or the like. The wireless device may receive the second NAS message via the first radio access network from the first core network node.

A wireless device may transit to a first registered state for a first system, for example, based on receiving a second NAS message and/or based on the second NAS message indicating accept, The first registered state may be EMM-registered state for a first mobility management state for the first system. The wireless device may determine/consider that the wireless device is registered to the first network system, for example, because the second NAS message may indicate an accept of registration.

A wireless device may send a third NAS message to a second core network node of a second network system. The wireless device may send the third NAS message if the wireless device stays in the EMM-registered state for the first network system. The third NAS message may be at least one of a third registration request message. The second core network node may be a second AMF. The second network system may be a second 5GS. A second core network associated with the second core network node may be a second 5GC (5G core). The wireless device may send the third NAS message via a second radio access network to the second core network node. The second radio access network may be a second NG-RAN. The second NG-RAN may use a second RAT. The second RAT may be at least one of an E-UTRA, NR, and/or a 6GR (6G Radio). The second RAT may be a second access technology.

The wireless device may receive a fourth NAS message from the second core network node. The fourth NAS message may be at least one of a fourth registration accept message, and/or the like. The wireless device may receive the fourth NAS message via the second radio access network from the second core network.

The wireless device may transit to a second registered state (e.g., second mobility management state) for the second system, for example, based on receiving the fourth NAS message. The second registered state may be 5GMM-registered state. The fourth NAS message may indicate an accept of registration, the wireless device may determine/consider that the wireless device is registered to the second network system.

A wireless device may manage one or more registration status for the one or more network systems. A registration status of the one or more registration status may be a registration state, a mobility management state, and/or the like. The registration status for a network system may indicate whether the wireless device is registered and/or deregistered for the network system.

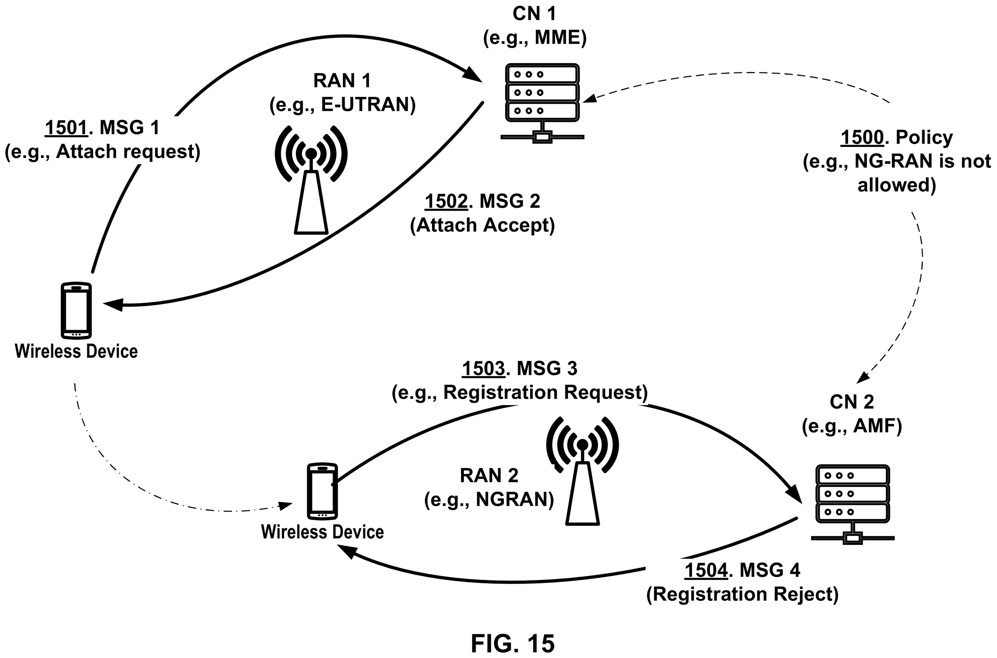

FIG. 15 shows an example of how a network can manage usage of one or more RATs and/or one or more access technologies allowable to a wireless device. At step 1500, a first core network node of a first system and/or a second core network node of a second system may receive one or more messages comprising first policy information. The first policy information may correspond to (e.g., comprise) configuration information. The first policy information may be associated with a first network to which the first core network and/or the second core network belong. One or more second policy information of a second network may be different from the first policy information of the first network. In the first network, the first policy information may be used for a first wireless device and/or the first policy information may not be used for a second wireless device. A home operator of the first wireless device may be different from a home operator of the second wireless device.

One or more policy information of a network may be an information indicating one or more access technologies that may be restricted in the network. The one or more access technologies may comprise at least one of E-UTRAN, NG-RAN, 6G RAN (6G RAN), GSM, satellite-NG-RAN, and/or the like. The one or more access technologies may be one or more RATs. In a network, one or more restricted access technologies for a first set of wireless devices may be different that for a second set of wireless devices.

First policy information, for example, may indicate that E-UTRAN, E-UTRA, EPC, and/or EPS are allowed and/or may indicate that NG-RAN, NR, 5GC and/or 5GS are not allowed. Being allowed may be not being restricted. Not being allowed may be being restricted. The first policy information may be decided, for example, based on roaming agreement, service policy, user grade, network congestion and/or the like.

At step 1501, a wireless device may send an Attach request message (MGS 1) to an MME (CN 1), via RAN 1 (E-UTRAN). The MME may receive the Attach request message. The MME may determine to allow first registration of the wireless device, for example, because the first policy information may indicate that E-UTRAN, E-UTRA, EPC, and/or EPS are allowed. At step 1502, the MME may send an Attach accept message (MSG 2) to the wireless device based on the determination. The wireless device may transit to (and/or stay in) EMM-registered state, for example, after or in response to receiving the Attach accept message.

At step 1503, a wireless device may send a Registration request message (MGS 3) to an AMF (CN 2), via RAN 2 (NG-RAN). The AMF may receive the Registration request message. The AMF may determine to reject a second registration of the wireless device because first policy information may indicate that NG-RAN, E-UTRA, 5GC, and/or 5GS are not allowed. At step 1504, the AMF may send a Registration reject message (MSG 4) to the wireless device, for example, based on the determination. The wireless device may transit to (and/or stay in) 5GMM-deregistered state, for example, in response to receiving the Registration reject message.

FIG.15 shows how a wireless device may perform one or more unnecessary attempts for the second registration. A wireless device sending one or more messages via/to the one or more RATs, the one or more RANs, the one or more access technologies, and/or one or more system may lead to a waste of signaling resources, and/or to congestion in the signaling resources. A wireless device attempting to register to use a resource unavailable to it will remain unregistered and will have to spend resources in selecting a next cell for registration. Moreover, the bandwidth used by the wireless device to attempt to register to use unavailable resources is unable to be used by devices for which the system resources are meant. Signaling resources may be wasted and/or may become congested, for example, if the wireless device is not allowed to use one or more RATs, one or more RANs, one or more access technologies, and/or one or more system.

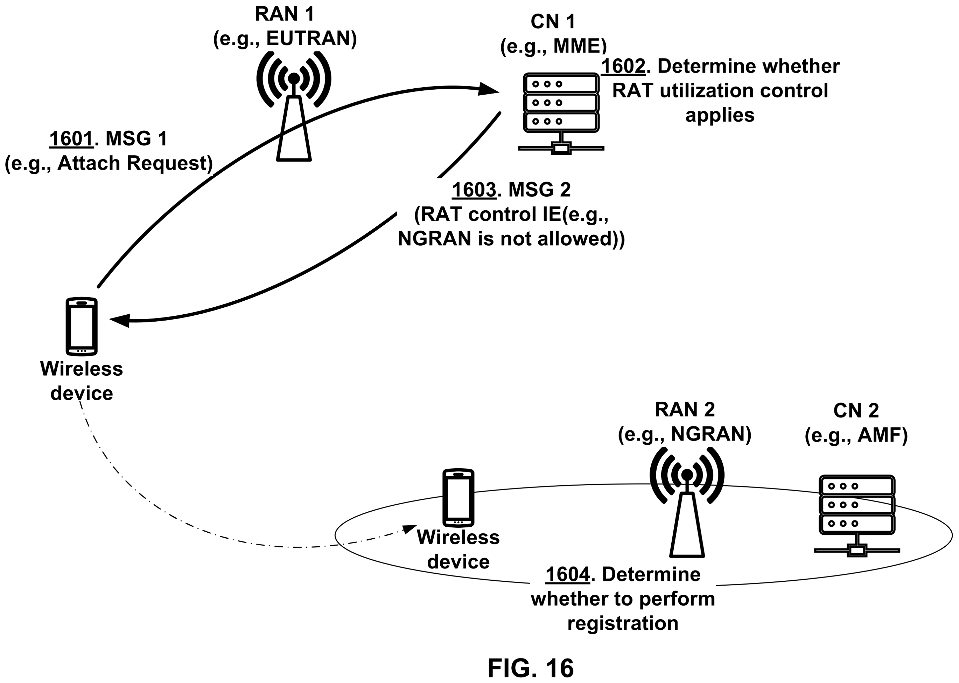

FIG. 16 shows an example of how unnecessary signaling may be reduced. As described herein in FIG. 15, an MME and/or an AMF may be configured with and/or may receive one or more messages comprising first policy information. The first policy information may correspond to (e.g., comprise) configuration information. At step 1601, a wireless device may send (e.g., transmit) an Attach request message to the MME. At step 1602, the MME may allow a first registration of the wireless device. The MME may send (e.g., transmit) an Attach accept message to the wireless device.

An MME may determine to send (e.g., transmit), a RAT utilization control information (RATUCI), to a wireless device. At step 1603, the MME may send a second message. The RATUCI may be sent (e.g., transmitted), for example, based on the first policy information. The RATUCI may indicate one or more RATs (one or more access technologies) that are restricted. The RATUCI may be information indicating one or more access technologies that may be restricted in a network. The one or more access technologies may comprise, for example, at least one of E-UTRAN, NG-RAN, 6G RAN (6G RAN), Global System for Mobile Communications (GSM), satellite-NG-RAN, and/or the like. The one or more access technologies may be one or more RATs. The one or more RATs may be at least one of GSM, Universal mobile telecommunications system Terrestrial Radio Access Network (UTRA), Evolved Universal mobile telecommunications system Terrestrial Radio Access (E-UTRA), NR, 6GR, and/or the like. The RATUCI may indicate, for example, that E-UTRAN, E-UTRA, EPC, and/or EPS are allowed and/or may indicate that NG-RAN, NR, 5GC and/or 5GS are not allowed.

An Attach accept message may comprise a RATUCI. A wireless device may receive the RATUCI, for example, from an MME via the Attach accept message. At step 1604, a wireless device may determine whether to trigger a second registration procedure. The wireless device may determine, for example, whether to trigger a second registration procedure toward/via/using 5GS/5GC/NG-RAN and/or NR. The wireless device may determine whether to trigger the second registration procedure, if the wireless device successfully finishes the first registration, for example, if the wireless device may determine to perform dual-registration.

A wireless device may determine whether a RATUCI is stored in the wireless device. The wireless device may determine whether the RATUCI may be stored in the wireless device, for example, based on whether the RATUCI is available for the network and/or whether the RATUCI was previously received from the network. The network may be, for example, a network to which the wireless device may perform the second registration procedure.

A wireless device may determine whether an access technology (e.g., 6G, 5GS, 5GC, NG-RAN, and/or NR) that may be associated with a second registration procedure may be restricted or allowed. The wireless device may determine whether the access technology (e.g., 6G, 5GS, 5GC, NG-RAN, and/or NR) associated with a second registration procedure is restricted or allowed, for example, based on the RATUCI being available and/or stored. The wireless device may determine not to trigger the second registration procedure and/or may abort any triggered registration procedure toward the access technology (e.g., 5GS, 5GC, NG-RAN, and/or NR) and/or the like, for example, because the RATUCI indicates that the access technology (e.g., 5GS, 5GC, NG-RAN, and/or NR) is restricted, in the network. As shown in the example of FIG. 16, the use of the RATUCI may help in preventing unnecessary registration attempt of the wireless device if one or more access technologies are restricted.

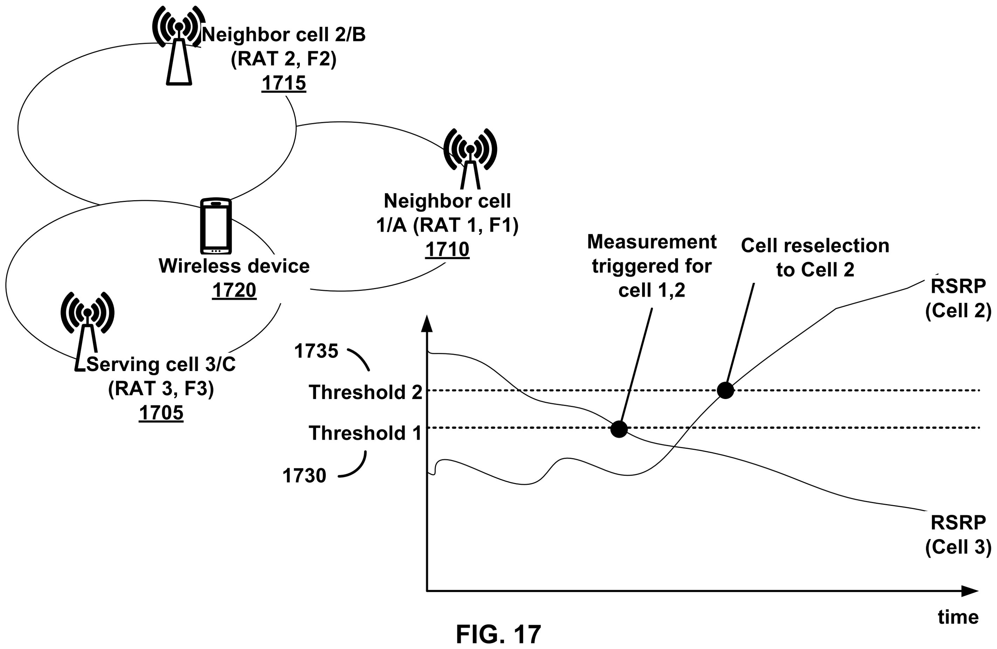

FIG. 17 shows an example of a triggered measurement of cells performed by a wireless device and a subsequent cell reselection by the wireless device. A network of one or more networks may use one or more systems. The one or more systems may use one or more RATs. The one or more system may have one or more cells. The one or more cells may be associated with one or more RATs. The one or more RATs may be one or more access technologies.

One or more cells may comprise a first cell 1710, a second cell 1715, a third cell 1705, and/or the like. The third cell 1705 may be a serving cell of the wireless device. The second cell 1715 and/or the first cell 1710 may not be a serving cell of the wireless device but may be one or more neighboring cells. The second cell 1715 may be associated with a second RAT (e.g., RAT 2) and/or with a second frequency (e.g., F2). The first cell 1710 may be associated with a first RAT (e.g., RAT 1) and/or with a third frequency (e.g., F1). The third cell 1705 may be associated with a third RAT (e.g., RAT 3) and/or with a first frequency (e.g., F3).

A second RAT may be the same as a third RAT. The second RAT may be an intra-RAT frequency. The second RAT may not be the same as the third RAT. The second RAT may be an inter-RAT frequency. Similarly, the first RAT may be or may not be the same as the third RAT.

A second frequency may be the same as a third frequency. The second frequency may be an intra-frequency. The second frequency may not be the same as the third frequency. The second frequency may be an inter-frequency. Similarly, the first frequency may be or may not be the same as the third frequency.

A wireless device may receive one or more (second) RRC messages from a base station. The base station may serve the wireless device 1720 via the third cell 1705 and/or the wireless device 1720 may camp on the third cell 1705. The wireless device 1720 may camp on the third cell 1705. The third cell 1705 may be a serving cell. The one or more RRC messages may be one or more SIBs. The one or more RRC message may comprise information of one or more neighboring cells and/or one or more neighboring (intra/inter/inter-RAT) frequencies. The one or more neighboring cells may comprise the second cell 1715 and/or the first cell 1710. The one or more RRC messages may comprise information of one or more inter-RAT cells and/or one or more inter-RAT frequencies. The one or more inter-RAT frequencies may be one or more frequencies that use RATs different than the RAT of the serving cell. The one or more RRC messages may comprise information of one or more inter-frequency cells and/or one or more inter-frequencies. The one or more inter-frequencies may be one or more frequencies that use different frequencies than the serving cell. The RAT of the one or more inter-frequencies may be the RAT of the serving cell.

One or more RRC messages may indicate one or more thresholds. The one or more thresholds may comprise a first threshold 1730 (e.g., Threshold 1) and/or a second threshold 1735 (e.g., Threshold 2). The first threshold 1730 (e.g., Threshold 1) may be associated with a first value. The wireless device 1720 may determine whether to perform and/or initiate measurement of one or more neighboring cells, one or more inter-frequencies and/or one or more inter-RAT frequencies, for example, based on a measured quality of the serving cell and the first threshold 1730 (e.g., Threshold 1). The second threshold 1735 (e.g., Threshold 2) may be associated with a second value. The wireless device 1720 may determine whether to perform a selection of a cell of the one or more neighboring cells, for example, based on a measured quality of the serving cell, one or more measured quality of the one or more neighboring cells, and/or the second threshold 1735 (e.g., Threshold 2). Measured qualities may comprise at least one of Reference Signal Received Power (RSRP), Reference Signal Received Quality (RSRQ), and/or the like.

A wireless device 1720, for example, may perform a quality measurement of a serving cell (e.g., a third cell 1705, cell C). The wireless device 1720 may start one or more measurements of the one or more neighboring cells, for example, if the measured quality of the serving cell is lower than a first threshold 1730 (e.g., Threshold 1). The one or more neighboring cells may comprise at least one of one or more intra-frequency cells, one or more inter-frequency cells, and/or one or more inter-RAT frequency cells.

A wireless device 1720 may compare one or more measured qualities of one or more neighboring cells with a second threshold 1735 (e.g., Threshold 2). The wireless device 1720 may determine to select the neighboring cell (e.g., the second cell 1715 or the third cell 1705), for example, if a neighboring cell of the one or more neighboring cells is higher than the second threshold 1735 (e.g., Threshold 2). The wireless device 1720 may camp on the neighboring cell, for example, after selecting the neighboring cell. The neighboring cell may become a new serving cell and/or the serving cell may become a new neighboring cell, for example, after camping. The wireless device 1720 may determine whether to trigger/initiate a procedure, for example, based on camping on the neighboring cell (e.g., the new serving cell). The procedure may comprise at least one of a RRC procedure and/or a NAS procedure. The RRC procedure may comprise an RNA (RAN notification area) update procedure. The NAS procedure may comprise a registration procedure, a TA update procedure, and/or the like.

An RRC procedure may be triggered if the new serving cell belongs to a different RNA (RAN notification area), a different network, and/or the like than that of the old serving cell. The NAS procedure may be triggered if the new serving cell belongs to a different TA and/or a different network, and/or if the new serving cell of a TA of the new serving cell does not belong to a current RA (registration area).

A wireless device 1720 may determine whether it sends (e.g., transmit) a message to a network based on a procedure being triggered. The wireless device 1720 may determine whether a RATUCI may be stored for the network. The wireless device 1720 may determine whether a RAT/RAN/access technology/a core network associated with the new serving cell is restricted or not, for example, based on the RATUCI. The RATUCI may indicate that the second RAT is restricted, that the second access technology is restricted, and/or the like. The new serving cell may be the second cell 1715. The second cell 1715 may be associated (e.g., using, configured) with the second RAT. The wireless device 1720 may not be able to send (e.g., transmit) the message to the network via the second cell 1715, for example, based on the RATUCI and because the second RAT associated with the second cell 1715 is restricted.

A wireless device 1720 may measure one or more neighboring cells based on one or more messages received from a cell, and/or based on a quality of a serving cell. A wireless device 1720 may select a cell, among one or more neighboring cells, that the wireless device 1720 may not be allowed to use due to a RATUCI, for example, based on measuring the one or more neighboring cells. This may lead to inefficient use of a battery of the wireless device 1720, because the wireless device 1720 consumes a power to measure the cell that may not provide any services to the wireless device 1720. In another potential implementation, this may also lead the wireless device 1720 selecting a new cell which the wireless device 1720 may not be allowed to use and starting a new search for another cell because the wireless device 1720 is not allowed to use the cell. This may cause longer service interruption time, because the wireless device 1720 may need to perform several rounds of cell selection, until the wireless device 1720 finds a relevant cell in which the wireless device 1720 can get a data service.

Ideas described herein may solve the above issues. A wireless device 1720 may determine whether to perform a measurement of a frequency of the one or more frequencies based on one or more restricted RATs and/or one or more priorities of one or more frequencies. A wireless device 1720 may determine whether a candidate frequency is associated with a RAT which is restricted, and may determine whether to measure the candidate frequency. A wireless device 1720 may check whether a RAT of a highest priority frequency is restricted or not, and determine whether to perform a measurement of the highest priority frequency. A wireless device 1720 may check whether a RAT of a lower priority frequency is restricted or not, and determine whether to perform a measurement of the lower priority frequency. A wireless device 1720 may check whether a cell is suitable or not, and determine whether to perform a measurement of the lower priority frequency, based on whether a RAT of the cell is restricted or not. This may help to reduce unnecessary waste of battery consumption. The wireless device 1720 may perform a ranking of one or more candidate cells and remove one or more cells of restricted RAT from the one or more candidate cells. A wireless device 1720 may determine whether a cell may be suitable or not, and determine whether to determine/consider the cell for a ranking procedure or not, based on whether a RAT of the cell is restricted or not. A wireless device 1720 may determine whether a cell may be suitable or not, and determine whether to determine/consider the cell as a candidate cell or not, based on whether a RAT of the cell is restricted or not. These acts may help prevent a wireless device 1720 from selecting a cell that does not give access to the wireless device 1720. A wireless device 1720 may determine/consider whether a highest ranked cell may be associated with a RAT that is restricted, and may determine whether to determine/consider one or more cells of the frequency of the highest ranked cell as barred or not. A wireless device 1720 may determine whether a cell is barred or not, based on whether a RAT of the cell may be associated with a restricted RAT or not. The wireless device 1720 may determine to not determine/consider the cell as a candidate cell if a cell is barred because a RAT of the cell is restricted. This may help a wireless device 1720 avoid selecting an unallowed cell. A wireless device 1720 may determine whether to use a sidelink communication over a RAT, based on whether the RAT is restricted or not. This may help prevent the wireless device 1720 from causing interference on the RAT, if the wireless device 1720 uses a resource over the RAT. A wireless device 1720 may determine to use a sidelink communication over a RAT, based on whether the RAT is restricted or not. This may help the wireless device 1720 support continuity of a prioritized service.

Throughout the disclosure, the term "network system" may be interpreted as, or may refer to, a system, a communication system, and/or a generation of the communication system. one or more network systems may comprise an EPS, a 5GS, a 6th generation (6G) system, and/or the like. A first network system may be the EPS. The EPS may comprise of one or more wireless devices, one or more eNB, one or more en-gNBs, one or more base stations, and/or one or more EPCs. The one or more EPCs may comprise a MME, a SGW, a PGW (e.g., a PGW-C+SMF, a PGW-U+UPF), HSS, PCRF, and/or the like. A second network system may be the 5GS. The 5GS may comprise of one or more wireless devices, one or more base station (e.g., gNB), one or more ng-eNBs, one or more 5G core networks. The one or more 5G core networks may comprise one or more core network nodes. The one or more core network nodes may comprise an AMF, a SMF, a PCF, a UPF, a UDM, a NEF, and/or the like. In some embodiments, a core network node may be a combination of one or more core network nodes of one or more core networks. A SMF+PGW-C (e.g., PGW-C+SMF) may act as both a SMF and a PGW (e.g., PGW-C). A SMF may act as a 5G core network node and a 6G core network node. A third network system may be a 6th generation (6G) system (6GS). The 6GS may comprise of one or more wireless devices, one or more 6G-RAN (e.g., a radio access network node of 6G system), one or more 6GS base stations (e.g., gNBs), one or more 6G core networks. The one or more 6G core networks may comprise one or more 6G core network nodes (e.g., 6G core network functions). Each of the one or more core network nodes may support (implement) one or more functions (or services) provided by each of the one or more 5G core network nodes. A node of the 6GS may perform a function of a radio access network and/or one or more roles performed by one or more 6G core network nodes (or by 5G core network nodes).

Throughout the disclosure, the term "5G System" may be interpreted as, or may refer to, a 3GPP system consisting of at least one of 5G access network (or NG-RAN), 5G core network and/or a wireless device.

Throughout the disclosure, the term "EPS" may be interpreted as, or may refer to, a 3GPP system consisting of at least one of EPC, E-UTRAN and/or a wireless device.

Throughout the disclosure, the term "network node" may be interpreted as, or may refer to, at least one of a core network node, an access node, a base station, a wireless device 1720, the like, and/or a combination thereof. A network may comprise one or more network nodes.

Throughout the disclosure, the term "core network node" may be interpreted as, or may refer to, a core network device, which may comprise at least one of an AMF, a SMF, a NSSF, a UPF, a NRF a UDM, a PCF, a SoR-AF, an AF, an DDNMF, an MB-SMF, an MB-UPF, a MME, a SGW, a PGW, a SMF+PGW-C, a SMF+PGW-U, a UDM+HSS and/or the like. The core network node may be a 5G core network node, a 6G core network node, a 4G core network node, the likes, and/or a combination thereof. One or more names may be used by a core network node. A function performed by a first core network node of 5GS may be performed by a second core network node of 6GS.

Throughout the disclosure, the term "5G core network" may be interpreted as, or may refer to, a core network connecting to a 5G access network. This may be 5G core (5GC).

Throughout this disclosure, the term "5G access network" may refer to, an access network comprising at least one of a NG-RAN and/or non-3GPP AN, and connecting to a 5G core network. The term "5G core network" may refer to, a core network connecting to a 5G access network. This may be 5G core (5GC).

Throughout this disclosure, the term "3GPP RAN" may refer to a radio access network using 3GPP RAT. For example, this may comprise at least one base station, such as a gNB, an eNB, a ng-eNB, an en-gNB, the like, and/or a combination thereof. For example, this may be at least one of an E-UTRAN, NG-RAN, the like, and/or a combination thereof. The term "3GPP RAT" may refer to a radio access technology based on 3rd generation partnership (3GPP) project. For example, this may comprise at least one of a NR, a E-UTRA, UTRA, GSM, the like, and/or a combination thereof.

Throughout this disclosure, the term "NG-RAN" may refer to a base station, which may comprise at least one of a base station/gNB/ng-eNB, a relay node, a base station central unit (e.g., gNB-CU), a base station distributed unit (e.g., gNB-DU), and/or the like. This may be a radio access network that connects to 5GC, supporting at least one of NR, E-UTRA, and/or a combination thereof.

Throughout this disclosure, the term "E-UTRAN" may refer to a base station, which may comprise at least one base station such as an eNB, an en-gNB, and/or the like. This may be a radio access network that connects to evolved packet core (EPC), supporting at least one of NR, E-UTRA, and/or a combination thereof.

Throughout this disclosure, the term "mobility management node" may refer to, a function and/or a node performing mobility management for a wireless device (e.g., UE). Mobility management may be at least one of management of registration status, management of context, management of authorization, management of registration area, management of paging, and/or the like. The mobility management node may comprise at least one of a MME, AMF, and/or the like.

Throughout the disclosure, a term "procedure" may be interpreted as, or may refer to, comprising sending by a first node to a second node a first message, receiving by the second node from the first node the first message, sending by the second node to the first node a second message, and/or receiving by the first node from the second node the second message. The first node may be one or more first network nodes, and the second node may be a one or more second network nodes. The procedure may comprise a registration procedure, a deregistration procedure, a service request procedure, a notification procedure, a PDU session establishment procedure, a PDU session modification procedure, a wireless device 1720 configuration update procedure, a cell selection procedure, a cell reselection procedure, a random access procedure, a capability update procedure, and/or the like.

Throughout the disclosure, a term "NAS message" may be interpreted as, or may refer to, a message exchanged between a wireless device 1720 and a core network node. The NAS message may be exchanged via a 3GPP access and/or via a N3GPP access. The NAS message may comprise a MM (mobility management) message, a SM (session management) message, and/or the like. The MM message may comprise a registration request message, a registration accept message, a registration reject message, a wireless device 1720 configuration update message, a UL NAS transport message, a DL NAS transport message, a deregistration message, a service request message, a service accept message, a service reject message, a PDU session establishment request message, a PDU session establishment accept message, a PDU session establishment reject message, a PDU session modification request message, a PDU session modification accept message, a PDU session modification reject message, a PDU session modification command message, a PDU session release request message, a PDU session release command message, and/or the like.

A timer may begin running and continue running until it is stopped or until it expires. A timer may be started if it is not running or restarted if it is running. A timer may be associated with a value (e.g., the timer may be started or restarted from a value or may be started from zero and expire at the time it reaches the value). The duration of a timer may not be updated until the timer is stopped or expires (e.g., due to change of the value). A timer may be used to measure a time period/window for a process. It is understood that there may be multiple ways to implement the one or more timers if the specification refers to an implementation and procedure related to one or more timers. It will be understood that one or more of the multiple ways to implement a timer may be used to measure a time period/window for the procedure. A network slice inactivity window timer (e.g., a NS UE monitoring timer, a NS PDU monitoring timer) may be used for measuring a window of time for measuring the network slice inactivity. Instead of starting and expiry of a network slice inactivity window timer, the time difference between two time stamps may be used. A process for measurement of time window may be restarted if a timer is restarted. Other example implementations may be provided to restart a measurement of a time window.

An indication (e.g., indicate, indicating) may be achieved in various ways. A first indication may be done by including a first field in a first signaling (e.g., a message). Alternatively, and/or additionally, a second indication may be done by not including the first field in the first signaling. The first indication (e.g., a timer may be used) may be shared (e.g., achieved, sent, informed, etc.), for example, if a first message comprises the first field (e.g., used and/or assigned for the first indication, e.g., field A). A third indication (e.g., timer value is value A) may be shared, for example, if the first field in the first message is set to a value A. The second indication (e.g., timer is not used) may be shared, for example, if the first message does not comprise the first field. A fourth indication (e.g., a wireless device is allowed for action C) may be shared by sending a second signaling (e.g., a message whose name comprises 'C' and/or 'accept'). Alternatively, and/or additionally, a fifth indication (e.g., a wireless device is not allowed for action C) may be shared by not sending the second signaling (e.g., a message, a field (e.g., allowed bit)). The sender may indicate A, for example, by sending a message A1 comprising an indicator (e.g., an information element) indicating A and/or by sending a message A2. The message A2 may be used only to indicate A and/or the message A2 itself may indicate the A. The first entity may send (e.g., transmit) to the second entity, an indicator (e.g., an information element) indicating the first something, and/or may send (e.g., transmit) to the second entity, a message comprising the indicator and/or may send (e.g., transmit) a first dedicated message for the first something, for example, if a first entity indicates to a second entity about a first something. The first entity may not send (e.g., transmit) to the second entity, a first indicator (e.g., an information element) indicating the second something, may not send (e.g., transmit) to the second entity, a message comprising the first indicator, and/or may send (e.g., transmit) to the second entity, a second indicator indicating that the second something does not use, and/or may send (e.g., transmit) a message not comprising the first indicator, and/or may send (e.g., transmit) to the second entity, a second dedicated message for indicating the second something if a first entity does not indicate to a second entity about second something. 'Not sending any message' may be interpreted as an indication. 'Indicate' may mean 'comprise one or more parameter indicating.' An indicator and/or an indication may be a parameter. An indicator and/or an indication may comprise one or more parameters, and/or may be implemented using one or more parameters. 'Based on a message (one or more messages)' may be interpreted, or may refer to, as, 'based on one or more information (one or more parameters) included in the message (the one or more messages)', 'using (acting) on one or more information (one or more parameters) included in the message (the one or more messages)', and/or the like. That a message indicates A may be interpreted as that a parameter of the message indicates A, that the parameter of the message is A, and/or the like.

Throughout the disclosure, "protocol entity" may be interpreted, or may refer to, as an entity performing a set of specific functions related to a wireless access (e.g., LTE access, NR access) and/or a wireline access (e.g., Ethernet) and/or communication (e.g., TCP, IP). An entity (or a layer) may be interpreted as a protocol entity (or a protocol layer). The protocol entity of LTE and/or NR may be at least one of a SDAP entity, a PDCP entity, a RLC entity, a MAC entity, a RRC entity, a NAS entity, and/or a PHY entity. A layer (e.g., a SDAP layer, a PDCP layer, a RLC layer, a MAC layer a PHY layer, a RRC layer, a NAS layer) may be interpreted as a protocol entity (e.g., SDAP entity, a PDCP entity, a RLC entity, a MAC entity, a PHY entity, a RRC entity, a NAS entity).

Throughout the disclosure, "RAT utilization control information" may be interpreted, or may refer to, as an information that a network operator may use to restrict UE/subscriber's access to certain access technologies. A network (of the network operator) may send (e.g., transmit) the RAT utilization control information for a current network. The current network may be a current PLMN, equivalent PLMN(s), a NPN (non-public network), a SNPN (standalone NPN), and/or the like. A core network node of the network may send (e.g., transmit) a NAS message comprising the RAT utilization control information (RATUCI) to a wireless device 1720. The NAS message may be at least one of an ATTACH ACCEPT, ATTACH REJECT, TAU ACCEPT, TAU REJECT, GUTI ALLOCATION, DETACH REQUEST, SERVICE ACCEPT, SERVICE REJECT, REGISTRATION ACCEPT, REGISISTRATION REJECT, UE CONFIGURATION UPDATE COMMAND, DEREGISTRATION REQUEST, and/or the like. Each RATUCI of one or more RATUCIs may be associated with each network of one or more networks. Different networks may restrict different access technologies. A first network may use restriction of different or same access technologies to different wireless devices. In one or more examples, access technology may be interpreted as a RAT, a RAN, a core network, a system. The wireless device 1720 may store the RATUCI with an identity of the network from which the RATUCI is received. RATUCI may be a RAT utilization information if the wireless device 1720 receives the RATUCI.

The RATUCI, associated with (linked to) the network, for the wireless device 1720, may comprise at least one of:
- whether a GERAN and/or GSM of the network is restricted or not to the wireless device;
- whether a UTRAN and/or WCDMA of the network is restricted or not to the wireless device;
- whether a E-UTRAN and/or EUTRA of the network is restricted or not to the wireless device;
- whether a NG-RAN and/or NR of the network is restricted or not to the wireless device;
- whether a 6G-RAN and/or 6GR of the network is restricted or not to the wireless device; and
- whether a 7G-RAN (7th generation RAN) and/or 7GR (7th generation RAT/radio) of the network is restricted or not to the wireless device 1720.

Throughout the disclosure, "RAT" may be interpreted, or may refer to a radio interface technology used for a wireless device 1720. one or more RATs may comprise a GSM, a WCDMA, a EUTRA, a NR, a 6GR, a 7GR, and/or the like. The RAT may be interpreted as, or may refer to, as a transmission technology used in the access network for 3GPP accesses and/or for non-3GPP accesses. The RAT may refer to technology used over Uu interface, PC5 (sidelink) interface, and/or the like. In one or more example, the RAT may be interpreted as, may be interpreted as indicating, and/or may be interpreted as indicating association to, an access technology, a RAN, a core network, a system, and/or the like.

Throughout the disclosure, "access technology" may be interpreted, or may refer to, a radio access used to search one or more networks/cells, select one or more networks/cells, access one or more networks/cells, communicate with one or more networks/cells and/or like. The radio access may be associated with a RAN, a RAT, a core network, a system, and/or the like. A type of access network and/or a type of radio access may indicate at least one of a type of RAN, a type of RAT, a type of core network, a type of system, and/or the like. The access technology may be associated with a network. The network may be a PLMN, a NPN, a SNPN, and/or the like. A wireless device 1720 may use information of the access technology to determine what type(s) of radio carrier (e.g., frequency) to search for if attempting to select a network, and/or what type(s) or RAT to search/use, and/or the like. Examples of access technologies include GSM, UTRAN, GSM COMPACT, EC-GSM-IoT, cdma2000 1xRTT, cdma2000 HRPD, E-UTRAN (WB-S1 mode and NB-S1 mode), NG-RAN, satellite NG-RAN and satellite E-UTRAN (WB-S1 mode and NB-S1 mode), a 6G RAN, a 7G RAN, and/or the like. A network (e.g., a PLMN, an NPN) may support, deploy, and/or use more than one access technology. Access technology "E-UTRAN" may map to a core network type "EPC" and access technology "NG-RAN" may map to a core network type "5GCN". EPC may be Evolved Packet Core. A 5GCN may be a 5G core network and/or 5G core (5GC).

Throughout the disclosure, "reselection priority" may be interpreted as, or may refer to, priority of one or more cells and/or a priority of a frequency, and/or the like. A first reselection priority may be set or indicated for a first frequency and/or a second reselection priority may be set or indicated for a second frequency. The wireless device 1720 may use a third reselection priority of the third frequency to determine whether to perform a measurement of neighboring frequency, if a wireless device 1720 camps on a serving cell of a third frequency. The neighboring frequency may comprise one or more frequencies different from the third frequency of the serving cell that the wireless device 1720 camps on. The third frequency may be a serving frequency. The one or more neighboring frequencies may comprise the first frequency and/or the second frequency. One or more RATs associated with the one or more neighboring frequencies may and/or may not be a RAT of the serving frequency. The first frequency may be an inter-RAT frequency if a first RAT of a first neighboring frequency is not a RAT of the serving frequency. The second frequency may be an intra-RAT frequency, inter-frequency, and/or the like, if a second RAT of a second neighboring frequency is the RAT of the serving frequency. According to the one or more reselection priorities, the wireless device 1720 may measure and/or search a frequency and/or a cell of the frequency. The wireless device 1720 may measure (one or more cells of) the fifth frequency, before the wireless device 1720 may measure (one or more cells of) the fourth frequency, for example, if a fifth reselection priority of a fifth frequency is higher than a fourth reselection priority of a fourth frequency. The reselection priority may be cellReselectionPriority.

Throughout the disclosure, "sidelink/prose" may be interpreted, or may refer to, as direct interface between one or more wireless device 1720 without traversing a network node. A transmission may be a sidelink transmission, for example, if a first wireless device sends (e.g., transmits) a signal directly to one or more second wireless devices. The transmission may not be a sidelink, for example, if the first wireless device sends (e.g., transmits) a second signal to a base station. A first radio interface among one or more wireless devices may be a sidelink interface, a PC5 interface, a Prose interface, and/or the like. A second radio interface between a wireless device and a base station may be a Uu interface and/or the like.

Throughout the disclosure, "barred" may be interfered, or may refer to, as not allowed, prevented, restricted, and/or the like.

Throughout the disclosure, "not served by a RAN" may be interpreted, or may refer to, as the RAN being not available. The wireless device may be determined/considered as not served by a second RAN, for example, if a wireless device is served by a first RAN. The wireless device may be determined/considered as not served by the second RAN and/or the wireless device may be determined/considered as served by the first RAN, for example, if the wireless device is connected to the first RAN (e.g., E-UTRAN) and/or via a first RAT (e.g., E-UTRA) and if the wireless device is not connected to the second RAN (e.g., NG-RAN) and/or via a second RAT (e.g., NR). The wireless device may be not be served by the second RAN if the wireless device is out of coverage of the second RAN and/or if the wireless device cannot find a cell of the second RAN. The wireless device may not be served by the second RAN if the wireless device is not registered via the second RAN and/or if a registration via the second RAN is rejected.

Throughout the disclosure, "resource pool" may be interpreted, or may refer to, as one or more frequencies and/or one or more radio resources. A first resource pool for a sidelink communication may be one or more radio resources configured for the sidelink communication.

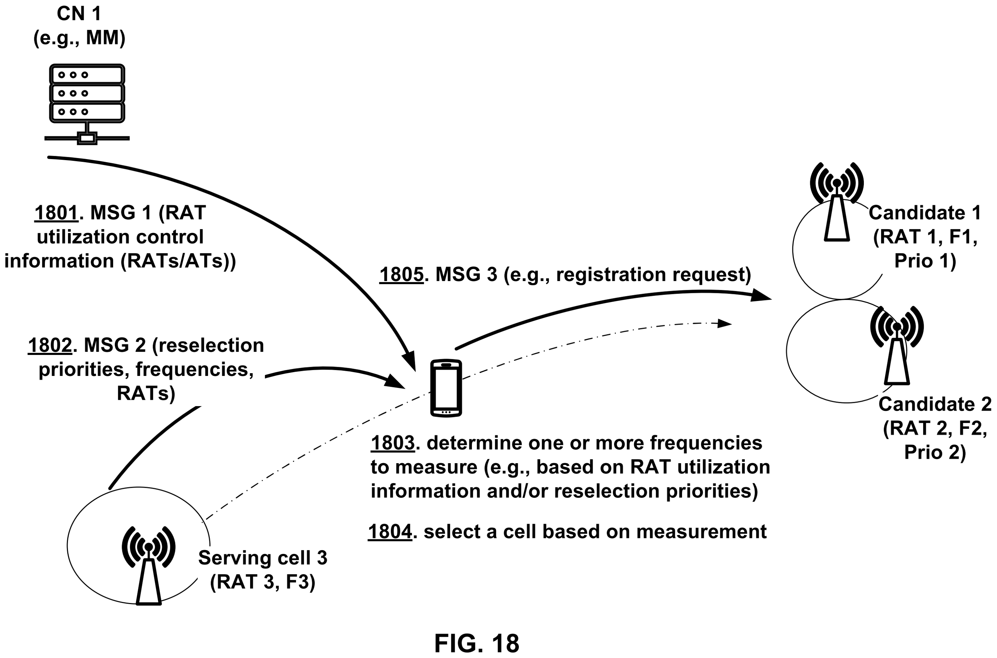

FIG. 18 shows an example of a wireless device receiving control information and determining frequencies to measure based on the control information. Specifically, FIG. 18 shows an example of a wireless device avoiding performing a measurement of an unavailable frequency. At step 1801, a wireless device may receive a first message. The first message may comprise control information. A wireless device may receive a RATUCI from a network. The wireless device may receive information of one or more frequencies. The wireless device may determine whether to measure a frequency, of the one or more frequencies based on the RATUCI. This may help the wireless device to efficiently use a battery of the wireless device, by reducing unnecessary measurements of the frequency. For brevity, based on the other part of the present disclosure, redundant details will be omitted.

A wireless device may receive a first message from a core network node of a network. The wireless device may receive the first message via a first RAT, from a first RAN, and/or the like. The network may be a first network, and/or associated with a first network operator. The first RAT may be a first access technology.

The first message may be a NAS message. The first message may be at least one of an ATTACH ACCEPT, ATTACH REJECT, TAU ACCEPT, TAU REJECT, GUTI ALLOCATION, DETACH REQUEST, SERVICE ACCEPT, SERVICE REJECT, REGISTRATION ACCEPT, REGISISTRATION REJECT, UE CONFIGURATION UPDATE COMMAND, DEREGISTRATION REQUEST, a 6G registration accept, a 6G registration reject, and/or the like.

The first message may comprise at least a RATUCI. The RATUCI may indicate that one or more first access technologies are not restricted and/or that one or more second access technologies are restricted. The one or more first access technologies may be one or more first RATs. The one or more second access technologies may be one or more second RATs. The one or more first access technologies may comprise the first access technology and/or the first RAT and/or a third access technology and/or a third RAT. The one or more second access technologies may comprise the second access technology and/or the second RAT. The wireless device may store the RATUCI in a memory and/or with an identifier of the network from which the RATUCI is received. The core network node may be at least one of a MME, an AMF, a 6GMF (e.g., 6G mobility management function), and/or the like.

At step 1802, a wireless device may receive one or more second messages from a base station of the network. The wireless device may receive the one or more second messages via the first RAT and/or via the third RAT, from the first RAN and/or a third RAN, and/or the like. The wireless device may receive the one or more second messages from a serving cell. The third RAT may be a third access technology. The third RAN may operate and/or use the third RAT, and/or operate a cell of the third RAT. The wireless device may receive the one or more second messages, from a third cell 1705 where the wireless device camps on. The third cell 1705 may use at least one of the one or more first access technologies. The third cell 1705 may be a serving cell (a first serving cell) for the wireless device.

One or more second message may be one or more RRC messages. The one or more RRC messages may be one or more system information blocks. The one or more system information blocks may comprise at least one of a SIB 1, a SIB 2, a SIB 3, a SIB 4, a SIB 5, and/or the like.

One or more second messages may comprise one or more second parameters associated with cell selection. The cell selection may be a cell reselection. The one or more second parameters may comprise at least one of:
- cellReselectionServingFreqInfo: This may comprise at least one of s-NonIntraSearchP, s-NonIntraSearchQ, threshServingLowP, threshServingLowQ, cellReselectionPriority, CellReselectionSubPriority, and/or the like. This may be an Information common for non-intra-frequency cell re-selection (i.e. Cell re-selection to inter-frequency and inter-RAT cells).
- intraFreqCellReselectionInfo: This may comprise at least one of s-IntraSearchP, s-IntraSearchQ, frequencyBandList, and/or the like. This may be an information for intra-frequency cells.
- intraFreqNeighCellList: This may be a list of intra-frequency neighboring cells.
- intraFreqExcludedCellList: This may be a list of excluded intra-frequency neighboring cells.
- intraFreqAllowedCellList: This may be a list of allowed intra-frequency neighboring cells.
- for each cell in intraFreqNeighCellList, intraFreqExcludedCellList, intraFreqAllowedCellList, at least one of physCellId, q-OffsetCell, q-RxLevMinOffsetCell, q-QualMinOffsetCell, and/or the like.
- interFreqCarrierFreqList: This may be a list of InterFreqCarrierFreqInfo. Each InterFreqCarrierFreqInfo may comprise at least one of dl-CarrierFreq, frequencyBandList, q-RxLevMin, q-QualMin, p-Max, threshX-HighP, threshX-LowP, threshX-Q, cellReselectionPriority, q-OffsetFreq, interFreqNeighCellList, InterFreqExcludedList, and/or the like.
- carrierFreqList. This may be at least one of carrierFreqListEUTRA, carrierFreqList6GR, carrierFreqListUTRA, CarrierFreqGSM, carrierFreqList7GR, and/or the like. carrierFreqListEUTRA may comprise information of one or more frequencies of the EUTRA. CarrierFreqList6GR may comprise information of one or more frequencies of the 6GR. CarrierFreqListUTRA may comprise information of one or more frequencies of the UTRA (WCDMA). CarrierFreqList7GR may comprise information of one or more frequencies of the 7GR (7^{th} generation radio). Each entry of the carrierFreqList, for a RAT, may comprise at least one of carrierFreq, FreqNeighCellList, ExcludedCellList, cellReselectionPriority, threshX-High, threshX-Low, q-RxLevMin, q-QualMin, threshX-Q, and/or the like.

One or more second parameters may indicate one or more neighboring frequencies. The one or more second parameters may indicate, for each neighboring frequency of the one or more neighboring frequencies, at least one of:
- whether each neighboring frequency is an intra-frequency, an inter-frequency, an inter-RAT frequency, and/or the like.
- a downlink carrier frequency of each neighboring frequency.
- a list of one or more cells on each neighboring frequency. A PCI of each cell can be indicated, for example, for each cell, in the list.
- a reselection priority of each neighboring frequency.

One or more second parameters may indicate:
- that a first neighboring frequency, of the one or more neighboring frequencies, may be configured for (e.g., operates) the first RAT (or the third RAT);
- a first downlink carrier frequency of the first neighboring frequency (e.g., F1 MHz);
- a first reselection priority of the first neighboring frequency (e.g., priority =1, value = 1);
- that a second neighboring frequency, of the one or more neighboring frequencies, may be configured for (e.g., operates) the second RAT;
- a second downlink carrier frequency of the second neighboring frequency (e.g., F2 MHz);
- a second reselection priority of the second neighboring frequency (e.g., priority =2, value = 3); and/or
- a third reselection priority of the serving frequency (e.g., priority = 3, value =2). These may indicate reselection priority of the serving cell and/or the serving frequency.

A wireless device may perform a measurement of a serving cell (e.g., the third cell). The measurement of the serving cell may be a measurement of the serving frequency. The serving frequency may be the frequency of the serving cell. The measurement of the serving frequency may be the intra-frequency measurement. The wireless device may measure one or more intra-frequency cells for the intra-frequency measurement. The wireless device may measure one or more quality metrics of the serving cell for the measurement of the serving cell. The wireless device may measure RSRP and/or RSRQ and/or RSSI of the serving cell, for example, for the measurement of the serving cell. The wireless device may determine Srxlev and/or Squal of the serving cell, for example, after and/or based on performing the measurement of the serving cell.

A wireless device may determine whether a first condition may be met or not. The first condition may be whether the serving cell meets a first quality criterion. The first condition may be whether the Srxlev is larger (e.g., higher, greater, etc.) than the S-IntraSearchP and/or whether the Squal is larger (e.g., higher, greater, etc.) than the S-IntraSearchQ.

A wireless device may determine whether to perform intra-frequency measurement or not, based on whether the first condition is met or not. The wireless device may determine not to perform intra-frequency measurement, for example, if the first condition is met. The intra-frequency measurement may be measuring one or more cells using the same frequency as the serving cell. The wireless device may determine to perform the intra-frequency measurement, if the first condition is not met.

A wireless device may determine whether to perform inter-RAT frequencies measurement or not, based on whether one or more second conditions may be met or not. The wireless device may determine whether to perform an inter-RAT frequency measurement for each inter-RAT frequency, for example, for each inter-RAT frequency, of one or more inter-RAT frequencies indicated by the one or more second messages, based on whether the one or more second conditions may be met or not.

One or more second conditions may be based on one or more reselection priorities of one or more inter-RAT frequencies, a reselection priority of a serving frequency, one or more frequencies indicated by the one or more second messages, and/or based on the RATUCI. The one or more second conditions may comprise at least one of:
- whether a reselection priority of each inter-RAT frequency may be higher than a reselection priority of a current frequency. A current frequency may be the serving frequency, a frequency of the serving cell, or the like.
- whether the reselection priority of each inter-RAT frequency may be lower than or equal to the reselection priority of the current frequency. The current frequency may be the serving frequency, the frequency of the serving cell, or the like.
- whether a RAT of each inter-RAT frequency may not be restricted by the RATUCI. The RAT of each inter-RAT frequency is restricted, for example, if the RATUCI indicates that RAT X is restricted and if the RAT of each inter-RAT frequency is the RAT X. The RAT of each inter-RAT frequency may not be restricted, for example, if the RATUCI indicates that RAT X is restricted, and if the RAT of each inter-RAT frequency is a RAT Y. The RAT of each inter-RAT frequency may not be restricted, for example, if the RATUCI indicates that RAT Y is not restricted, and if the RAT of each inter-RAT frequency is a RAT Y. The RAT of each inter-RAT frequency may not be restricted, for example, if the wireless device does not receive the RATUCI and/or if the wireless device does not have a stored RATUCI.
- whether a RAT of each inter-RAT frequency may be at least one of the one or more first RATs. The RATUCI may indicate that the one or more first RATs may be restricted.
- whether a RAT of each inter-RAT frequency may be at least one of the one or more second RATs. The RATUCI may indicate that the one or more second RATs may not be restricted.
- whether a RAT of each inter-RAT frequency may not be one of the one or more first RATs. The RATUCI may indicate that the one or more first RATs may be restricted.
- whether a RAT of each inter-RAT frequency may not be one of the one or more second RATs. The RATUCI may indicate that the one or more second RATs may not be restricted.
- whether a measured quality of the serving cell may be higher than one or more thresholds.

A wireless device may determine that one or more second conditions may be met for a first candidate inter-RAT frequency (e.g., each inter-RAT frequency) if at least one of the following occurs:
- A RATUCI received from a network and/or stored RATUCI may be available for the network, and that the RATUCI and/or the stored RATUCI may indicate that a first candidate RAT of the first candidate inter-RAT frequency may not be restricted. The first candidate inter-RAT frequency may be restricted, for example, if the RATUCI indicates that EUTRAN/EUTRA is restricted and if the first candidate RAT uses the EUTRAN/EUTRA. The wireless device may determine that the first candidate inter-RAT frequency may be restricted, for example, if the RATUCI indicates that EUTRAN/EUTRA is restricted and if the one or more second messages indicates that the first candidate inter-RAT frequency is for the EUTRAN/EUTRA. The first candidate inter-RAT frequency may not be restricted, for example, if RATUCI indicates that EUTRAN/EUTRA is not restricted and if the first candidate RAT uses the EUTRAN/EUTRA. The wireless device nay determine that the first candidate inter-RAT frequency may not be restricted, for example, if RATUCI indicates that EUTRAN/EUTRA is not restricted and if the one or more second messages indicates that the first candidate inter-RAT frequency is for the EUTRAN/EUTRA.
- A first reselection priority of a first candidate inter-RAT frequency may be higher than a second reselection priority of a serving frequency (e.g., current frequency), and/or the RATUCI (e.g., received from the network and/or stored in the wireless device) may indicate that the first candidate RAT of the first candidate inter-RAT frequency may not be restricted. The first reselection priority may indicate a first value and/or the second reselection priority may indicate a second value. The first reselection priority may have higher priority than the second reselection priority, for example, if the first value (e.g., 1) is lower than the second value (e.g., 2). The first reselection priority may be of lower priority than the second reselection priority, for example, if the first value (e.g., 4) is higher than the second value (e.g., 2).
- A first reselection priority of a first candidate inter-RAT frequency may be lower than or equal to a second reselection priority of a serving frequency (e.g., current frequency), a measured quality of serving cell may not meet a requirement (e.g., for the serving cell, Srxlev may be lower than (and/or equal to) S-nonIntraSearchP and/or Squal may be lower than (and/or equal to) S-nonIntraSearchQ) and/or the RATUCI (e.g., received from a network and/or stored in a wireless device) may indicate that the first candidate RAT of the first candidate inter-RAT frequency may not be restricted. The first reselection priority may indicate a first value and/or the second reselection priority may indicate a second value. The first reselection priority may have a higher priority than the second reselection priority, for example, if the first value (e.g., 1) is lower than the second value (e.g., 2). The first reselection priority may be of lower priority than the second reselection priority, for example, if the first value (e.g., 4) is higher than the second value (e.g., 2).
- A RAT of a first candidate inter-RAT frequency may not be one of the one or more RATs that may be indicated as restricted, by RATUCI. The RATUCI may indicate that a second RAT may be restricted. The RATUCI may indicate that the first RAT may not be restricted. A RAT of the first candidate inter-RAT frequency may not be the second RAT, and/or the RAT of the first candidate inter-RAT frequency may be the first RAT.

A wireless device may determine to perform a measurement of each inter-RAT frequency, based on determining whether the one or more second conditions are met or not, for each inter-RAT frequency. The wireless device may determine to perform the measurement of each inter-RAT frequency, for example, if the one or more second conditions are met for each inter-RAT frequency. For example, if the one or more second conditions are not met for each inter-RAT frequency, the wireless device may determine not to perform the measurement of each inter-RAT frequency.

A wireless device may determine to measure each inter-RAT frequency, for example, if a RAT of each inter-RAT frequency is not one of the one or more restricted RATs indicated as restricted by the RATUCI. The wireless device may determine to measure each inter-RAT frequency, for example, if the one or more restricted RATs indicated as restricted by the RATUCI does not comprise the RAT of each inter-RAT frequency. The wireless device may determine to measure each inter-RAT frequency, for example, if the one or more RATs not indicated as restricted by the RATUCI comprise the RAT of each inter-RAT frequency. The wireless device may determine to measure each inter-RAT frequency, for example, if the one or more RATs indicated as restricted by the RATUCI do not comprise the RAT of each inter-RAT frequency.

A first candidate inter-RAT frequency may not be restricted, for example, if the RATUCI indicates that EUTRAN/EUTRA is not restricted and if the first candidate RAT uses the EUTRAN/EUTRA. The wireless device may determine that the first candidate inter-RAT frequency may be restricted, for example, if RATUCI indicates that EUTRAN/EUTRA is restricted and if the one or more second messages indicates that the first candidate inter-RAT frequency is for the EUTRAN/EUTRA. The first candidate inter-RAT frequency may not be restricted, for example, if RATUCI indicates that NGRAN/NR is not restricted and if the first candidate RAT uses the NGRAN/NR. The wireless device determines that the first candidate inter-RAT frequency is restricted, for example, if RATUCI indicates that NGRAN/NR is restricted and if the one or more second messages indicates that the first candidate inter-RAT frequency is for the NGRAN/NR.

A second cell 1715 may operate on a second neighboring frequency. The second cell 1715 may be configured, may use the second RAT (second access technology), and/or may be associated with the second RAN, second core network, second system, and/or the like. A first cell 1710 may operate on a first neighboring frequency. The first cell 1710 may be configured, may use the first RAT (first access technology), and/or may be associated with the first RAN, first core network, second system, and/or the like.

A wireless device may determine whether there may be an inter-RAT frequency with higher priority than the serving frequency based on the one or more second parameters and/or the one or more second messages. The wireless device may determine whether priority of the first neighboring frequency may be higher than the priority of the serving frequency, for example, for the first neighboring frequency and based on the third reselection priority of the serving frequency and/or based on the first reselection priority of the first neighboring frequency. A first RAT of the first neighboring frequency may be different from a RAT of the serving frequency. The RAT and/or the first RAT may be of a 3GPP RAT and/or may not be a WIFI. The wireless device may determine that the first neighboring frequency is of higher priority, for example, based on that a value (e.g., 1) of the first neighboring frequency is lower than a value (e.g., 2) of the serving frequency.

A wireless device may determine whether priority of a first neighboring frequency may be higher than a priority of a serving frequency, for example, for a first neighboring frequency and based on a third reselection priority of a serving frequency and/or based on the first reselection priority of the first neighboring frequency. The first RAT of the first neighboring frequency may be different from a RAT of the serving frequency. The RAT and/or the first RAT may be of a 3GPP RAT and/or may not be a WIFI. The wireless device may determine that the first neighboring frequency is of higher priority, for example, based on that a value (e.g., 1) of the first neighboring frequency is lower than a value (e.g., 2) of the serving frequency. The wireless device may determine that the first neighboring frequency may be of lower priority, for example, based on a value (e.g., 4) of the first neighboring frequency being higher than a value (e.g., 2) of the serving frequency.

A wireless device may determine whether a first RAT of a first neighboring frequency may be restricted or not, for example, for the first neighboring frequency and based on the RATUCI. The wireless device may determine that the first neighboring frequency may not be restricted and/or that the first RAT of the first neighboring frequency may not be restricted, for example, because the RATUCI indicates that the first RAT is not restricted. The wireless device may determine to perform a measurement of the first neighboring frequency and/or may determine to perform a measurement of the second cell of the second neighboring frequency based on that the first neighboring frequency is of higher priority than the serving frequency and/or based on that the first RAT of the first neighboring frequency is not restricted by the RATUCI.

Alternatively, and/or additionally, a wireless device may determine that a first neighboring frequency may be restricted and/or that a first RAT of a first neighboring frequency may be restricted, for example, if the RATUCI indicates that the first RAT is restricted. The wireless device may determine not to perform a measurement of the first neighboring frequency and/or may determine not to perform a measurement of the first cell 1710 of the first neighboring frequency, in this case, based on that the first neighboring frequency is of higher priority than the serving frequency and/or based on that the first RAT of the first neighboring frequency is restricted by the RATUCI.

A wireless device may determine whether there is an inter-RAT frequency to measure based on the one or more second parameters and/or the one or more second messages. The wireless device may determine whether priority of a second neighboring frequency may be lower than or equal to a priority of the serving frequency, for example, for the second neighboring frequency, based on the third reselection priority of the serving frequency and/or based on the second reselection priority of the second neighboring frequency. The second RAT of the second neighboring frequency may be different from a RAT of the serving frequency. The RAT and/or the second RAT may be of a 3GPP RAT and/or may not be a WIFI. The wireless device may determine that the second neighboring frequency may be of lower priority and/or of equal priority, for example, based on that a value (e.g., 3) of the second neighboring frequency is not lower than a value (e.g., 2) of the serving frequency.

A wireless device may determine whether a second RAT of a second neighboring frequency may be restricted or not, for example, for the second neighboring frequency and based on the RATUCI. The wireless device may determine that the second neighboring frequency may be restricted and/or that the second RAT of the second neighboring frequency may be restricted, for example, because the RATUCI indicates that the second RAT is restricted.

A wireless device may determine that a second neighboring frequency may be restricted and/or that a second RAT of the second neighboring frequency may be restricted, for example, based on the RATUCI indicating that the second RAT is restricted. The wireless device may determine not to perform a measurement of the second neighboring frequency and/or may determine not to perform a measurement of the second cell of the second neighboring frequency, based on that the second neighboring frequency is of lower (or equal to) priority than the serving frequency and/or based on that the second RAT of the second neighboring frequency is restricted by the RATUCI.

A measured quality of a serving cell (and/or a serving frequency) may not meet a requirement. The requirement may be at least one of that Srxlev is larger (e.g., higher, greater, etc.) than S-nonIntraSearchP and/or that Squal is larger (e.g., higher, greater, etc.) than S-nonIntraSearchQ. The Srxlev may be equal to and/or lower than S-nonIntraSearchP and/or the Squal may be lower than or equal to S-nonIntraSearchQ. The wireless device may determine to determine/consider one or more inter-RAT frequencies of lower priority than the serving frequency, for example, based on the quality of the serving cell not meeting the requirement. The wireless device may determine whether the second RAT of the second neighboring frequency may be restricted by a RATUCI, for example, because the Srxlev may be equal to and/or lower than S-nonIntraSearchP and/or the Squal may be lower than or equal to S-nonIntraSearchQ, and/or because the second reselection priority of the second neighboring frequency is lower than a third reselection priority of the serving frequency. The wireless device may determine not to measure the second neighboring frequency, for example, if the RATUCI indicates that the second RAT is restricted. The wireless device may determine to measure the second neighboring frequency, for example, if the RATUCI indicates that the second RAT is not restricted.

Alternatively, and/or additionally, a wireless device may determine that a second neighboring frequency may not be restricted and/or that a second RAT of the second neighboring frequency may not be restricted, for example, if the RATUCI indicates that the second RAT is not restricted. The wireless device may determine not to perform a measurement of the second neighboring frequency and/or may determine not to perform a measurement of the second cell of the second neighboring frequency, for example, based on the second neighboring frequency being of lower (or equal to) priority than the serving frequency and/or based on that the second RAT of the second neighboring frequency not being restricted by the RATUCI.

Alternatively, and/or additionally, a measured quality of a serving cell (and/or a serving frequency) may meet the requirement. A wireless device may determine not to perform a measurement of a second neighboring frequency and/or may determine not to perform a measurement of a second cell of the second neighboring frequency, because the Srxlev is higher (e.g., larger, greater, etc.) than S-nonIntraSearchP and/or the Squal is higher (e.g., larger, greater, etc.) than and/or equal to S-nonIntraSearchQ, and/or because the RATUCI indicates that the second RAT is restricted.

A wireless device may perform a measurement of a second cell and/or a first cell 1710 based on the determination to perform the measurement. The wireless device may determine to perform a measurement of a first neighboring frequency and/or a first cell 1710, for example, based on the first RAT not being restricted by the RATUCI and/or that the first neighboring frequency is higher priority than the current frequency (e.g., the serving frequency). The wireless device may determine not to perform a measurement of the first neighboring frequency and/or the first cell 1710 based on the first RAT not being restricted by the RATUCI and/or that the first neighboring frequency not having higher priority than the current frequency (e.g., the serving frequency). The wireless device may determine not to perform a measurement the second neighboring frequency and/or the second cell, for example, based on the second RAT not being restricted by the RATUCI and/or the second neighboring frequency having a lower priority than the current frequency (e.g., the serving frequency). The wireless device may determine to perform a measurement of the second neighboring frequency and/or the second cell, for example, based on the second RAT not being restricted by the RATUCI and based on a quality of the serving cell not meeting the requirement (e.g., Srxlev does not meet a minimum quality) and/or the second neighboring frequency having a lower priority than the current frequency (e.g., the serving frequency). The wireless device may determine not to perform a measurement of the second neighboring frequency and/or the second cell based on the second RAT being restricted by the RATUCI and/or that the second neighboring frequency having lower priority than the current frequency (e.g., the serving frequency).

A wireless device may determine whether to perform a measurement of each neighboring frequency for each neighboring frequency (e.g., the first neighboring frequency, the second neighboring frequency, etc.), of the one or more neighboring frequencies. The wireless device may rank the one or more measured cells and/or one or more candidate cells, for example, after, or in response to, performing measurements of each neighboring frequency and/or one or more measured cells and based on result of the measurement. A ranking may be the wireless device listing the one or more measured cells and/or the one or more candidate cells, according to one or more measured signal strength/quality. The wireless device may select a selected cell among the one or more measured cells and/or the one or more candidate cells, based on the result of the ranking. The wireless device may select the selected cell, which may be a highest ranked cell, for example, based on the ranking. The wireless device may send (e.g., transmit) a message to a base station based on selecting the selected cell. The wireless device may camp on the selected cell. The wireless device may perform cell reselection to the selected cell. The wireless device may receive one or more system information blocks from the selected cell. The wireless device may send (e.g., transmit) the message, for example, if the wireless device determines that the selected cell (e.g., new serving cell) belongs to different registration area, to different tracking area, to different network, and/or to a different RNA, compared to that of the serving cell (e.g., old serving cell). The wireless device may send (e.g., transmit) the message, for example, if the wireless device determines that the selected cell supports a MBS service for which the wireless device is interested in. The message may be at least one of RRCResume request message, a message requesting registration, a message requesting a service. The example method of FIG. 18 may help a wireless device to save battery of the wireless device, by avoiding measurement a cell which is not accessible.

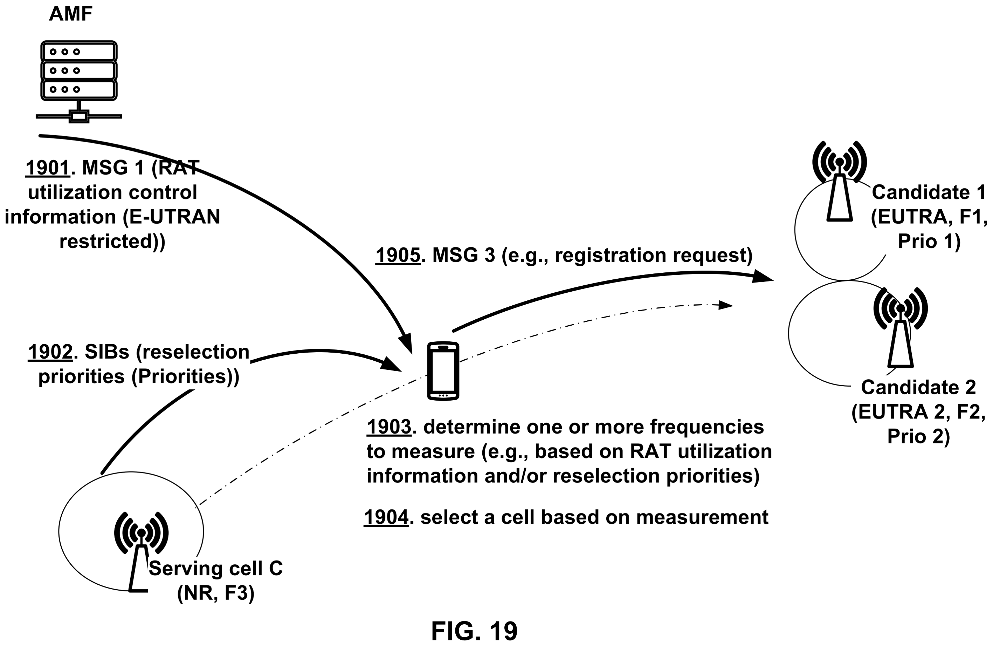

FIG. 19 shows an example of a wireless device receiving control information and determining cells to signal based on the control information. Specifically, FIG. 19 shows an example of a wireless device avoiding signaling an unusable cell. A wireless device may receive a RATUCI from a network. The wireless device may receive information of one or more frequencies. The wireless device may determine whether to measure a frequency of the one or more frequencies based on the RATUCI. This may help the wireless device to efficiently use a battery of the wireless device, by reducing unnecessary measurement of the frequency. For brevity, based on the other part of the present disclosure, redundant details will be omitted.

At step 1901, a wireless device may receive, from an AMF, a first NAS message. The first NAS message may comprise a RATUCI. The RATUCI may indicate that E-UTRAN is restricted. For example, that E-UTRAN is restricted may be that the E-UTRA is restricted. The RATUCI may indicate that NGRAN is not restricted. For example, that NGRAN is not restricted may be that the NR is not restricted. The first NAS message may be at least one of a Registration accept message, a Service Accept message, a wireless device configuration update message, a DL NAS transport message, and/or the like.

A wireless device may camp on a serving cell (e.g., serving cell C, a third cell). The serving cell may be a NR cell, and/or may use a NR, as a RAT and/or as an access technology.

A wireless device may receive, at step 1902, one or more SIBs from the serving cell. The one or more SIBs may comprise one or more parameters. The one or more parameters may comprise a third reselection priority of the serving cell and/or one or more information indicating one or more inter-RAT frequencies. The one or more inter-RAT frequencies may be one or more E-UTRA frequencies, and/or may comprise a first frequency (e.g., DL carrier frequency is F1) and/or a second frequency (e.g., DL carrier frequency is F2). The one or more parameters may indicate one or more DL carrier frequencies of the one or more inter-RAT frequencies. The one or more parameters may further indicate one or more reselection priorities for the one or more inter-RAT frequencies. A first reselection priority, of the one or more reselection priorities, may be for the first frequency (e.g., first neighboring frequency, first candidate frequency, first inter-RAT frequency, etc.). A second reselection priority, of the one or more reselection priorities, may be for the second frequency (e.g., second neighboring frequency, second candidate frequency, second inter-RAT frequency, etc.).

At step 1903, a wireless device may determine one or more frequencies to measure. A wireless device may determine, for example, whether there may be at least one inter-RAT frequency with higher priority than a serving frequency. The serving frequency may be a current frequency. A third value of a third reselection priority may be higher than a first value of a first reselection priority. The wireless device may determine that the first frequency may have higher priority than the serving frequency based on that the third value is higher than the first value. The wireless device may determine that the first frequency is of lower priority than the serving frequency if the third value is lower than the first value.

A wireless device may determine whether a RAT of a first frequency may be restricted or not restricted based on that the first frequency having higher priority than a serving frequency. The wireless device may determine that the first frequency is not restricted, for example, based on the RATUCI, based on the first frequency using EUTRA, and/or based on the RATUCI indicating that the EUTRAN and/or the EUTRA is not restricted. The wireless device may determine that the first frequency is restricted based on the RATUCI, based on the first frequency using EUTRA and/or if the RATUCI indicates that the EUTRAN and/or EUTRA is restricted.

A wireless device may determine to perform a measurement of a first frequency and/or one or more first cells (e.g., the first cell) of the first frequency based on the first frequency being of higher priority than a serving frequency, and/or based on the RAT (e.g., the EUTRAN, EUTRA) of a first frequency not being restricted. A wireless device may determine that a quality of a first cell may meet S criterion, for example, based on performing a measurement. The S criterion may be a signal quality of the first cell being above a threshold for cell selection.

At step 1904, a wireless device may select a cell based on a measurement. A wireless device may select a first cell as a selected cell, for example, based on performing a measurement and/or based on a quality of the first cell. The wireless device may determine that the first cell is a new serving cell and/or that the third cell is not any more a serving cell, for example, based on selecting the first cell.

A wireless device may camp on a first cell and/or may receive one or more system parameters from the first cell via one or more messages (e.g., one or more system information block), for example, based on selecting the first cell. The one or more system parameters may be at least one of an identifier of a RAN notification area, an identifier of tracking area, an identifier of a network, of the first cell, and/or the like. The wireless device may determine to send (e.g., transmit) a message to a base station via the first cell, based on the one or more system parameters and/or based on change of RAT (e.g., the RAT of new serving cell is different from the RAT of the old serving cell). The wireless device may determine to send (e.g., transmit) the message, for example, due to change of serving cell from NR cell to EUTRA cell. The wireless device may determine to send (e.g., transmit) the message, for example, because a third tracking area of the old serving cell (i.e., the third cell) is different from the first tracking area of the new serving cell (i.e. first cell), and/or because a registration area of the wireless device does not comprise the first tracking area. The wireless device, at step 1905, may determine to send a third message. The message may be at least one of a registration request, a TA update request, an attach request message, a RRC resume request, a RRC setup request message, and/or the like.

The example of FIG. 19 may help in reducing unnecessary waste of battery of the wireless device, in reducing unnecessary selection of a new serving cell which is not usable for the wireless device, in reducing signaling from a network to the wireless device.

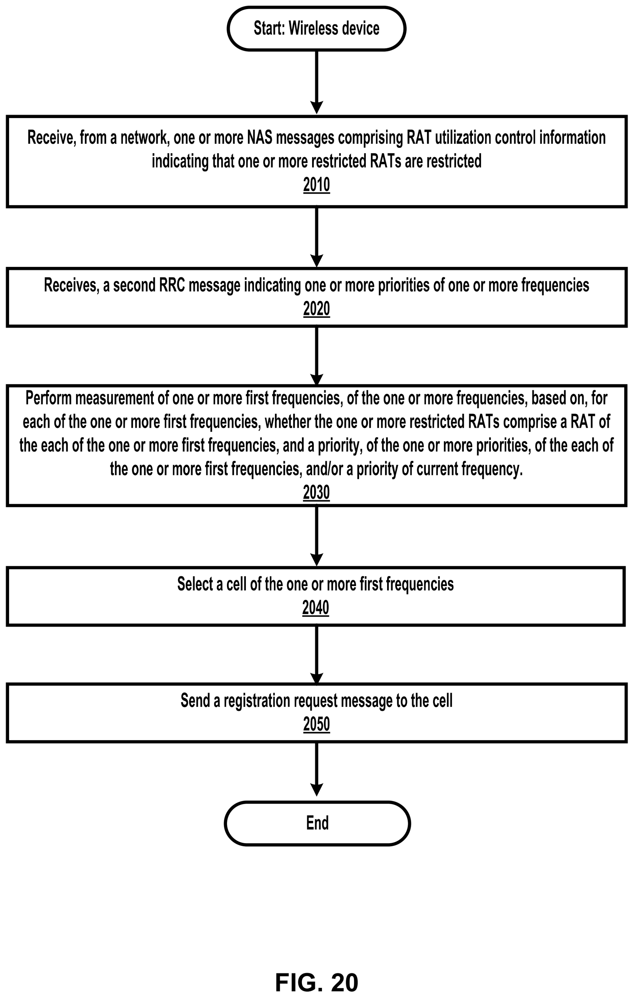

FIG. 20 shows an example method of a wireless device receiving control information and determining cells to signal based on the control information. For brevity, based on the other part of the present disclosure, redundant details will be omitted. At step 2010, a core network node of a network may send (e.g., transmit) one or more NAS messages to a wireless device, and the wireless device may receive the one or more NAS messages. The one or more NAS messages may comprise one or more parameters. The one or more parameters may comprise a RATUCI. The wireless device may store the RATUCI with an identifier of the network based on receiving the RATUCI. The identifier of the network may be an PLMN identifier, a SNPN identifier, a PNI-NPN identifier, and/or the like. The RATUCI may comprise one or more parameters for one or more RATs (e.g., access technologies). Respectively, each of the one or more parameters may indicate whether each of the one or more RATs is restricted or not. The RATUCI may indicate one or more restricted RATs. The one or more restricted RATs may be restricted to the wireless device. The one or more NAS message may be the first NAS message (e.g., as described herein in FIGS. 18 and/or 19) and/or the first message (e.g., as described herein in FIGS. 18 and/or 19). The RATUCI may use the network, may use one or more equivalent networks of the network, and/or may not use other networks. This may reduce signaling load that may occur, for example, if each of the one or more equivalent networks needs to send (e.g., transmit) one or more RATUCI, and if the network and the one or more equivalent networks have a service agreement.

A wireless device may camp on a third cell of a network. The third cell may be a serving cell. A third RAT (e.g., third access technology) of the third cell may not be restricted to the wireless device. The one or more restricted RATs may not comprise the third RAT.

At step 2020, a wireless device may receive one or more second messages from the third cell. The one or more second messages may be the one or more second messages (e.g., as described herein in FIG. 18) and/or the one or more SIBs (e.g., as described herein in FIG. 19). The one or more second messages may indicate one or more neighboring frequencies (e.g., one or more DL carrier frequencies of the one or more neighboring frequencies) and/or one or more reselection priorities of the one or more neighboring frequencies, and/or a reselection priority of the serving frequency (e.g., that of third cell).

One or more neighboring frequencies may comprise a first neighboring frequency and/or a second neighboring frequency. The first neighboring frequency and/or the second neighboring frequency may use a different RAT than a RAT of the third cell. The first neighboring frequency and/or the second neighboring frequency may be one or more inter-RAT frequencies. The one or more reselection priorities may indicate a first value for the first neighboring frequency and/or a second value for the second neighboring frequency. The reselection priority of the serving frequency may be a third reselection priority and/or may be a third value for the serving frequency.

One or more reselection priorities may help for a network to steer one or more wireless devices of the network to certain RATs, to support a decision of the network. The network may want to steer some wireless devices to cell N, for example, if the network has a cell M of a RAT M and/or a cell N of a RAT N, and if the cell M is congested due to many wireless devices. The network may use different policies for different wireless devices. The network may want to steer only wireless device that support the RAT N. The network may want to steer wireless devices of premium subscription. The network may want to restrict the use of the RAT N, so that only some roaming wireless devices may use it. The one or more reselection priorities may help for the network to enforce this decision.

A wireless device may determine, for each neighboring frequency of one or more neighboring frequencies, whether to perform a measurement of each neighboring frequency. The wireless device may determine the one or more reselection priorities and/or the reselection priority of the serving frequency, for example, based on the RATUCI and/or based on information (e.g., the one or more neighboring frequencies). The wireless device may determine whether to perform a measurement for each neighboring frequency, based on at least one of:
- whether each neighboring frequency may be of higher priority than the serving frequency;
- whether each neighboring frequency may be of lower, or equal to, priority than the serving frequency;
- whether a quality of the serving cell may meet a criterion (e.g., Srxlev, Squal); and/or
- whether a RAT of each neighboring frequency may be restricted by the RATUCI.

A wireless device may determine to perform a measurement of a neighboring frequency, if at least one of the following conditions is met:
- a priority of each neighboring frequency, of the network, is higher priority than the serving frequency, and the RATUCI is not stored for the network;
- the priority of each neighboring frequency, of the network, is higher priority than the serving frequency, and the RATUCI is stored for the network, and a RAT of each neighboring frequency is not restricted by the RATUCI;
- the priority of each neighboring frequency, of the network, is higher priority than the serving frequency, and the RATUCI is stored for the network, and a RAT of each neighboring frequency is not restricted by the RATUCI; and a cell on a frequency of higher priority than each neighboring frequency is not available;
- a priority of each neighboring frequency, of the network, is equal to and/or lower than priority than the serving frequency, and the RATUCI is not stored for the network, and a cell on a frequency of higher priority than each neighboring frequency is not available; and/or
- a priority of each neighboring frequency, of the network, is equal to and/or lower than priority than the serving frequency, the RATUCI is stored for the network, a RAT of each neighboring frequency is not restricted by the RATUCI, and a quality of the serving cell and/or a quality of the serving frequency does not meet the criterion (e.g., signal quality (e.g., Srxlev, Squal) of the serving cell is not above threshold).

A wireless device may determine not to perform a measurement of each neighboring frequency, if at least one of the following condition is met:
- the priority of each neighboring frequency, of the network, is higher priority than the serving frequency, and the RATUCI is stored for the network, and a RAT of each neighboring frequency is restricted by the RATUCI;
- the priority of each neighboring frequency, of the network, is higher priority than the serving frequency, and the RATUCI is stored for the network, and a RAT of each neighboring frequency is not restricted by the RATUCI; and a cell on a frequency on higher priority than each neighboring frequency is available;
- the priority of each neighboring frequency, of the network, is equal to and/or lower than priority than the serving frequency, and the RATUCI is not stored for the network, and a cell on a frequency on higher priority than each neighboring frequency is available;
- the priority of each neighboring frequency, of the network, is equal to and/or lower than priority than the serving frequency, the RATUCI is stored for the network, the RAT of each neighboring frequency is restricted by the RATUCI, and a quality of the serving cell and/or a quality of the serving frequency does not meet the criterion; and/or
- the priority of each neighboring frequency, of the network, is equal to and/or lower than priority than the serving frequency, the RATUCI is stored for the network, the RAT of each neighboring frequency is not restricted by the RATUCI, and a quality of the serving cell and/or a quality of the serving frequency meets the criterion.

At step 2030, a wireless device may start a measurement of each neighboring frequency if the wireless device determines to measure each neighboring frequency. The wireless device may search one or more cells on each neighboring frequency.

A wireless device may find a first cell on a first neighboring frequency based on a measurement. The first neighboring frequency may be each neighboring frequency and/or may be the inter-RAT frequency. The first neighboring frequency may be of higher priority than the serving frequency.

A wireless device may determine whether one or more second message may comprise threshServingLowQ. The wireless device may determine whether the first cell fulfils a first criterion, for example, if the threshServingLowQ is broadcast by the serving cell. The first criterion may be that Squal of the first cell is larger (e.g., higher, greater, etc.) than ThreshX,HighQ for a time duration of TreselectoonRAT.

At step 2040, a wireless device may select a cell of one or more first frequencies. The wireless device may select and/or reselect a first cell, for example. The first cell may become a new serving cell and/or a third cell may not be any more a serving cell and/or the third cell may be an old serving cell, for example, if the first criterion is met. The wireless device may determine whether a second criterion is fulfilled, for example, if the first criterion is not met. The second criterion may be that Srxlev of the first cell is larger (e.g., higher, greater, etc.) than ThreshX,HighP for a time interval of TreselectionRAT.

A wireless device may select a first cell, for example, if the first criterion is not met and/or if a second criterion is met. The first cell may become the new serving cell and/or the third cell may not be any more the serving cell and/or the third cell may be the old serving cell.

A wireless device may find a second cell on a second neighboring frequency based on a measurement. The second neighboring frequency may be each neighboring frequency and/or may be the inter-RAT frequency. The second neighboring frequency may have a priority that may be lower than or equal to priority than the serving frequency.

A wireless device may determine whether the one or more second message may comprise threshServingLowQ. The wireless device may determine whether the second cell fulfils a third criterion, for example, if the threshServingLowQ is broadcast by the serving cell. The third criterion may be that Squal of the serving cell is smaller/lower than Threshserving,LowQ, and that Squal of the second cell is larger (e.g., higher, greater, etc.) than ThreshX,LowQ, for a time duration of TreselectoonRAT.

A wireless device may select and/or reselect a second cell, for example, if a third criterion is met. The second cell may become a new serving cell and/or the third cell may not be any more a serving cell and/or the third cell may be an old serving cell.

A wireless device may determine whether a fourth criterion may be fulfilled, for example, if the third criterion is not met. The fourth criterion may be that Squal of the serving cell may be lower (e.g., less, lower, etc.) than Threshserving,LowP, and that Srxlev of the second cell may be larger (e.g., higher, greater, etc.) than ThreshX,LowP, for a time duration of TreselectoonRAT.

A wireless device may select a second cell, for example, if the third criterion is not met and/or if the fourth criterion is met. The second cell may become the new serving cell and/or the third cell may not be any more the serving cell and/or the third cell may be the old serving cell.

At step 2050, a wireless device may send (e.g., transmit) a message to a network, for example, based on selecting at least one of the first cell and/or the second cell. The message may be the message (e.g., as described herein in FIGS. 18 and/or 19). The wireless device may send (e.g., transmit) the message based on the determining (e.g., as described herein in FIGS. 18 and/or 19). The message may be a registration message. The example method of FIG. 20 may help a wireless device to avoid unnecessary selection of a new cell, to reduce generation of unnecessary signaling.

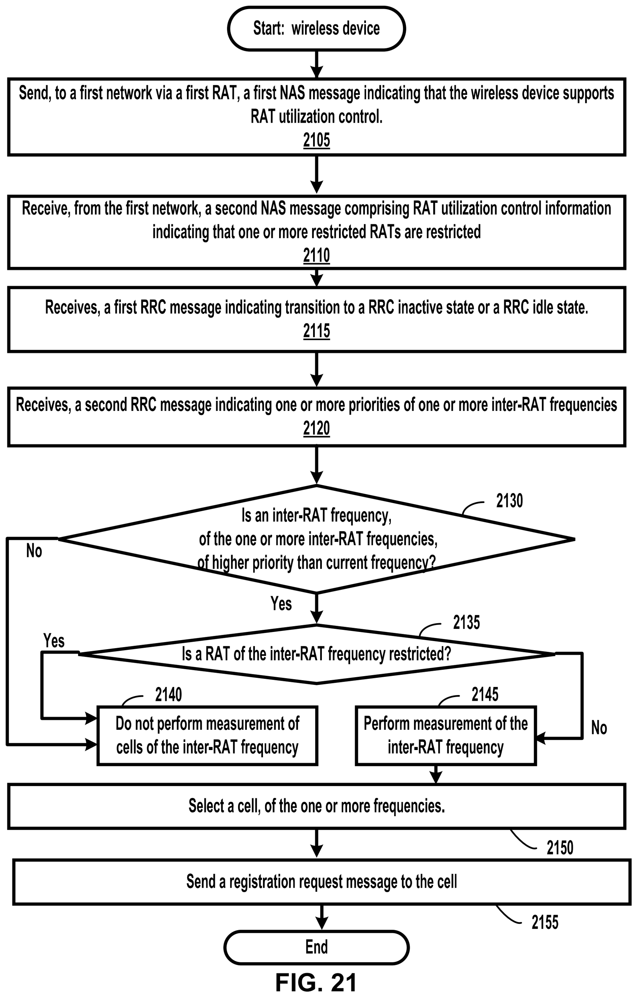

FIG. 21 shows an example method of a wireless device to select a cell, from one or more cells, for registration using received control information. The wireless device may determine whether to perform a measurement or not for a frequency of a higher priority. This may help the wireless device to reduce power consumption. For brevity, based on the other part of the present disclosure, redundant details will be omitted.

At step 2105, a wireless device may send (e.g., transmit) to a first network, via a first RAT, a first NAS message. The first NAS message may comprise a parameter indicating that the wireless device supports RAT utilization control. This may help for the first network to determine whether to send (e.g., transmit) to the wireless device a RATUCI. The first network may not able to effectively steer one or more wireless devices of the first network toward a RAT that the first network may decide upon, for example, if the first network is not aware whether the wireless device supports the RAT utilization control.

At step 2110, a wireless device may receive a second NAS message from a first network, via a first RAT. The second NAS message may be at least one of the one or more NAS messages (e.g., as described herein in FIGS. 18, 19, and/or 20). The second NAS message may comprise the RATUCI.

At step 2115, a wireless device may receive, from a base station, a first RRC message. The first message may indicate that the wireless device may transition to a RRC inactive state and/or a RRC idle state. The wireless device may camp on the third cell. The third cell may be the serving cell.

At step 2120, a wireless device may receive a second RRC message of one or more second messages. The wireless device may receive the one or more second messages (e.g., as described herein in FIG. 20). The second RRC message may indicate one or more inter-RAT frequencies.

At step 2130, a wireless device may determine whether an inter-RAT frequency, of the one or more inter-RAT frequencies, is of higher priority than the current frequency (e.g., serving frequency, frequency of the serving cell). At step 2140, a wireless device may not perform a measurement of the inter-RAT frequency if the inter-RAT frequency is not higher priority than the current frequency.

At step 2135, the wireless device may determine whether the inter-RAT frequency may be restricted or not if the inter-RAT frequency has a higher priority than the current frequency. The wireless device may determine whether the inter-RAT frequency is restricted or not, for example, based on the RATUCI.

At step 2140, the wireless device may not perform a measurement of the inter-RAT frequency, if the inter-RAT frequency is higher priority than the current frequency and if the RATUCI indicates that a RAT of the inter-RAT frequency is restricted.

At step 2145, a wireless device may perform a measurement of an inter-RAT frequency if the inter-RAT frequency has a higher priority than the current frequency and if the RATUCI indicates that a RAT of the inter-RAT frequency is not restricted.

At step 2150, the wireless device may select a cell of the one or more inter-RAT frequencies based on measurement of the one or more inter-RAT frequencies, and at step 2155, the wireless device may send (e.g., transmit) the message (e.g., as described herein in FIGS. 18, 19 and/or 20) based on selecting the cell. The example method of FIG. 21 may assist a wireless device to efficiently use a resource of the wireless device and lengthen a battery life of the wireless device.

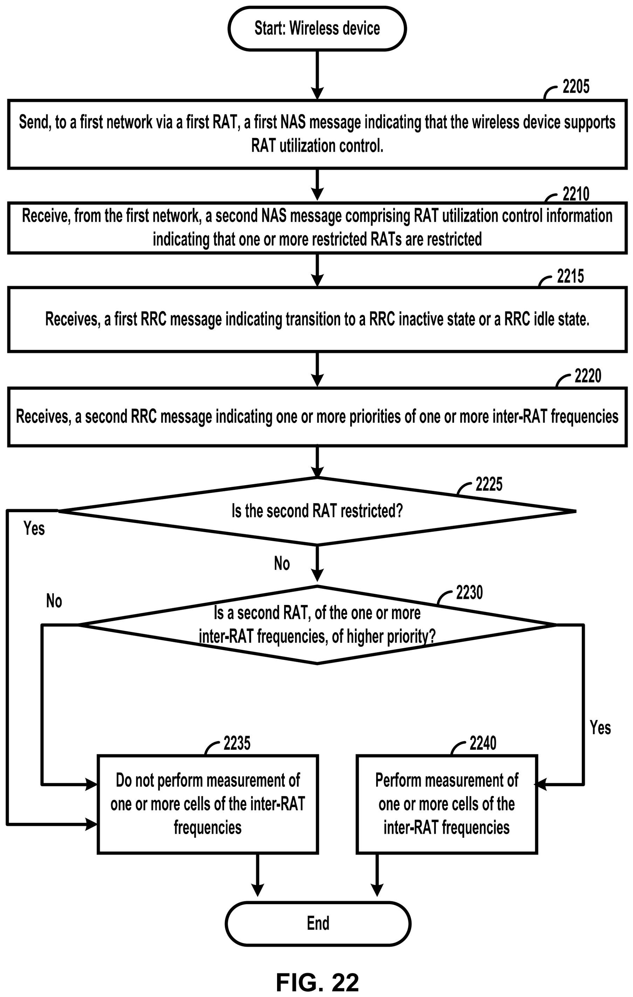

FIG. 22 shows an example method for a wireless device to determine one or more cells for measurement based on inter-RAT frequency priority and RAT restriction information. For brevity, based on the other part of the present disclosure, redundant details will be omitted.

At step 2205, a wireless device may send (e.g., transmit) to the first network, via the first RAT, the first NAS message (e.g., as described herein in the FIGS. 18, 19, 20, and/or 21). At step 2210, the wireless device may receive a second NAS message from the first network (e.g., as described herein in the FIGS. 18, 19, 20, and/or 21).

At step 2215, the wireless device may receive from the base station a first RRC message (e.g., as described herein in the FIGS. 18, 19, 20, and/or 21). At step 2220, the wireless device may receive a second RRC message (e.g., as described herein in the FIGS. 18, 19, 20, and/or 21).

At step 2225, a wireless device may determine if a RAT is restricted. A wireless device may determine, for example, whether the inter-RAT frequency, of the one or more inter-RAT frequencies, may be restricted or not. The wireless device may determine whether the inter-RAT frequency may be restricted or not, for example, based on the RATUCI.

At step 2230, a wireless device may determine if a RAT, of one or more inter-RAT frequencies, is of higher priority. A wireless device may determine, for example, whether a reselection priority of an inter-RAT frequency may have a higher priority than a reselection priority of the current frequency if a RAT of the inter-RAT frequency is not restricted by the RATUCI.

At step 2240, the wireless device may determine to perform a measurement of the inter-RAT frequency if a RAT of the inter-RAT frequency is not restricted by the RATUCI, and/or if the reselection priority of the inter-RAT frequency is higher than a reselection priority of the current frequency.

At step 2235, a wireless device may determine not to perform a measurement of an inter-RAT frequency if a RAT of the inter-RAT frequency is not restricted by the RATUCI, and/or if the reselection priority of the inter-RAT frequency is not higher than a reselection priority of the current frequency. The wireless device may determine not to perform a measurement of the inter-RAT frequency if a RAT of the inter-RAT frequency is restricted by the RATUCI.

A wireless device may select a cell of one or more inter-RAT frequencies based on a measurement of the one or more inter-RAT frequencies. The wireless device may send (e.g., transmit) the message (e.g., as described herein in FIG. 18, 19, 20 and/or 21) based on selecting the cell.

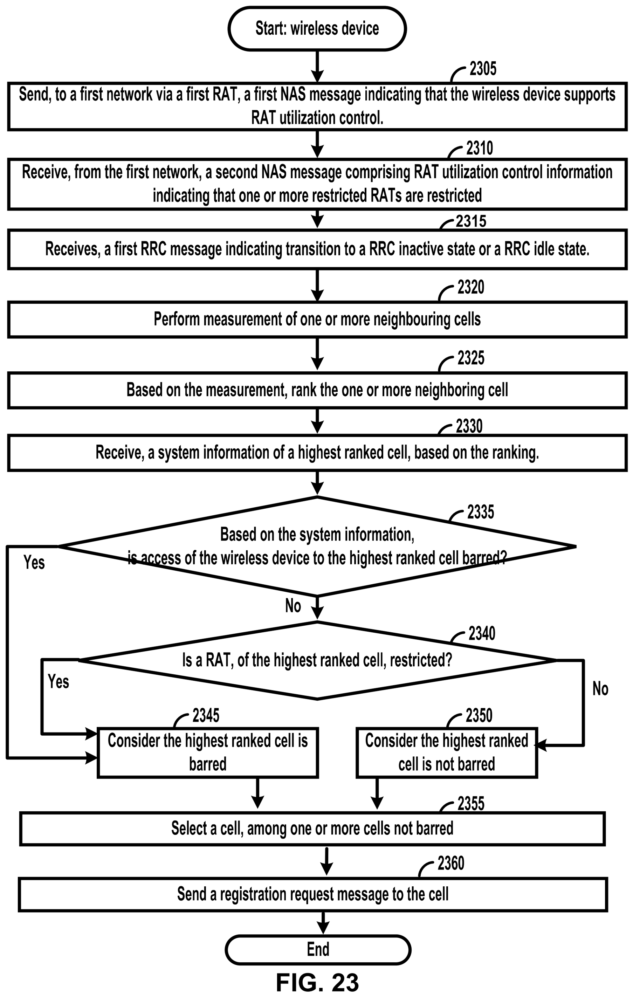

FIG. 23 shows an example method of a wireless device to select a cell, from one or more cells, for registration using received control information. Efficient use of wireless device resources may lengthen battery life of the wireless device. For brevity, based on the other part of the present disclosure, redundant details will be omitted.

At step 2305, a wireless device may send (e.g., transmit) to a first network, via a first RAT, a first NAS message (e.g., as described herein in FIGS. 18, 19, 20, 21 and/or 22). At step 2310, the wireless device may receive a second NAS message from the first network (e.g., as described herein in FIGS. 18, 19, 20, 21 and/or 22).

At step 2315, the wireless device may receive from the base station, a first RRC message (e.g., as described herein in FIGS. 18, 19, 20, 21, and/or 22). The wireless device may receive a second RRC message (e.g., as described herein in FIGS. 18, 19, 20, 21, and/or 22).

A wireless device may determine whether to perform a measurement of one or more inter-RAT frequencies (e.g., as described herein in FIGS. 18, 19, 20, 21, and/or 22). At step 2320, the wireless device may measure one or more cells (e.g., as described herein in FIGS. 18, 19, 20, 21 and/or 22). The one or more cells may be one or more neighboring cells and/or one or more measured cells.

A wireless device may check whether each cell, of one or more cells, fulfills a cell selection criterion S for each cell of the one or more cells that may be measured. The cell selection criterion S may be that Srxlev is larger (e.g., higher, greater, etc.) than 0 and/or Squal is larger (e.g., higher, greater, etc.) than 0. The wireless device may determine/consider each cell for ranking, for example, if each cell meets the cell selection criterion S. The wireless device may not determine/consider each cell for ranking, for example, if each cell does not meet the cell selection criterion S. Considering each cell for ranking may be to add each cell in a list of candidate cells for cell reselection.

At step 2325, the wireless device may perform ranking, according to R criteria for one or more cells that meet a cell selection criterion S, wherein, in R criteria, Rs and/or Rn is derived by Rs=Qmeas,s + Qhyst - Qoffsettemp and Rn=Qmeas,n - Qoffset - Qoffsettemp, and R value is calculated using averaged RSRP results.

A wireless device may determine a highest ranked cell, for example, based on a ranking of one or more cells. The highest ranked cell may be a cell which has highest Rs and/or Rn among the one or more cells (e.g., those determined/considered for ranking). The highest ranked cell may be a best cell.

A candidate list may comprise the one or more cells, and/or the one or more measured cells. At step 2330, the wireless device may receive system information and/or control information for the one or more cells on the candidate list. At step 2335, the wireless device may exclude (e.g., remove, discard, delete, etc.) the one or more restricted cells from the candidate list if a RAT of one or more restricted cells is restricted due to the RATUCI.

At step 2340, a wireless device may determine whether a RAT of a highest ranked cell may be restricted for the highest ranked cell and based on the RATUCI. At step 2345, the wireless device may determine/consider the highest rated cell as being barred, for example, based on highest ranked cell begin restricted. Specifically, the wireless device may not determine/consider the highest ranked cell as a candidate for cell reselection if the RAT of the highest ranked cell is restricted due to RATUCI. Alternatively, at step 2350, the wireless device may determine/consider the highest rated cell as not being barred, for example, based on the highest ranked cell not being restricted. Specifically, the wireless device may determine/consider the highest ranked cell as a candidate for cell reselection if the RAT of the highest ranked cell is not restricted due to RATUCI.

A wireless device may determine that a highest ranked cell (e.g., the best cell) may not be suitable if at least one of following reasons is met:
- the highest ranked cell belongs to a PLMN which may not be indicated as being equivalent to the registered PLMN;
- the highest ranked cell may be a CAG cell that belongs to a PLMN which is equivalent to the registered PLMN but with no CAG-ID that is present in the wireless device's allowed CAG list being broadcasted;
- the highest ranked cell may not be a CAG cell and the CAG-only indication in the wireless device is set;
- the highest ranked cell may not belong to a SNPN that is equal to or indicated as being equivalent to the registered or selected SNPN of the wireless device in SNPN access mode;
- the RAT of the highest ranked cell may restricted, based on the RATUCI.

A wireless device may determine that a highest ranked cell (e.g., the best cell) may be suitable if at least one of following reasons is met:
- the highest ranked cell belongs to a PLMN which may be indicated as being equivalent to the registered PLMN;
- the highest ranked cell may be a CAG cell that belongs to a PLMN which is equivalent to the registered PLMN but CAG-ID that is present in the wireless device's allowed CAG list being broadcasted;
- the highest ranked cell may be a CAG cell and/or the CAG-only indication in the wireless device is not set;
- the highest ranked cell may belong to a SNPN that is equal to or indicated as being equivalent to the registered or selected SNPN of the wireless device in SNPN access mode; or
- the RAT of the highest ranked cell may not be restricted, based on the RATUCI.

A wireless device may not determine/consider a highest ranked cell and/or an inter-RAT frequency of the highest ranked cell, as a candidate for reselection based on determining that the highest ranked cell is not suitable. The wireless device may determine/consider the highest ranked cell and/or the inter-RAT frequency of the highest ranked cell, as a candidate for reselection based on determining that the highest ranked cell is suitable.

A wireless device may select and/or reselect the highest ranked cell as a selected cell, based on at least one of:
- the highest ranked cell may not be excluded from the candidate list;
- the RAT of the highest ranked cell may not barred;
- the RAT of the highest ranked cell may not be restricted by the RATUCI;
- the quality of the highest ranked cell may meet R criterion and/or S criterion;
- the highest ranked cell may be suitable; or
- the highest ranked cell may not belong to a part of list of forbidden TAs.

At step 2360, a wireless device may send (e.g., transmit) a message (e.g., as described herein in FIGS. 18, 19, 20, 21, and/or 22). This message may be sent, for example, based on selecting the highest ranked cell. The example methods of FIG. 23 may help a wireless device to efficiently use a resource of the wireless device and lengthen a battery life of the wireless device.

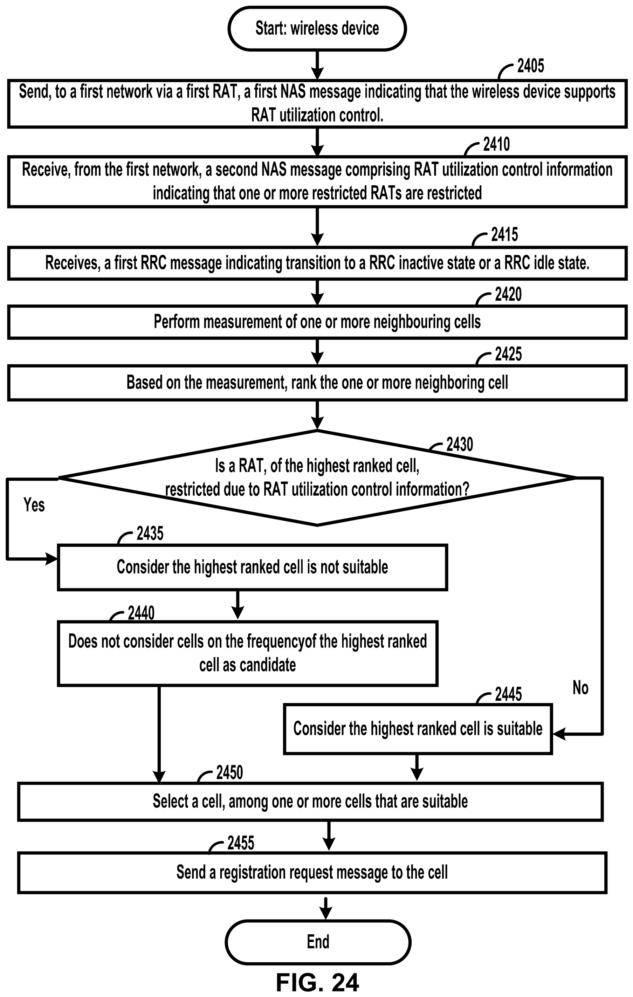

FIG. 24 shows an example method of a wireless device to select a cell, from one or more cells, for registration using control information and based on measurements of the one or more cells. For brevity, based on the other part of the present disclosure, redundant details will be omitted.

At step 2405, a wireless device may send (e.g., transmit) to a first network, via a first RAT, a first NAS message (e.g., as described herein in FIGS. 18, 19, 20, 21, 22, and/or 23). At step 2410, the wireless device may receive a second NAS message from the first network (e.g., as described herein in FIGS. 18, 19, 20, 21, 22, and/or 23).

At step 2415, the wireless device may receive from a base station, a first RRC message (e.g., as described herein in FIGS. 18, 19, 20, 21, 22, and/or 23). The wireless device may receive a second RRC message (e.g., as described herein in FIGS. 18, 19, 20, 21, 22, and/or 23).

A wireless device may determine whether to perform a measurement of the one or more inter-RAT frequencies (e.g., as described herein in FIGS. 18, 19, 20, 21, 22, and/or 23). At step 2420, the wireless device may measure one or more cells (e.g., as described herein in FIGS. 18, 19, 20, 21, 22, and/or 23). The one or more cells may be one or more neighboring cells and/or one or more measured cells. A wireless device may check whether each cell fulfills a cell selection criterion S (e.g., as described herein in FIGS. 18, 19, 20, 21, 22, and/or 23) for each cell of the one or more cells that are measured.

The wireless device may perform ranking (e.g., as described herein in FIGS. 18, 19, 20, 21, 22, and/or 23) for one or more cells that meet the cell selection criterion S, and, at step 2425, the wireless device may determine a highest ranked cell (e.g., as described herein in FIGS. 18, 19, 20, 21, 22, and/or 23), for example, based on ranking of the one or more cells.

At step 2430, a wireless device may determine whether a RAT of a highest ranked cell may be restricted, for the highest ranked cell and based on the RATUCI. At step 2435, the wireless device may determine that the highest ranked cell may not be suitable if the RAT of the highest ranked cell is restricted due to RATUCI. At step 2440, the wireless device may not determine/consider the highest ranked cell and/or the inter-RAT frequency of the highest ranked cell, as a candidate for reselection based on determining that the highest ranked cell is not suitable.

Alternatively, at step 2445, the wireless device may determine the highest ranked cell as being suitable if the RAT of the highest ranked cell is not restricted due to RATUCI. A wireless device may determine that a highest ranked cell (e.g., the best cell) may be suitable if at least one of following reasons is met:
- the highest ranked cell may not belong to a PLMN which is not indicated as being equivalent to the registered PLMN;
- the highest ranked cell may not be a CAG cell that belongs to a PLMN which is equivalent to the registered PLMN;
- the highest ranked cell may not be a CAG cell and/or the CAG-only indication in the wireless device is not set; or
- the RAT of the highest ranked cell may not be restricted, based on the RATUCI.

At step 2450, a wireless device may select and/or reselect a highest ranked cell as a selected cell based on the highest ranked cell being suitable. At step 2455, the wireless device may send (e.g., transmit) the message (e.g., as described herein in FIGS. 18, 19, 20, 21, 22, and/or 23) based on selecting the highest ranked cell. The example embodiments of FIG. 24 may help a wireless device to efficiently use a resource of the wireless device and lengthen a battery life of the wireless device.

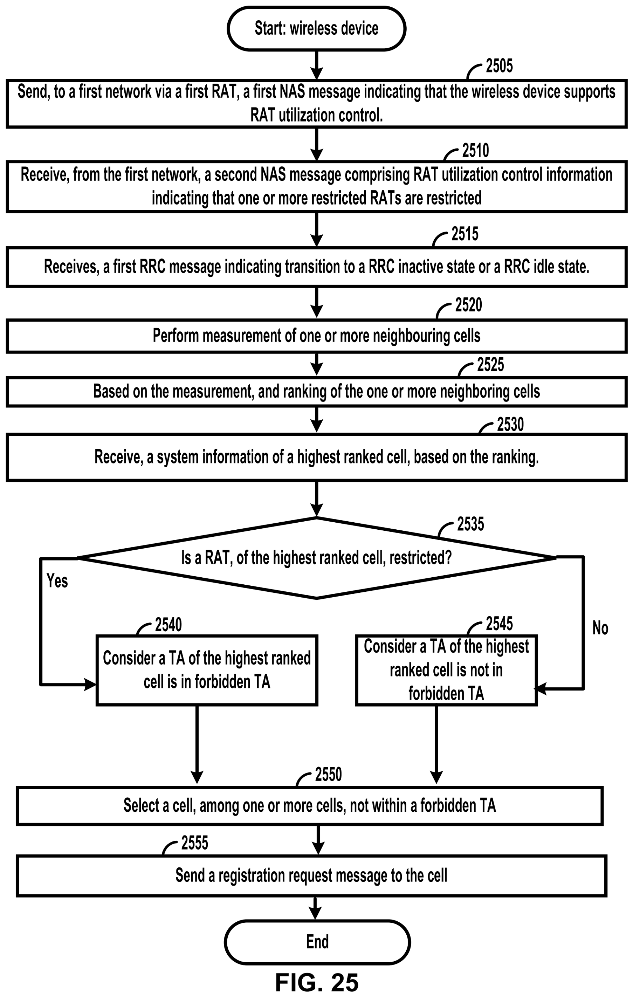

FIG. 25 shows an example method for a wireless device to select a cell, from one or more cells, for registration using control information and a list of forbidden tracking areas. For brevity, based on the other part of the present disclosure, redundant details will be omitted.

At step 2505, a wireless device may send (e.g., transmit) to a first network, via a first RAT, a first NAS message (e.g., as described herein in FIGS. 18, 19, 20, 21, 22, 23, and/or 24). At step 2510, the wireless device may receive a second NAS message from the first network. At step 2515, the wireless device may receive, from the base station, a first RRC message. The wireless device may receive the second RRC message. The wireless device may determine whether to perform a measurement of the one or more inter-RAT frequencies. At step 2520, the wireless device may measure one or more cells. The wireless device may check whether each cell fulfills the cell selection criterion S for each cell of the one or more cells that are measured. At step 2525, the wireless device may perform a ranking of the one or more cells. The wireless device may perform a ranking of the one or more cells, for example, based on the cells that meet a cell selection criterion S. The wireless device may determine a highest ranked cell, for example, based on ranking of the one or more cells.

At step 2530, a wireless device may receive system information of one or more cells including the highest ranked cell. The wireless device may read system information, for example, from a highest ranked cell. The system information may comprise one or more parameters. The system information may comprise one or more system parameters. The one or more system parameters may be at least one of an identifier of a RAN notification area, an identifier of tracking area, an identifier of a network, of the highest ranked cell, and/or the like.

A wireless device may determine that a highest ranked cell may not be suitable. The highest ranked cell may not be suitable and/or the wireless device may not select the highest ranked cell as the selected cell (e.g., as described herein in FIGS. 23 and/or 24), for example, if the highest ranked cell is excluded from the candidate list.

At step 2535, a wireless device may determine that a highest ranked cell may be restricted. The highest ranked cell may be restricted, for example, based on the RAT of the cell being restricted.

At step 2540, a wireless device may determine/consider a tracking area (TA) of a highest ranked cell a forbidden TA and/or may add an identifier of the tracking area into a list of forbidden TAs based on determining that the highest ranked cell is not suitable. Alternatively, at step 2545, the wireless device may determine/consider that the tracking area of the highest ranked cell may not be a forbidden TA and/or may remove the identifier of the tracking area from a list of forbidden TAs, for example, based on determining that the highest ranked cell is suitable.

A wireless device may perform a measurement of one or more cells, one or more neighboring frequencies, and/or the like. The wireless device may not select a cell, of the one or more cells, and/or may determine/consider the cell as barred if the cell belongs to a TA on the list of forbidden TAs. At step 2550, the wireless device may select the cell and/or may determine/consider the cell as not barred if the cell does not belong to a TA in the list of forbidden TA.

At step 2555, the wireless device may send (e.g., transmit) the message (e.g., as described herein in FIGS. 18, 19, 20, 21, 22, 23, and/or FIG. 24) based on selecting the cell. The message may be a registration message. The example method of FIG. 25 may help a wireless device to efficiently manage a list of TAs which is forbidden and prevent the wireless device from selecting a cell of a RAT which is not allowed.

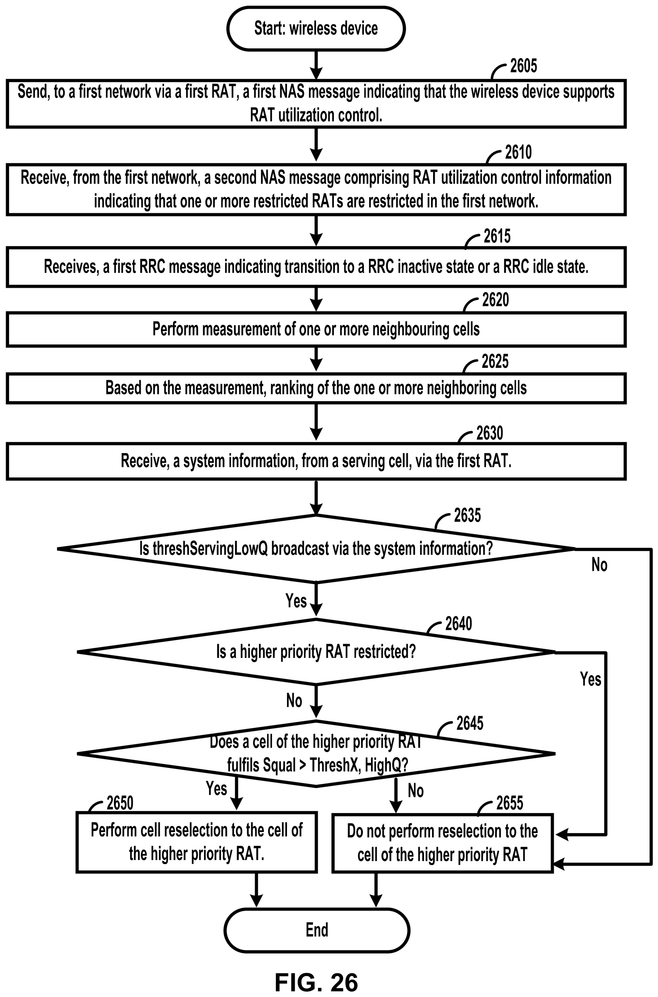

FIG. 26 shows an example method for a wireless device to determine whether to perform cell selection based on control information, system information, and measurements of one or more cells. For brevity, based on the other part of the present disclosure, redundant details will be omitted.

At step 2605, a wireless device may send (e.g., transmit) to a first network, via a first RAT, a first NAS message (e.g., as described herein in the FIGS. 18, 19, 20, 21, 22, 23, 24, and/or 25). At step 2610, the wireless device may receive a second NAS message from the first network (e.g., as described herein in the FIGS. 18, 19, 20, 21, 22, 23, 24, and/or 25). At step 2615, the wireless device may receive from a base station, a first RRC message (e.g., as described herein in the FIGS. 18, 19, 20, 21, 22, 23, 24, and/or 25). The wireless device may receive a second RRC message (e.g., as described herein in the FIGS. 18, 19, 20, 21, 22, 23, 24, and/or 25).

The wireless device may determine whether to perform a measurement of the one or more inter-RAT frequencies (e.g., as described herein in FIGS. 18, 19, 20, 21, 22, 23, 24, and/or 25). At step 2620, the wireless device may measure one or more cells (e.g., as described herein in FIGS. 18, 19, 20, 21, 22, 23, 24, and/or 25). The wireless device may check whether each cell, of one or more cells, fulfills a cell selection criterion S (e.g., as described herein in FIGS. 18, 19, 20, 21, 22, 23, 24, and/or 25) for each cell of the one or more cells that are measured.

At step 2625, the wireless device may perform a ranking (e.g., as described herein in FIGS. 18, 19, 20, 21, 22, 23, 24, and/or 25) of the one or more cells that meet the cell selection criterion S. The wireless device may determine a highest ranked cell (e.g., as described herein in FIGS. 18, 19, 20, 21, 22, 23, 24, and/or 25), for example, based on ranking the one or more cells. At step 2630, the wireless device may receive system information, from a serving cell and via a first RAT.

At step 2635, a wireless device may determine whether threshServingLowQ may be broadcast by system information of a serving cell. At step 2640, the wireless device may determine whether a RAT of inter-RAT frequency of highest reselection priority may be restricted or not if the threshServingLowQ is broadcast. At step 2645, the wireless device may determine whether a cell of an inter-RAT frequency that may fulfil a Squal being higher (e.g., larger, greater, etc.) than ThreshX, HighQ if the RAT of the inter-RAT frequency of the highest reselection priority is not restricted based on the RATUCI. At step 2650, the wireless device may perform a measurement of the cell, may perform a measurement of the inter-RAT frequency, and/or may select the cell as a selected cell if the Squal is higher (e.g., larger, greater, etc.) than ThreshX,HighQ. Alternatively, at step 2655, the wireless device may not perform a measurement of the cell, may not perform a measurement of the inter-RAT frequency, and/or may not select the cell as a selected cell if the Squal is not higher (e.g., larger, greater, etc.) than ThreshX,HighQ.

A wireless device may not perform a measurement of the cell, may not perform a measurement of the inter-RAT frequency, and/or may not select the cell on the inter-RAT frequency as a selected cell if the RAT of the inter-RAT frequency of the highest reselection priority is restricted based on the RATUCI. The wireless device may not perform a measurement of the cell, may not perform a measurement of the inter-RAT frequency, and/or may not select the cell on the inter-RAT frequency as a selected cell if the Squal is not higher (e.g., larger, greater, etc.) than ThreshX,HighQ. The example method of FIG. 26 may help a wireless device to efficiently determine whether the wireless device may select a measured cell.

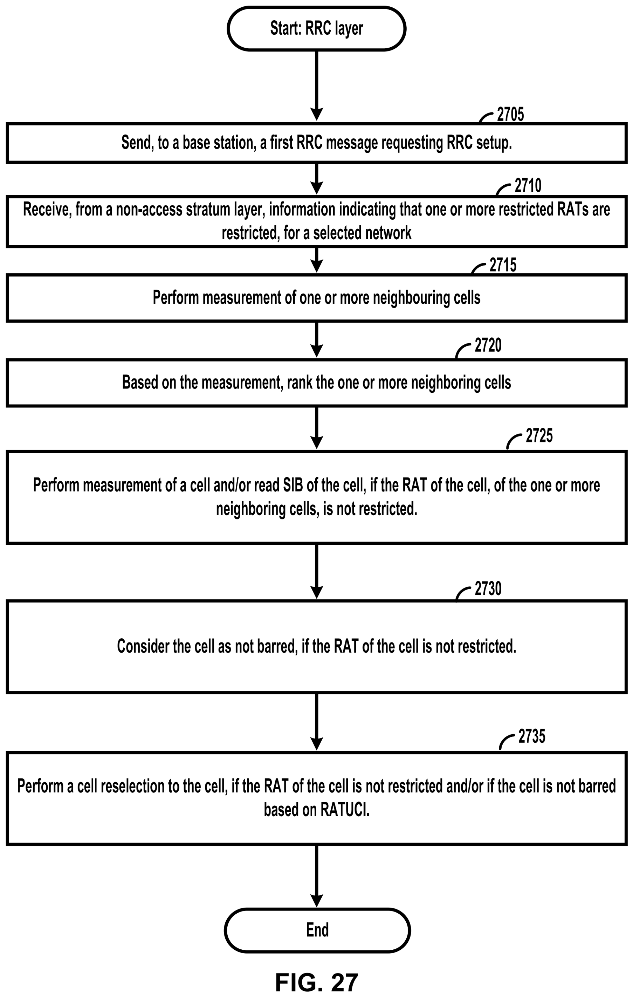

FIG. 27 shows an example method for a wireless device to determine whether to select a measured cell based on measurements of one or more cells and cell restrictions. For brevity, based on the other part of the present disclosure, redundant details will be omitted.

At step 2705, a wireless device may send (e.g., transmit) to a first network, via a first RAT, a first NAS message. The wireless device may receive a second NAS message from the first network. A NAS message may include information indicating the restriction of one or more RATs of a network. The wireless device may receive from a base station, a first RRC message. The wireless device may receive a second RRC message.

The wireless device may determine whether to perform a measurement of the one or more inter-RAT frequencies, and, at step 2715, the wireless device may measure one or more cells. (e.g., as described herein). The wireless device, at step 2720, may rank the one or more cells, based on the measurements of the one or more cells.

A wireless device may determine whether each cell of one or more candidate cells, one or more measured cell, and/or one or more cells in candidate list, may be barred or not for each cell. The wireless device may determine that each cell may be barred, for example, if a RAT of each cell is restricted by the RATUCI. The wireless device may determine whether each cell is barred or not, based on one or more criterions. The wireless device may determine whether a cell is barred or not, for example, based on whether a RAT of the cell is restricted or not restricted by the RATUCI. The one or more criterions may comprise whether a SIB of each cell may indicate whether a cell may be barred, whether a cell status of each cell may indicate 'reserved', and/or the like. At step 2725, the wireless device may perform a measurement of a cell and/or read SIB of the cell, if the RAT of the cell, of the one or more cells, is not restricted. The wireless device, at step 2730, may determine/consider a cell as not barred, if the RAT of the cell is not restricted.

A wireless device may exclude each cell, from a candidate for cell reselection and/or selection, for example, if the wireless device determines that each cell is barred. The wireless device may select another cell on the same frequency as each cell and/or may select another cell on another frequency, for example, if the wireless device determines that each cell is barred.

At step 2735, a wireless device may perform a cell reselection to a cell, if the RAT of the of the cell is not restricted and/or if the cell is not barred based on RATUCI. A wireless device may not exclude each cell, from a candidate for cell reselection and/or selection, for example, if the wireless device determines that each cell is not barred. The wireless device may select each cell, for example, if the wireless device determines that each cell is not barred and if each cell is a highest ranked cell. The wireless device may send (e.g., transmit) a message (e.g., as described herein in FIGS. 18, 19, 20, 21, 22, 23, 24, 25, and/or 26) based on selecting the cell. The example method of FIG. 27 may help a wireless device to efficiently determine whether the wireless device may select a measured cell.

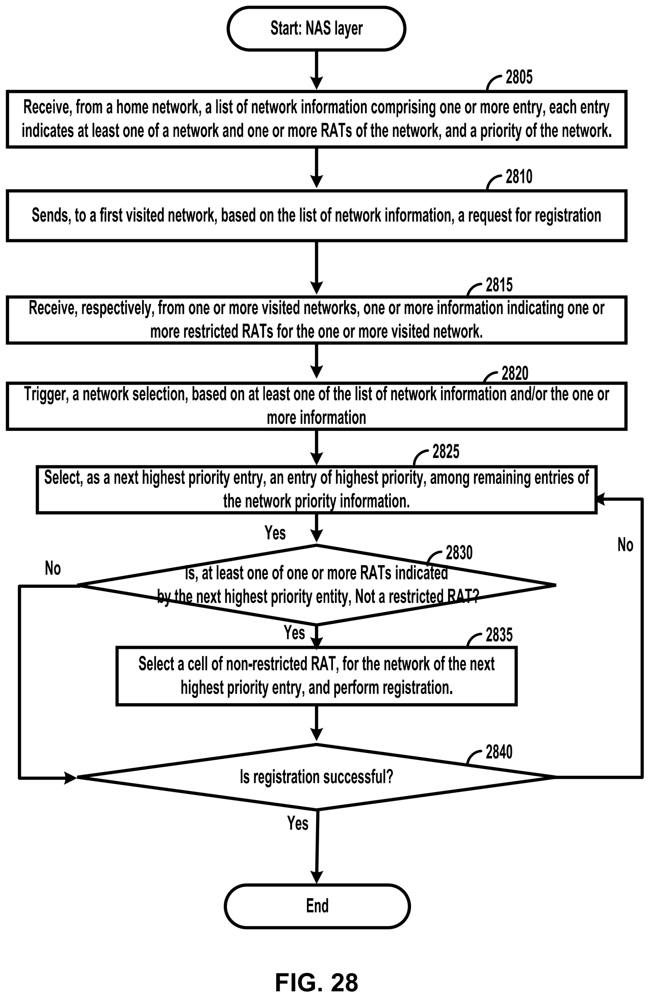

FIG. 28 shows an example method for a wireless device to select a highest priority, unrestricted cell for registration. For brevity, based on the other part of the present disclosure, redundant details will be omitted. At step 2805, a wireless device may receive from a home network, a list of networks. The list of networks may be a PLMN selector with access technology list. The list may comprise one or more entries. Each of the one or more entries may comprise an identifier of a network and/or one or more identifiers of one or more access technologies. A wireless device may visit one or more networks from the list of networks, and, at step 2810, the wireless device may send to a first visited network, a request for registration.

At step 2815, a wireless device may receive from one or more of the visited networks, one or more information indicating one or more restricted RATs for the one or more visited network. The wireless device may receive from one or more visited networks, for example, one or more messages comprising one or more RATUCI. Each RATUCI of the one or more RATUCI may be associated with each visited network of the one or more visited networks. Each RATUCI may indicate one or more RATs (e.g., one or more access technologies) that may be restricted in each visited network.

At step 2820, a wireless device may be triggered to select a network based on at least one of the list of network information and/or the one or more information, and at step 2825, the wireless device may select, as a next highest priority entry, the entry of highest priority among remaining entries of a list containing network priority information. A wireless device may search for a network and/or an access technologies based on the list of networks and/or based on the one or more RATUCI. The wireless device may search for each network indicated by each entry, and/or using one or more access technologies (RATS) that may be indicated by each entry, for example, for each entry, in preceding order of the list of networks.

At step 2830, a wireless device may determine if at least one or more indicated RATs is not a restricted RAT. The wireless device may determine, for example, whether at least one of one or more access technologies that may be indicated by each entry may be restricted for each entry, based on the one or more RATUCIs. A first entry of the list of networks may indicate a network A and/or a RAT A. A second entry of the list of networks may indicate a network B and/or a RAT B. A third entry of the list of networks may indicate a network C and/or a RAT C and/or a RAT D. The one or more RATUCI may indicate that RAT A may be restricted for the network A and/or that RAT B may not be restricted for the network B. The one or more RATUCI may indicate that RAT C may be restricted for the network C and/or that RAT D may not be restricted for the network C.

A wireless device may not search for a network indicated by each entry using one or more technologies (e.g., that are indicated as restricted), for example, if one or more access technologies indicated by each entry is restricted based on the one or more RATUCI. The wireless device may determine not to search for the network A and/or not to search for the network A using the RAT A, for example, based on the first entry being for the network A, the first entry indicating the RATA, and based on the RATUCI indicating that the RAT A of the network A is restricted.

A wireless device may search for a network indicated by each entry, if one or more access technologies indicated by each entry is not restricted, based on the one or more RATUCI and by using access technology not restricted by the RATUCI. The wireless device may determine to search for the network B and/or search for the network A using the RAT B, for example, based on the second entry being for the network B, the second entry indicating the RAT B, and based on the RATUCI indicating that the RAT B of the network B is not restricted.

A wireless device may search for a network indicated by each entry, if at least one access technology of one or more access technologies indicated by each entry is not restricted, based on one or more RATUCI, and by using the one or more access technologies not restricted by RATUCI. The wireless device may determine to search for a network C, using RAT D and/or not using RAT C, for example, based on the third entry being for the network C, the third entry indicating the RAT C and/or RAT D, and based on the RATUCI indicating that the RAT C of the network C is restricted and/or based on the RATUCI indicating that the RAT D of the network D is not restricted.

At step 2835, a wireless device may select a cell of a non-restricted RAT, for the network of the next highest priority entry and perform a registration. a wireless device may find a cell for the network B and/or for the network C. The wireless device may select the cell and/or may send (e.g., transmit) a registration request message to the network B and/or to the network C, via the cell, based on finding the cell. The wireless device may send (e.g., transmit) the message to the cell (e.g., as described herein in FIGS. 18, 19, 20, 21, 22, 23, 24, 25, 26, and/or 27).

At step 2840, a wireless device may determine if the registration is successful. The wireless device may search for a next highest entry in a list of networks, using a similar mechanism, for example, if a registration is not successful (e.g., based on receiving a registration reject message and/or based on receiving additional RATUCI indicating that the RAT B and/or RAT D is restricted).

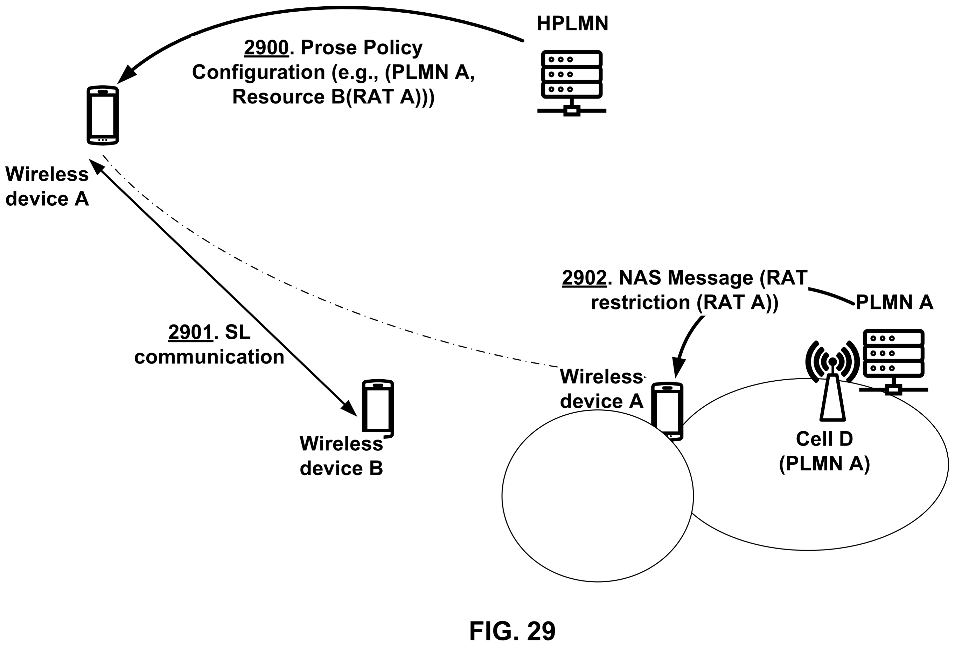

FIG. 29 shows an example method for a wireless device to establish sidelink communication. A wireless device may receive, at step 2900, from a network, a RATUCI that may indicate that a RAT may be restricted. The wireless device may not select a cell of the RAT, may not send (e.g., transmit) one or more messages (e.g., including one or more signals) to the network via the RAT, and/or may select another RAT of the network based on receiving the RATUCI. At step 2901, the wireless device may determine that it may need to perform sidelink communication via the RAT, if camping on a cell of the network. The sidelink communication may be for an emergency service and/or for a prioritized service. The sidelink communication may be a PC5 communication, a Prose Communication, a direct device to device communication, and/or the like. The sidelink communication may comprise an announcement, a discovery, and/or the like.

A wireless device may not find a suitable cell of a network. The wireless device may find a cell of the network, but the cell may use a RAT. The wireless device may not find a cell of the network, which may not use the RAT. The wireless device may be in a limited state, due to receiving a registration reject, an attach reject, and/or a service reject message, from the network.

A network may send (e.g., transmit), at step 2902, a RATUCI to a wireless device, due to congestion in the network. The congestion may occur for Uu interface and/or the congestion may or may not occur for PC5 interface. This may cause difficulty for the wireless device to coordinate with the network, in using one or more sidelink resources of the network, for the sidelink communication.

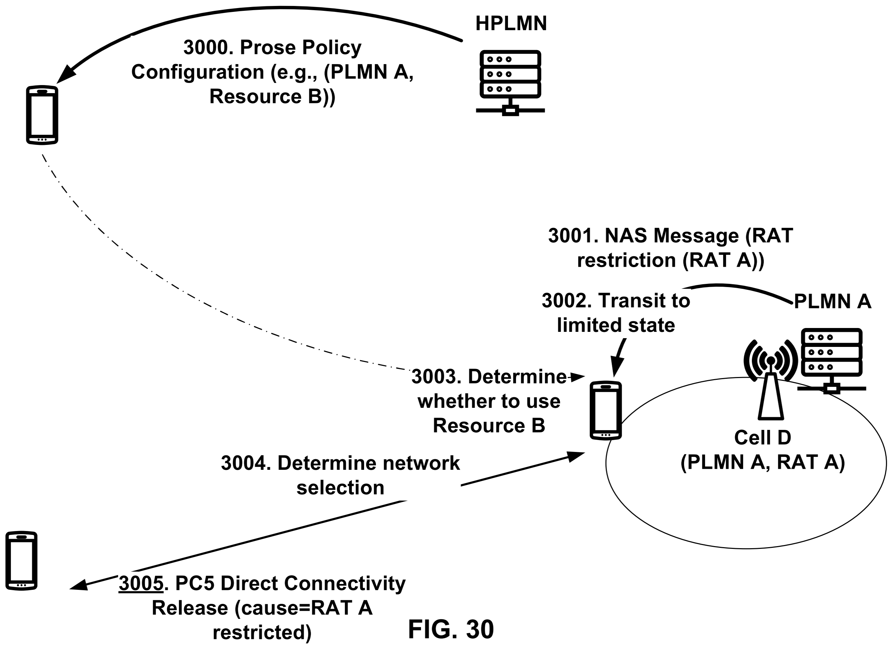

FIG. 30 shows an example method for a wireless device that prevents attempts to establish sidelink communication using a restricted RAT. A wireless device may determine not to perform sidelink communication for a RAT, based on receiving RATUCI restricting the RAT. This may help in reducing interference to the network, if the network desires to restrict use of the RAT for both Uu interface and/or the PC5 interface (e.g., sidelink interface). For brevity, based on the other part of the present disclosure, redundant details will be omitted.

A home network (e.g., HPLMN) may send (e.g., transmit), at step 3000, to a wireless device, a configuration message. The configuration message may be a DL NAS message, a registration accept message, a service accept message, a wireless device configuration update message, a deregistration accept message, a deregistration request message, and/or the like. The configuration message may comprise one or more parameters. The one or more parameters may be a Prose Policy configuration, for a PC5 interface, for sidelink communication (for sidelink discovery), for sidelink interface, and/or the like. The one or more parameters may comprise one or more entries. Each entry of the one or more entries may indicate a network and/or a resource information associated with the network. The network may be the network where the wireless device may be allowed to use a resource indicated by the resource information. The resource may be a resource for a sidelink communication (e.g., PC5 communication, V2X communication, PC5 direct communication) and/or a resource for a sidelink discovery (e.g., PC5 discovery, V2X discovery, PC5 direct discovery). The resource information may be associated with a RAT. The configuration message may comprise a first entry for a first network for a first RAT a second entry for the first network for a second RAT, and/or a third entry for a second network for a first RAT.

A wireless device may perform sidelink communication (e.g., Prose communication, Prose discovery) with other wireless devices via PC5 interface, via sidelink interface and/or the like. The wireless device may receive, at step 3001, a second NAS message (e.g., as described herein in the examples of previous figures) from a first network. The second NAS message may comprise an RATUCI. The RATUCI may indicate that the first RAT is restricted. The wireless device may determine that accessing the network via the first RAT is not allowed, for Uu interface, for example, based on receiving the RATUCI. The wireless device may not send (e.g., transmit) one or more messages to the network via Uu interface, via the first RAT, and/or may not select of a cell of the first RAT and/or may be in a MM-deregistered state for the first RAT of the network, and/or may be in limited state, for example, based on determining the first RAT is not allowed.

A wireless device may determine to perform sidelink communication over a first RAT. The wireless device may determine whether the wireless device may be served by a first RAN which may be associated with a first RAT. The wireless device may determine whether the wireless device may be served by E-UTRAN, for example, if the first RAT is E-UTRA. The wireless device may determine whether the wireless device may be served by NGRAN, for example, if the first RAT is NR.

A wireless device may determine that the wireless device may not be served by a first RAN. The wireless device may determine whether the wireless device may be allowed to perform sidelink communication, because the wireless device is not served by the first RAN. The wireless device may determine whether the wireless device is allowed (e.g., authorized) to perform sidelink communication via the first RAT, for the first network, for example, based on the one or more parameters received from the home network. The wireless device may determine that the wireless device may be allowed (e.g., authorized) to perform sidelink communication via the first RAT, and/or in the first network, and/or by using one or more sidelink resources, for example, if the one or more parameters received from the home network indicate that the wireless device is authorized for sidelink communication and/or if not served by the first RAN. The one or more parameters may indicate the one or more sidelink resources.

A wireless device may determine that the wireless device may be allowed (e.g., authorized) to perform sidelink communication via a first RAT, and/or in a first network, if not served by the first RAN associated with the first RAT and/or based on the one or more parameters. The wireless device may determine whether the first RAT may be restricted by the RATUCI for the first network, based on the determination that the wireless device may be allowed (e.g., authorized) to perform sidelink communication via the first RAT. The wireless device may determine that sidelink communication via the first RAT, in the first network, may not be allowed, that the wireless device may release, if any, one or more sidelink connections using the first RAT, and/or that the wireless device may terminate one or more sidelink communications over the first RAT, in the first network, for example, because the first RAT is restricted, based on the RATUCI received from the first network, and/or because the one or more parameters indicates the first RAT is allowed for sidelink communication.

A wireless device may send (e.g., transmit) a PC5 direct connectivity release messages to one or more wireless devices with which the wireless device may establish sidelink (PC5, Prose, direct) connections, for example, based on determining to terminate one or more sidelink connections. The PC5 may direct connectivity release messages that may comprise a cause value. The cause value may indicate at least one of the release is due to RATUCI, that the release is due to the first RAT is restricted, and/or the like.

A wireless device may determine that a sidelink communication may not be allowed in a first network and/or a sidelink resource indicated by the one or more parameters for the first network may not be allowed, for example, if the one or more parameters indicate that the first RAT is allowed for sidelink (prose) communication via the first RAT for the first network and/or if the wireless device receives the RATUCI indicating that the first RAT is restricted in the first network. The wireless device may perform a PLMN reselection for a sidelink communication. The wireless device may send (e.g., transmit) a deregistration request message to the network, the wireless device may select a second network where the first RAT is not restricted, and/or the wireless device may send (e.g., transmit) a registration request message to the second network, for example, if the wireless device is registered to the network via a second RAT and if the second RAT is not restricted, and/or if the wireless device needs to perform sidelink communication via the first RAT.

A wireless device may need to perform sidelink communication via a first RAT, in a first network. The wireless device may determine whether the first RAT may be restricted by the RATUCI. The wireless device may send (e.g., transmit) one or more sidelink messages (e.g., PC5 direct communication discovery message) via the RAT, in the first network, for example, if the first RAT is not restricted. The wireless device may not send (e.g., transmit) one or more sidelink messages (e.g., PC5 direct communication discovery message) via the first RAT, in the first network, and/or the wireless device may send (e.g., transmit) one or more sidelink messages via a second RAT, which may not be restricted by the RATUCI, of the network, for example, if the first RAT is restricted.

A wireless device may be configured with information of one or more sidelink resources by a network (e.g., a home network). The sidelink resource may be for a RAT. At step 3002, the wireless device may move into MM-deregistered state for a visited network and/or the wireless device may transit into a limited state, for example, based on receiving a reject message from the visited network. The wireless device may receive the RATUCI from the visited network. The RATUCI may indicate that the first RAT is restricted. The wireless device may trigger a sidelink procedure. The wireless device may determine whether the wireless device may use the one or more sidelink resources 3004 and/or whether a RAT associated with the triggered sidelink procedure is restricted or not for a triggered sidelink procedure. The wireless device may determine, at step 3004, to use the one or more sidelink resources and/or may send (e.g., transmit), at step 3005, a message (e.g., a PC5 Direct Prose discovery message, a PC5 Direct Prose connection establishment request message, and/or the like) via the one or more sidelink resources, and/or via the second RAT (which may not be restricted by the RATUCI), for example, based on the RAT (e.g., the second RAT) of the sidelink resource is not the first RAT (e.g., the RATUCI indicates that the second RAT is not restricted). The wireless device may determine to not use the one or more sidelink resources and/or may not send (e.g., transmit) a message (e.g., a PC5 Direct Prose discovery message, a PC5 Direct Prose connection establishment request message, and/or the like) via the one or more sidelink resources, based on determining that the RAT of the sidelink resource is the first RAT and/or based on the RAT of the sidelink resource being indicated restricted by the RATUCI.

Alternatively, and/or additionally, a network may indicate whether a RATUCI is used for Uu interface, Uu and PC5 interface, and/or PC5 interface if the network sends information of the RATUCI to the wireless device. A network A may send (e.g., transmit) RATUCI A to the wireless device. The RATUCI A may indicate at least one of:
- whether each RAT is restricted or not for each RAT (access technology),
- whether the restriction is only used for a Uu interface, or only to a PC5 interface, and/or to both Uu interface and the PC5 interface for each RAT (access technology), if each RAT is restricted.

A wireless device may, for example, based on the RATUCI A, do at least one of actions:
- the wireless device may search for a cell of the RAT B for the network if the RATUCI A indicates that RAT A is restricted and/or that RAT B is not restricted.
- the wireless device may not select of a cell of the RAT A of the network and/or the wireless device may not send (e.g., transmit) a signal for sidelink communication in the network if the RATUCI A indicates that the RAT A is restricted for Uu interface and the RAT A is restricted for PC5.
- the wireless device may not select of a cell of the RAT A of the network, the wireless device may send (e.g., transmit) and/or receive a signal (e.g., data, a message, etc.) via a Uu interface of the network via the RAT A, and/or the wireless device may send (e.g., transmit) a signal for sidelink communication in the network, via the RAT A if the RATUCI A indicates that the RAT A is restricted for Uu interface and the RAT A is not restricted for PC5.
- the wireless device may select of a cell of the RAT A of the network, the wireless device may send (e.g., transmit) and/or receive a signal (e.g., via data and/or a message) via Uu interface of the network via the RAT A, and/or the wireless device may not send (e.g., transmit) a signal for sidelink communication in the network, via PC5 interface and/or via the RAT A if the RATUCI A indicates that the RAT A is not restricted for Uu interface and the RAT A is restricted for PC5.

Alternatively, and/or additionally, a wireless device may camp on a fifth RAT of a network. The wireless device may receive from the network, a fifth RATUCI. The RATUCI may indicate that a fifth RAT may not be restricted and/or that a sixth RAT may be restricted. The wireless device may select a fifth cell of the fifth RAT of the network, and/or the wireless device may not select a sixth cell of the sixth RAT of the network, for example, based on the RATUCI. The wireless device may determine to trigger Prose Communication if the wireless device camps on the fifth cell. The wireless device may determine to perform the Prose communication via the sixth RAT, for example, based on the one or more parameters and/or based on application requirements. The wireless device may perform sidelink transmission via the sixth RAT and/or the wireless device may not perform Uu transmission via the sixth RAT, and/or the wireless device may perform Uu transmission via the fifth RAT based on the RATUCI indicating a restriction of the sixth RAT and/or based on being registered by the fifth RAT.

The example method of FIG. 30 may help in preventing a wireless device from using a RAT for a sidelink transmission, if the RAT is restricted. The example of FIG. 30 may help the wireless device to perform prioritized sidelink transmission for a RAT, based on whether the RAT is restricted for sidelink, whether the RATUCI indicates the RAT as restricted or not, and/or whether the wireless device is registered via another non-restricted RAT. information of one or more resources for the sidelink transmission may be sent to the wireless device by a home network, if the RATUCI may be sent to the wireless device via a visited network in later time. This may cause unnecessary interference in the visited network. The example of FIG. 30 may address this issue.

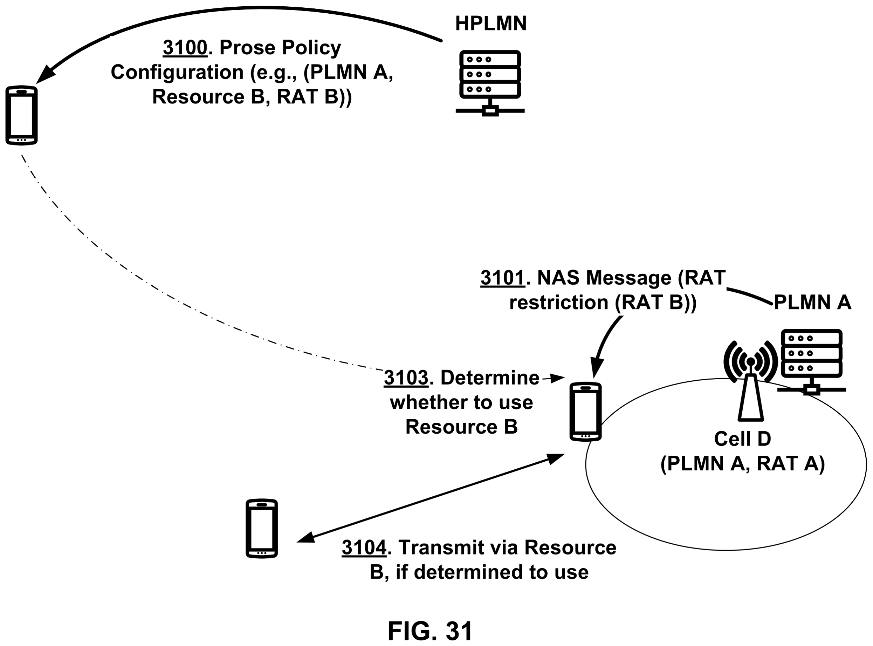

FIG. 31 shows an example method for a wireless device to perform sidelink communication using a RAT. The wireless device may determine to perform sidelink communication for a RAT, based on receiving RATUCI restricting the RAT. This may help to support service continuity, if the network desires to restrict use of the RAT for Uu interface and/or not for the PC5 interface (e.g., sidelink interface). For brevity, based on the other part of the present disclosure, redundant details will be omitted.

A home network (e.g., HPLMN) may send (e.g., transmit), at step 3100, to a wireless device, a configuration message. The configuration message may be a DL NAS message, a registration accept message, a service accept message, a wireless device configuration update message, a deregistration accept message, a deregistration request message, and/or the like. The configuration message may comprise one or more parameters. The one or more parameters may be one or more configuration parameters for Prose direct discovery and/or one or more configuration parameters for Prose direct communication, a Prose Policy configuration, for a PC5 interface, for sidelink communication, for sidelink interface, and/or the like. The one or more parameters may be one or more entries and/or may comprise the one or more entries. Each entry of the one or more entries may indicate a network (e.g., a PLMN ID) and/or a resource information associated with the network. The resource information may be a radio parameters for Prose Direct Discovery and/or for Prose Direct communication, per a PC5 of a RAT. The one or more parameters may indicate different radio resources for different RATs. The network may be the network in which the wireless device may be allowed to use a resource indicated by the resource information. The network may be different from the home network. The resource may be a resource for a sidelink communication (e.g., PC5 communication, V2X communication, PC5 direct communication) and/or a resource for a sidelink discovery (e.g., PC5 discovery, V2X discovery, PC5 direct discovery). The resource information may be associated with a RAT. The configuration message may comprise one or more entries, for Prose communication and/or discovery. The one or more entries may comprise a first entry for a first network for a first RAT and/or a second entry for the first network for a second RAT, and/or a third entry for a second network for a first RAT. The resource information may be associated with a situation if the wireless device is not served by a RAN associated with the RAT. The one or more parameters may indicate that the resource, for the RAT, may be allowed to be used if the wireless device is not served by the RAN of the RAT. The wireless device may perform sidelink communication with other wireless devices via PC5 interface, via sidelink and/or the like.

A wireless device may receive a second NAS message, at step 3101, (e.g., as described herein) from a first network (e.g., the network). The second NAS message may comprise an RATUCI. The RATUCI may indicate that the first RAT is restricted. The wireless device may determine that accessing the network via the first RAT may not be allowed, for Uu interface, for example, based on receiving the RATUCI. The wireless device may not send (e.g., transmit) one or more messages to the network via a Uu interface, via the first RAT, for example, based on the wireless device determining that accessing the network via the first RAT is not allowed. The wireless device may not camp on a cell of to the network via Uu interface, via the first RAT, for example, based on the determination that accessing the network via the first RAT is not allowed. The wireless device may transition to and/or may stay in a limited state and/or MM-deregistered state, at least for the first network and/or the first RAT, for example, based on the determination that accessing the network via the first RAT is not allowed.

A wireless device may determine whether to perform sidelink communication over a first RAT. The wireless device may determine whether the wireless device may be served by a first RAN which may be associated with the first RAT. The wireless device may determine whether the wireless device is served by E-UTRAN, for example, if the first RAT is E-UTRA. The wireless device may determine whether the wireless device is served by NGRAN, for example, if the first RAT is NR.

A wireless device may determine that the wireless device may not be served by a first RAN. The first RAN may use a first RAT and/or the first RAT may be indicated by one or more parameters (e.g., the resource information is associated with the first RAT). The wireless device may determine whether the wireless device may be allowed to perform sidelink communication and/or discovery, for the first RAN and/or for the first RAT because the wireless device is not served by the first RAN. The wireless device may determine whether the wireless device is allowed (e.g., authorized) to perform sidelink communication via the first RAT, for the first network and/or whether the wireless device may not be served by the first RAN, for example, based on the one or more parameters received from the home network. The one or more parameters may comprise a parameter indicating whether the wireless device may be allowed (e.g., authorized) to perform sidelink communication via the first RAT, for example, for the first network and/or if the wireless device is not served by the first RAN.

At step 3103, a wireless device may determine that the wireless device may be allowed (e.g., authorized) to perform sidelink communication via a first RAT, for a first network and/or whether the wireless device may not be served by the first RAN (e.g., NG-RAN) of the first RAT (e.g., NR) based on the one or more parameters and/or based on the RATUCI. The wireless device may determine whether the first RAT may be restricted by an RATUCI, for the sidelink communication and/or discovery based on the determination that the wireless device is allowed (e.g., authorized) to perform sidelink communication via the first RAT, for the first network, and/or based on that the first RAT being restricted by the RATUCI. The wireless device may determine that sidelink communication via the first RAT, in the first network and/or whether the wireless device may not be served by the first RAN, may be allowed, the wireless device may determine to whether to keep and/or establish one or more sidelink connection using the first RAT, the wireless device may determine to continue one or more sidelink communication over the first RAT, in the first network, and/or the wireless device may determine not to use the Uu interface of the first network, for example, if the first RAT is restricted by the RATUCI and/or if the one or more parameters indicates the first RAT is allowed for sidelink communication. Not using the Uu interface of the first network may indicate that the wireless device may not be registered to the first network via a first RAT, that the wireless device may be registered to the first network via a second RAT which may not be restricted, that the wireless device may be in a limited state for the first network, and/or that the wireless device may not send (e.g., transmit) a registration request message to the first network. To continue and/or keep sidelink connection and/or communication it may be indicated that the wireless device may send, at step 3104, a sidelink sign, message, and/or data via the PC5 interface using the sidelink resource.

A wireless device may determine that a sidelink communication may be allowed in a first network and/or the resource indicated by the one or more parameters for the first network may be allowed (e.g., valid) for Prose communication if the one or more parameters indicate that the first RAT is allowed for sidelink (prose) communication (discovery) via the first RAT for the first network and if the wireless device receives the RATUCI indicating that the first RAT is restricted in the first network. The wireless device may send (e.g., transmit) one or more sidelink messages (e.g., sidelink PC5 Prose communication request, sidelink PC5 Prose communication request) over the sidelink (PC5) interface based on determining that the first RAT is allowed for sidelink communication and/or discovery and/or based on the first RAT being restricted due to RATUCI. Based on determining that the first RAT is allowed for sidelink communication and/or discovery and/or based on that the first RAT is restricted due to RATUCI, the wireless device may determine not to send (e.g., transmit) one or more Uu interface messages over the Uu interface.

A wireless device may determine whether a first RAT may be restricted by an RATUCI if the wireless device needs to perform sidelink communication via the first RAT, in the first network, and/or if not served by the first RAN of the first network. The wireless device may determine that the wireless device may be authorized to perform Prose direct discovery and/or Prose direct communication, via the first RAT and/or via using resource of the first RAT, and/or via using resource of the first RAT indicated by the one or more parameters, for example, if the first RAT is restricted. The wireless device may not select a cell of the first RAT and/or may send (e.g., transmit) (e.g., transmit) into limited stated for the first RAT, of the first network, for example, if the first RAT is restricted (e.g., the RATUCI for the first network indicates that the first RAT is restricted). The wireless device may send (e.g., transmit) the one or more sidelink messages, via the PC5 interface of the first RAT, using the resource indicated by the one or more parameters, for example, in response to determining that the wireless device is authorized.

A wireless device may be configured to perform Prose direct discovery and/or Prose direct communication. The wireless device may determine to perform cell reselection procedure and/or the wireless device may perform PLMN selection based on that the wireless device being configured to perform the Prose direct discovery and/or the Prose direct communication. The wireless device may support Prose Communication. The wireless device may be in an automatic mode of PLMN selection. The wireless device may determine one or more resources allocated for Prose Communication Based on the one or more parameters. The wireless device may detect and/or search one or more cells, for example, based on the one or more parameters. The wireless device may determine one or more PLMNs advertised by the one or more cells, for example, based on detecting the one or more cells. The wireless device may receive one or more SIBs from the one or more cells. The one or more SIBs may indicate the one or more PLMNs.

A wireless device may determine one or more allowable PLMNs based on the one or more SIBs. The wireless device may determine whether a candidate PLMN may be allowed or not, for PLMN selection for Prose Communication, for example, based on whether a RATUCI associated with a candidate PLMN, among the one or more PLMNs, restricts a RAT or not. The candidate PLMN being allowed may indicate an allowable PLMN. Each allowable PLMN (each PLMN) of the one or more allowable PLMNs, for Prose communication, meets at least one of conditions:
- Each PLMN may be advertised by at least one E-UTRA cell of the one or more cells. Each PLMN may provide radio resource for Prose communication over E-UTRA PC5. Each PLMN may be in a list of authorized PLMNs for Prose communications. RATUCI associated with each PLMN may not be stored in the wireless device and/or the RATUCI associated with each PLMN may indicate that the E-UTRA RAT and/or the E-UTRAN access technology may not be restricted for each PLMN.
- Each PLMN may be advertised by at least one NR cell of the one or more cells. Each PLMN may provide radio resources for Prose communication over NR PC5. Each PLMN may be in a list of authorized PLMNs for Prose communications. RATUCI associated with each PLMN may not be stored in the wireless device and/or the RATUCI associated with each PLMN may indicate that the NR RAT and/or the NR access technology may not be restricted for each PLMN.
- Each PLMN may be advertised by at least one E-UTRA cell of the one or more cells. Each PLMN may provide radio resources for Prose communication over E-UTRA PC5. Each PLMN may be in list of authorized PLMNs for Prose communications. RATUCI associated with each PLMN may not be stored in the wireless device and/or The RATUCI associated with each PLMN may indicate that the E-UTRA RAT and/or the E-UTRAN access technology may be restricted for each PLMN.
- Or each PLMN may be advertised by at least one NR cell of the one or more cells. Each PLMN may provide radio resources for Prose communication over NR PC5. Each PLMN may be in a list of authorized PLMNs for Prose communications. RATUCI associated with each PLMN may not be stored in the wireless device and/or The RATUCI associated with each PLMN may indicate that the NR RAT and/or the NR access technology may be restricted for each PLMN.

A wireless device may select each PLMN, for Prose communication, and/or may attempt to register with each PLMN if at least one of the conditions is met for each PLMN (e.g., among the allowable PLMNs). An attempt to register may be to send (e.g., transmit) a registration request message to each PLMN. The wireless device may send (e.g., transmit) one or more sidelink messages and/or one or more data over PC5 interface, for example, if the attempt to register is successful.

A wireless device may not select each PLMN via a RAT and/or may not attempt to register with each PLMN for the RAT if at least one of the conditions is not met for each PLMN and/or if the RATUCI indicates that the RAT (e.g., NR and/or E-UTRA) is restricted.

An attempt to register may fail. The attempt may fail, for example, if the wireless device receives at least one of an indication of 'PLMN not allowed', 'EPS service not allowed', '5GS service not allowed', and/or the RATUCI. The wireless device may update a list of forbidden PLMN, to include each PLMN in the list. The wireless device may exclude each PLMN from candidates for PLMN selection for Prose communication. The wireless device may select another PLMN and may send (e.g., transmit) a registration request message, for Prose Communication.

A wireless device may perform registration to a first PLMN via a first RAT. The wireless device may communicate with the first PLMN via a first RAT via a Uu interface. The wireless device may receive from the first PLMN, a first RATUCI that may indicate that the first RAT may be restricted. The wireless device may determine to perform Prose Communication via the second RAT if the wireless device is registered to the first PLMN via the first RAT. The wireless device may determine to perform Prose communication via the first RAT and/or the wireless device may perform PLMN reselection based on determining to perform the Prose Communication via the second RAT and/or based on the first PLMN RATUCI indicating that the second RAT is restricted. Alternatively, and/or additionally. The wireless device may determine to perform deregistration to the first PLMN (e.g., via sending deregistration request message via the first RAT), may transit to MM-deregistered state (e.g., for the first RAT and/or for the second RAT of the first PLMN), may transit to a limited service state, may perform the Prose Communication via the second RAT in the limited state, may stop communicating with the first PLMN via the Uu interface, may stop sending data to and/or receiving data from a base station of the first PLMN via the second RAT (and/or via the first RAT), and/or may stop sending and/or receiving to a base station of the first PLMN via the first RAT based on determining to perform the Prose Communication via the second RAT and/or based on that the first PLMN RATUCI indicates that the second RAT is restricted.

A NG-RAN may not serve a wireless device. The wireless device may not be served by the NG-RAN, for example, if the wireless device is connected to a network via EUTRAN, if the wireless device is in out of coverage (of NG-RAN), if a RATUCI of the network indicates that the NG-RAN/NR is restricted, and/or if the registration to the network via the NG-Ran fails. The wireless device may determine whether the wireless device may be allowed for Prose Communication (e.g., Prose discovery). The wireless device may determine whether to use an operator managed radio resource if NG-RAN does not serve the wireless device. The wireless device may receive a configuration message indicating the operator managed radio resource, from the home network, if the wireless device is in the coverage of the home network. The wireless device may check whether using the operator managed radio resource causes interference, for example, based on determining to use the operator managed radio resource. The wireless device may perform a sidelink transmission (e.g., signal, data) via using the operator managed radio resource and/or the wireless device may not perform Uu transmission to the network, for example, if the wireless device determines that using the operator managed radio resource does not cause interference. The wireless device may not initiate Prose communication (e.g., discovery), may perform a de-registration procedure (e.g., sending deregistration request), may trigger a PLMN selection to a second PLMN if the wireless device determines that using the operator managed radio resource causes interference and/or that a PLMN operates in provisioned radio resources (e.g., the operator managed radio resource and/or carrier frequency), and/or if the RATUCI, associated with the PLMN, indicates that a RAT associated with the provisioned radio resources is restricted. The wireless device may not perform Prose communication (e.g., discovery), may not perform transmission to a base station of the PLMN if the wireless device determines that using the operator managed radio resource causes interference, if the wireless device determines that a PLMN operates in provisioned radio resources (e.g., the operator managed radio resource and/or carrier frequency), and/or if the RATUCI associated with the PLMN indicates that a RAT associated with the provisioned radio resources is restricted.

A wireless device may receive, via a first radio access technology (RAT), a non-access stratum (NAS) message comprising a RAT utilization control information, wherein the RAT utilization control information indicates that a second RAT is restricted. The wireless device may receive, from a base station of the first RAT, one or more system information blocks (SIBs) that may indicate a frequency and/or a reselection priority of the frequency. The wireless device may determine to perform a measurement of the frequency based on a RAT of the frequency not being the second RAT and the reselection priority. The wireless device may select, based on the measurement, a cell of the frequency. The wireless device may send, via the cell, a registration request message.

A wireless device may receive, from a core network node, a non-access stratum (NAS) message comprising a radio access technology (RAT) utilization control information, wherein the RAT utilization control information indicates that a first RAT may be restricted and a second RAT may not be restricted. The wireless device may receive, from a base station, a system information block (SIB) that may indicate a reselection priority of a frequency. The wireless device may determine, to perform a measurement of a frequency, based on at least one of a RAT of the frequency not being the first RAT, the RAT of the frequency not being the second RAT, and the reselection priority. The wireless device may select, based on the measurement, a cell of the frequency. The wireless device may send (e.g.,, transmit) via the cell, a registration request message.

A wireless device may receive radio access technology (RAT) utilization control information that may indicate that a first RAT may be restricted. The wireless device may determine to perform a measurement of a frequency, based on a second RAT of the frequency not being the first RAT. The wireless device may send, via a cell of the frequency and based on the measurement, a registration request message.

A wireless device may receive, from a base station, one or more system information blocks (SIB) that may indicate at least one of a downlink carrier frequency of the frequency, a second RAT of the frequency, a first reselection priority of the frequency, and/or a second reselection priority of a current frequency. A wireless device may further perform a measurement of the frequency. A wireless device may select a cell of the frequency.

RAT utilization control information may indicate that a third RAT and a second RAT may not be restricted. A wireless device may receive RAT utilization control information via at least one of a second RAT or a third RAT. A wireless device may receive one or more system information blocks via at least one of a second RAT or a third RAT. A current frequency may use at least one of a second RAT or a third RAT. Each of a first RAT, a second RAT, and a third RAT may be at least one of GSM, EUTRA, NR, UTRA, 6G radio.

GSM may be associated with GERAN. EUTRA may be associated with EUTRAN. NR may be associated with the NGRAN. UTRA may be associated with UTRAN. 6G radio may be associated with 6G RAN.

A determining based on a second RAT of a frequency not being a first RAT may be at least one of: determining whether the second RAT may be restricted by RAT utilization control information; whether a cell of the frequency may be suitable based on the RAT utilization control information; and whether a TA of the cell of the frequency may belong to a forbidden TA due to the RAT utilization control information.

One or more SIBs may indicate that a first reselection priority may be of higher priority than a second reselection priority. A wireless device may determine to perform a measurement based on a first reselection priority being of higher priority than a second reselection priority and that a second RAT not being restricted by an RATUCI. One or more SIBs may indicate that a reselection priority may be of lower priority than a second reselection priority.

A wireless device may determine to perform a measurement based on a first reselection priority being of lower priority than a second reselection priority, a second RAT not being restricted by an RATUCI, and/or a quality of a serving cell of a current frequency does meet a selection criterion. A wireless device may determine one or more candidate cells based on performance of measurements.

A wireless device may determine a highest ranked cell, of one or more candidate cells. A wireless device may exclude one or more excluded cells from one or more candidate cells, based on the one or more excluded cells using a first RAT and on RAT utilization control information. A wireless device may exclude one or more not suitable cells from one or more candidate cell, based on the one or more not suitable cells not being suitable and on a RAT utilization control information. A wireless device may determine that a cell may be suitable, based on a second RAT of the cell not being restricted by RAT utilization control information. A wireless device may determine that a cell may not be barred, based on a second RAT of the cell not being restricted by RAT utilization control information. A wireless device may select a cell, based on the cell not being barred or that the cell is suitable. A wireless device may select a cell, based on the cell not being in a forbidden TA.

A wireless device may receive, from a core network node, a non-access stratum (NAS) message that may comprise a radio access technology (RAT) utilization control information. The RAT utilization control information may indicate that a first RAT may be restricted. The wireless device and/or a base station may receive a system information block that may indicate a first reselection priority for a frequency. The first reselection priority may be higher than a second reselection priority of a current frequency. The wireless device may perform a measurement of frequency, based on a second RAT of the frequency not being the first RAT. The wireless device may select a cell of the one or more frequencies based on the measurement. The wireless device may send a registration request message based on the selection of the cell.

A wireless device may receive, a non-access stratum (NAS) message comprising a radio access technology (RAT) utilization control information. The RAT utilization control information may indicate that a first RAT may be restricted. The wireless device may perform measurements of one or more candidate cells for a cell selection procedure. The wireless device may rank the one or more candidate cells based on the measurements. The wireless device may determine that a highest ranked cell, of one or more candidate cells, may be a suitable cell, based on a second RAT of the cell not being the first RAT. The wireless device may send (e.g., transmit), via the cell, a registration request message.

A wireless device may receive, a non-access stratum (NAS) message comprising a radio access technology (RAT) utilization control information. The RAT utilization control information may indicate that one or more RATs may be restricted to the wireless device. The wireless device may determine whether a cell may be a suitable cell, based on the RAT utilization control information and a RAT of the cell. The wireless device may send (e.g., transmit), via the cell, a registration request message.

A wireless device may receive, via a first TA of a first access technology, a first non-access stratum (NAS) message that may comprise radio access technology (RAT) utilization control information. The RAT utilization control information may indicate that the first access technology may be restricted for the wireless device. The wireless device may add an identifier of the first TA, to a list of forbidden TAs, based on the first NAS message. The wireless device may receive, via a second access technology, a second NAS message that may not comprise the RAT utilization control information. The wireless device may delete the first TA from the list of forbidden TAs based on the second NAS message. The wireless device may send (e.g., transmit) via the first TA.

A wireless device may receive, a non-access stratum (NAS) message that may not comprise radio access technology (RAT) utilization control information. The wireless device may delete a TA from a list of forbidden TAs based on the NAS message. The wireless device may send (e.g., transmit), via the TA, a registration request message.

A wireless device may receive, from a home network, one or more configuration parameters. The one or more configuration parameters may indicate whether the wireless device may be authorized for Prose Direct Discovery if not served by a radio access network (RAN) of an access technology. The wireless device may send (e.g., transmit), to a visited network, a first non-access stratum (NAS) message that may request registration of the wireless device to the visited network. The wireless device may receive, from the visited network, a second NAS message that may comprise radio access technology (RAT) utilization control information that may indicate access technology and that may reject the registration. The wireless device may send (e.g., transmit), using a resource pool of the visited network, a Prose PC5 Discovery message, based on the RAT utilization control information not comprising an identifier indicating the access technology.

A wireless device may receive, from a home network, one or more configuration parameters. The one or more configuration parameters may indicate whether the wireless device may be authorized for Prose Direct Discovery if not served by a radio access network (RAN) of an access technology; the wireless device may receive, from a visited network, a non-access stratum (NAS) message that may comprise radio access technology (RAT) utilization control information indicating the access technology. The wireless device may not send (e.g., transmit), to a base station of the visited network, a message based on the RAT utilization control information. The wireless device may send (e.g., transmit), using a resource pool of the visited network, a Prose PC5 Discovery message.

A wireless device may receive, from a home network, one or more configuration parameters. The one or more configuration parameters may indicate whether the wireless device may be authorized for Prose Direct Discovery if not served by a radio access network (RAN) of an access technology. The wireless device may receive, from a visited network, a non-access stratum (NAS) message that may comprise radio access technology (RAT) utilization control information that may indicate the access technology being restricted. The wireless device may not send (e.g., transmit) a message, to a base station of the visited network and via a Uu interface based on the RAT utilization control information. The wireless device may send (e.g., transmit) a Prose PC5 Discovery message using a resource pool of the visited network and via PC5 interface.

A wireless device may receive, from a home network, one or more configuration parameters. The one or more configuration parameters may indicate whether the wireless device may be authorized for Prose Direct Discovery if not served by a radio access network (RAN) of an access technology. The wireless device may receive, from a visited network, a non-access stratum (NAS) message that may comprise radio access technology (RAT) utilization control information that may indicate the access technology being restricted. based on the RAT utilization control information: the wireless device may not send (e.g., transmit) a message to a base station of the visited network via Uu interface. The wireless device may not send (e.g., transmit), using a resource pool of the visited network, a Prose PC5 Discovery message via PC5 interface.

A wireless device may receive, from a home network, one or more configuration parameters. The one or more configuration parameters may indicate whether the wireless device may be authorized for Prose Direct Discovery if not served by a radio access network (RAN) of an access technology. The wireless device may receive, from a visited network, a non-access stratum (NAS) message that may comprise radio access technology (RAT) utilization control information that may indicate the access technology being restricted. The wireless device may transition to a limited state based on the RAT utilization control information. The wireless device may send (e.g., transmit) in the limited state and using a resource pool of the visited network, a Prose PC5 Discovery message via PC5 interface and via the access technology.

A wireless device may receive, from a visited network, a radio access technology (RAT) utilization control information. The wireless device may send (e.g., transmit) a ProSe PC5 Discovery message for announcement, using one or more radio resources of the visited network, based on the RAT utilization control information.

A wireless device may receive, from a visited network, a radio access technology (RAT) utilization control information that may indicate a first RAT that may be restricted. The wireless device may send (e.g., transmit) a ProSe PC5 Discovery message for announcement, using one or more radio resources of the visited network, based on the RAT utilization control information.

A wireless device may send (e.g., transmit) to a network, one or more messages via a Uu interface, via a first RAT. The wireless device may receive, from the network, RAT utilization control information. The wireless device may trigger a Prose communication for an access technology. The wireless device may determine to perform PLMN selection. The wireless device may send (e.g., transmit), in a second network, one or more sidelink signal.

A wireless device may send (e.g., transmit) to a network, one or more messages via a Uu interface and via a first RAT. The wireless device may receive, from the network, RAT utilization control information that may indicate that the first RAT may be restricted. The wireless device may trigger a Prose communication for the first RAT. The wireless device may abort the Prose Communication based on the RAT utilization control information.

A wireless device may receive, radio access technology (RAT) utilization control information that may indicate a first RAT that may be restricted. The wireless device may determine to perform a measurement of a frequency based on a second RAT of the frequency not being restricted by the RAT utilization control information. The wireless device may send (e.g., transmit) a registration request message via a cell of the frequency and based on the frequency measurement.

A wireless device may receive, from a core network node, a non-access stratum (NAS) message that may comprise radio access technology (RAT) utilization control information. The RAT utilization control information may indicate that a first RAT is restricted. The RAT utilization control information may indicate that a second RAT is not restricted. The wireless device may receive, from a base station, a system information block (SIB) that may indicate a reselection priority of a frequency. The wireless device may determine to perform a measurement of a frequency. The wireless device may determine to perform a measurement of a frequency based on a RAT of the frequency not being restricted by the RAT utilization control information. Alternatively, or additionally, the wireless device may determine to perform a measurement of a frequency based on the reselection priority. The wireless device may select, based on the measurement, a cell of the frequency. The wireless device may send (e.g., transmit), via the cell, a registration request message.

A wireless device may receive, via a first radio access technology (RAT), a non-access stratum (NAS) message that may comprise RAT utilization control information. The RAT utilization control information may indicate that a second RAT may be restricted. The wireless device may receive, from a base station of the first RAT, one or more system information blocks (SIBs) that may indicate a frequency and/or a reselection priority of the frequency. The wireless device may determine to perform a measurement of the frequency based on a RAT of the frequency not being restricted by the RAT utilization control information and/or the reselection priority. The wireless device may select, based on the measurement, a cell of the frequency. The wireless device may send (e.g., transmit), via the cell, a registration request message.

Hereinafter, various characteristics will be highlighted in a set of numbered clauses or paragraphs. These characteristics are not to be interpreted as being limiting on the invention or inventive concept but are provided merely as a highlighting of some characteristics as described herein, without suggesting a particular order of importance or relevancy of such characteristics.

Clause 1. A method comprising receiving, by a wireless device, a non-access stratum (NAS) message comprising a control information for access technology utilization, wherein the control information indicates whether one or more access technologies of a public land mobile network (PLMN) are restricted.

Clause 2. The method of clause 1, further comprising performing, by the wireless device, measurements of one or more neighboring cells of the PLMN.

Clause 3. The method of any one of clauses 1-2, further comprising determining, by the wireless device, whether a cell, of the one or more neighboring cells, is suitable, based on: whether an access technology of the cell is restricted by the control information; and the measurements of the one or more neighboring cells.

Clause 4. The method of any one of clauses 1-3, further comprising selecting, by the wireless device and based on the determining, the cell.

Clause 5. The method any one of clause 1-4, further comprising sending, by the wireless device and via the cell, a registration request message.

Clause 6. The method of any one of clauses 1-5, further comprising receiving, by the wireless device from a base station, one or more system information blocks (SIB) indicating one or more downlink carrier frequencies of the one or more neighboring cells.

Clause 7. The method of clause 6, wherein the SIBs further indicate one or more reselection priorities of the one or more downlink carrier frequencies.

Clause 8. The method of any one of clauses 1-7, wherein the access technology is at least one of GSM, EUTRA, NR, UTRA, 6G radio.

Clause 9. The method of any one of clauses 1-8, further comprising ranking by the wireless device, the one or more neighboring cells.

Clause 10. The method of any one of clauses 1-9, wherein the wireless device selects the cell, based on the access technology is not restricted by the control information.

Clause 11. The method of any one of clauses 1-10, wherein the wireless device selects the cell, based on that the cell is strongest among the one or more neighboring cells.

Clause 12. The method of any one of clauses 1-11, wherein the wireless device determines to perform the measurement based on that a quality of a serving cell does meet a selection criterion.

Clause 13. The method of any one of clauses 1-12, wherein the cell meets a selection criterion.

Clause 14. The method of any one of clauses 1-13, wherein the determining is further based on that the cell is not barred.

Clause 15. The method of clause 7, wherein a first priority of the cell is higher than a second priority of the serving cell.

Clause 16. The method of clause 7, wherein a first priority of the cell is lower than a second priority of the serving cell.

Clause 17. A wireless device comprising one or more processors and memory storing instructions that, when executed by the one or more processors, cause the wireless device to perform the method of any one of clauses 1-16.

Clause 18. A wireless device comprising one or more processors and memory storing instructions that, when executed by the one or more processors, cause the wireless device to perform the method of any one of clauses 1-16.

Clause 19. A system comprising: a wireless device configured to perform the method of any one of clauses 1-16, and a computing device configured to send the NAS message.

Clause 20. A computer-readable medium storing instructions that, when executed, cause performance of the method any one of clauses 1-16.

Clause 21. A method comprising determining, by a wireless device, whether a cell, of one or more neighboring cells, is suitable, based on whether an access technology of the cell is restricted by a control information for access technology utilization.

Clause 22. The method of clause 21, further comprising selecting, by the wireless device and based on the determining, the cell.

Clause 23. The method of any one of clauses 21-22, further comprising sending, by the wireless device and via the cell, a registration request message.

Clause 24. The method of any one of clauses 17-23, further comprising receiving by the wireless device, a non-access stratum (NAS) message comprising the control information for access technology utilization.

Clause 25. The method of any one of clauses 21-24, wherein the control information indicates whether one or more access technologies of a public landline mobile network (PLMN) are restricted.

Clause 26. The method of any one of clauses 21-25, further comprising performing, by the wireless device, measurements of the one or more neighboring cells of the PLMN.

Clause 27. The method of any one of clauses 21-26, further comprising receiving, by the wireless device from a base station, one or more system information blocks (SIB) indicating one or more downlink carrier frequencies of the one or more neighboring cells.

Clause 28. The method of clause 27, wherein the SIBs further indicate one or more reselection priorities of the one or more downlink carrier frequencies.

Clause 29. The method of any one of clauses 21-24, wherein the access technology is at least one of GSM, EUTRA, NR, UTRA, 6G radio.

Clause 30. The method of any one of clauses 21-29, further comprising ranking by the wireless device, the one or more neighboring cells.

Clause 31. The method of any one of clauses 21-30, wherein the wireless device selects the cell, based on the access technology is not restricted by the control information.

Clause 32. The method of any one of clauses 21-31, wherein the wireless device selects the cell, based on that the cell is strongest among the one or more neighboring cells.

Clause 33. The method of clause 26, wherein the wireless device determines to perform the measurement based on that a quality of a serving cell does meet a selection criterion.

Clause 34. The method of any one of clauses 21-33, wherein the cell meets a selection criterion.

Clause 35. The method of any one of clauses 21-34, wherein the determining is further based on that the cell is not barred.

Clause 36. The method of clause 28, wherein a first priority of the cell is higher than a second priority of the serving cell.

Clause 37. The method of clause 28, wherein a first priority of the cell is lower than a second priority of the serving cell.

Clause 38. A wireless device comprising one or more processors and memory storing instructions that, when executed by the one or more processors, cause the wireless device to perform the method of any one of clauses 21-37.

Clause 39. A wireless device comprising one or more processors and memory storing instructions that, when executed by the one or more processors, cause the wireless device to perform the method of any one of clauses 21-37.

Clause 40. A system comprising: a wireless device configured to perform the method of any one of clauses 21-37, and a computing device configured to send the NAS message.

Clause 41. A computer-readable medium storing instructions that, when executed, cause performance of the method any one of clauses 21-37.

Clause 42. A method comprising receiving, by a wireless device and via a first radio access technology (RAT), a non-access stratum (NAS) message comprising a RAT utilization control information, wherein the RAT utilization control information indicates that a second RAT is restricted.

Clause 43. The method of clause 42, further comprising receiving, by the wireless device from a base station of the first RAT, one or more system information blocks (SIBs) indicating a frequency or a reselection priority of the frequency.

Clause 44. The method of any one of clauses 42-43, further comprising determining, by the wireless device, to perform a measurement of the frequency, based on a RAT of the frequency not being the second RAT, and the reselection priority.

Clause 45. The method of any one of clauses 42-44, further comprising selecting, by the wireless device and based on the measurement, a cell of the frequency.

Clause 46. The method of any one of clauses 42-45, further comprising sending, by the wireless device and via the cell, a registration request message.

Clause 47.The method of any one of clauses 42-46, wherein each of the first RAT, the second RAT and the third RAT is at least one of GSM, EUTRA, NR, UTRA, 6G radio.

Clause 48.The method of any one of clauses 42-47, wherein GSM is associated with GERAN, EUTRA is associated with EUTRAN, NR is associated with the NGRAN, UTRA is associated with UTRAN, and 6G radio is associated with 6G RAN.

Clause 49. The method of any one of clauses 42-448, wherein the determining based on the second RAT of the frequency not being the first RAT is at least one of determining whether the second RAT is restricted by the RAT utilization control information, whether the cell of the frequency is suitable based on the RAT utilization control information, whether a TA of the cell of the frequency belongs to a forbidden TA due to the RAT utilization control information.

Clause 50. The method of any one of clauses 42-49, wherein the one or more SIBs indicates that the first reselection priority is of higher priority than the second reselection priority.

Clause 51. The method of any one of clauses 42-50, wherein the wireless device determines to perform the measurement based on that the first reselection priority is of higher priority than the second reselection priority and that the second RAT is not restricted by the RATUCI.

Clause 52. The method of any one of clauses 42-51, wherein the one or more SIBs indicates that the first reselection priority is of lower priority than the second reselection priority.

Clause 53. The method of any one of clauses 42-52, wherein the wireless device determines to perform the measurement based on that the first reselection priority is of lower priority than the second reselection priority and that the second RAT is not restricted by the RATUCI and that a quality of a serving cell of the current frequency does meet a selection criterion.

Clause 54. The method of any one of clauses 42-53, wherein the wireless device determines one or more candidate cells based on perform the measurements.

Clause 55. The method of any one of clauses 42-54, wherein the wireless device determines a highest ranked cell, of the one or more candidate cells.

Clause 56. The method of any one of clauses 42-55 wherein the wireless device excludes one or more excluded cells from the one or more candidate cell, based on that the one or more excluded cells uses the first RAT, based on the RAT utilization control information.

Clause 57. The method of any one of clauses 42-56, wherein the wireless device excludes one or more not suitable cells from the one or more candidate cell, based on that the one or more not suitable cells are not suitable, based on the RAT utilization control information.

Clause 58. The method of any one of clauses 42-57, wherein the wireless device determines that the cell is suitable, based on that the second RAT of the cell is not restricted by the RAT utilization control information.

Clause 59. The method of any one of clauses 42-58, wherein the wireless device determines that the cell is not barred, based on that the second RAT of the cell is not restricted by the RAT utilization control information.

Clause 60. The method of any one of clauses 42-59, wherein the wireless device selects the cell, based on that the cell is not barred or that the cell is suitable.

Clause 61. The method of any one of clauses 42-60, wherein the wireless device selects the cell, based on that the cell is not in the forbidden TA.

Clause 62. A wireless device comprising one or more processors and memory storing instructions that, when executed by the one or more processors, cause the wireless device to perform the method of any one of clauses 42-61.

Clause 63. A wireless device comprising one or more processors and memory storing instructions that, when executed by the one or more processors, cause the wireless device to perform the method of any one of clauses 42-61.

Clause 64. A system comprising: a wireless device configured to perform the method of any one of clauses 42-61, and a computing device configured to send the NAS message.

Clause 65. A computer-readable medium storing instructions that, when executed, cause performance of the method any one of clauses 42-61.

Clause 66. A method comprising receiving, by a wireless device and from a core network node, a non-access stratum (NAS) message comprising a radio access technology (RAT) utilization control information, wherein the RAT utilization control information indicates that a first RAT is restricted and a second RAT is not restricted.

Clause 67. The method of clause 66, further comprising receiving, by the wireless device and from a base station, a system information block (SIB) indicating a reselection priority of a frequency;

Clause 68. The method of any one of clauses 66-67, further comprising determining, by the wireless device, to perform a measurement of a frequency, based on at least one of that a RAT of the frequency is not the first RAT that the RAT of the frequency is the second RAT and the reselection priority.

Clause 69. The method of any one of clauses 66-68, further comprising selecting, by the wireless device and based on the measurement, a cell of the frequency.

Clause 70. The method of any one of clause 66-69, further comprising sending, by the wireless device and via the cell, a registration request message.

Clause 71. The method of any one of clauses 66-70, wherein each of the first RAT, the second RAT and the third RAT is at least one of GSM, EUTRA, NR, UTRA, 6G radio.

Clause 72. The method of any one of clauses 66-71, wherein GSM is associated with GERAN, EUTRA is associated with EUTRAN, NR is associated with the NGRAN, UTRA is associated with UTRAN, and 6G radio is associated with 6G RAN.

Clause 73. The method of any one of clauses 66-72, wherein the determining based on the second RAT of the frequency not being the first RAT is at least one of determining whether the second RAT is restricted by the RAT utilization control information, whether the cell of the frequency is suitable based on the RAT utilization control information, whether a TA of the cell of the frequency belongs to a forbidden TA due to the RAT utilization control information.

Clause 74. The method of any one of clauses 66-73, wherein the one or more SIBs indicates that the first reselection priority is of higher priority than the second reselection priority.

Clause 75 The method of any one of clauses 66-74, wherein the wireless device determines to perform the measurement based on that the first reselection priority is of higher priority than the second reselection priority and that the second RAT is not restricted by the RATUCI.

Clause 76. The method of any one of clauses 66-75, wherein the one or more SIBs indicates that the first reselection priority is of lower priority than the second reselection priority.

Clause 77. The method of any one of clauses 66-76, wherein the wireless device determines to perform the measurement based on that the first reselection priority is of lower priority than the second reselection priority and that the second RAT is not restricted by the RATUCI and that a quality of a serving cell of the current frequency does meet a selection criterion.

Clause 78. The method of any one of clauses 66-77, wherein the wireless device determines one or more candidate cells based on perform the measurements.

Clause 79. The method of any one of clauses 66-78, wherein the wireless device determines a highest ranked cell, of the one or more candidate cells.

Clause 80. The method of any one of clauses 66-79, wherein the wireless device excludes one or more excluded cells from the one or more candidate cell, based on that the one or more excluded cells uses the first RAT, based on the RAT utilization control information.

Clause 81. The method of any one of clauses 66-80, wherein the wireless device excludes one or more not suitable cells from the one or more candidate cell, based on that the one or more not suitable cells are not suitable, based on the RAT utilization control information.

Clause 82. The method of any one of clauses 66-81, wherein the wireless device determines that the cell is suitable, based on that the second RAT of the cell is not restricted by the RAT utilization control information.

Clause 83. The method of any one of clauses 66-82, wherein the wireless device determines that the cell is not barred, based on that the second RAT of the cell is not restricted by the RAT utilization control information.

Clause 84. The method of any one of clauses 66-83, wherein the wireless device selects the cell, based on that the cell is not barred or that the cell is suitable.

Clause 85. The method of any one of clauses 66-84, wherein the wireless device selects the cell, based on that the cell is not in the forbidden TA.

Clause 86. A wireless device comprising one or more processors and memory storing instructions that, when executed by the one or more processors, cause the wireless device to perform the method of any one of clauses 66-85.

Clause 87. A wireless device comprising one or more processors and memory storing instructions that, when executed by the one or more processors, cause the wireless device to perform the method of any one of clauses 66-85.

Clause 88. A system comprising: a wireless device configured to perform the method of any one of clauses 66-85, and a core network node configured to send the NAS message.

Clause 89. A computer-readable medium storing instructions that, when executed, cause performance of the method any one of clauses 66-85.

Clause 90. A method comprising receiving, by a wireless device, a radio access technology (RAT) utilization control information indicating that a first RAT is restricted.

Clause 91. The method of clause 90, further comprising determining to perform, by the wireless device, measurement of a frequency, based on a second RAT of the frequency not being the first RAT.

Clause 92. The method of any one of clauses 90-91, further comprising sending, by the wireless device via a cell of the frequency and based on the measurement, a registration request message.

Clause 93. The method of any one of clauses 90-92, further comprising receiving, by the wireless device from a base station, one or more system information blocks (SIB) indicating at least one of a downlink carrier frequency of the frequency, the second RAT of the frequency, a first reselection priority of the frequency, a second reselection priority of a current frequency.

Clause 94. The method of any one of clauses 90-93, further comprising performing measurement of the frequency.

Clause 95. The method of any one of clauses 90-94, further comprising selecting, by the wireless device, the cell of the frequency.

Clause 96. The method of any one of clauses 90-95, wherein the RAT utilization control information indicates that a third RAT and a second RAT are not restricted.

Clause 97. The method of any one of clauses 90-96, wherein the wireless device receives the RAT utilization control information via at least one of the second RAT or the third RAT.

Clause 98. The method of any one of clauses 90-97, wherein the wireless device receives the one or more system information blocks via at least one of the second RAT or the third RAT.

Clause 99. The method of any one of clauses 90-98, wherein the current frequency employes at least one of the second RAT or the third RAT.

Clause 100. The method of any one of clauses 90-99, wherein each of the first RAT, the second RAT and the third RAT is at least one of GSM, EUTRA, NR, UTRA, 6G radio.

Clause 101. The method of any one of clauses 90-100, wherein GSM is associated with GERAN, EUTRA is associated with EUTRAN, NR is associated with the NGRAN, UTRA is associated with UTRAN, and 6G radio is associated with 6G RAN.

Clause 102. The method of any one of clauses 90-101, wherein the determining based on the second RAT of the frequency not being the first RAT is at least one of determining whether the second RAT is restricted by the RAT utilization control information, whether the cell of the frequency is suitable based on the RAT utilization control information, whether a TA of the cell of the frequency belongs to a forbidden TA due to the RAT utilization control information.

Clause 103. The method of any one of clauses 90-102, wherein the one or more SIBs indicates that the first reselection priority is of higher priority than the second reselection priority.

Clause 104. The method of any one of clauses 90-103, wherein the wireless device determines to perform the measurement based on that the first reselection priority is of higher priority than the second reselection priority and that the second RAT is not restricted by the RATUCI.

Clause 105. The method of any one of clauses 90-104, wherein the one or more SIBs indicates that the first reselection priority is of lower priority than the second reselection priority.

Clause 106. The method of any one of clauses 90-105, wherein the wireless device determines to perform the measurement based on that the first reselection priority is of lower priority than the second reselection priority and that the second RAT is not restricted by the RATUCI and that a quality of a serving cell of the current frequency does meet a selection criterion.

Clause 107. The method of any one of clauses 90-106, wherein the wireless device determines one or more candidate cells based on perform the measurements.

Clause 108. The method of any one of clauses 90-107, wherein the wireless device determines a highest ranked cell, of the one or more candidate cells.

Clause 109. The method of any one of clauses 90-108, wherein the wireless device excludes one or more excluded cells from the one or more candidate cell, based on that the one or more excluded cells uses the first RAT, based on the RAT utilization control information.

Clause 110. The method of any one of clauses 90-109, wherein the wireless device excludes one or more not suitable cells from the one or more candidate cell, based on that the one or more not suitable cells are not suitable, based on the RAT utilization control information.

Clause 111. The method of any one of clauses 90-110, wherein the wireless device determines that the cell is suitable, based on that the second RAT of the cell is not restricted by the RAT utilization control information.

Clause 112. The method of any one of clauses 90-111, wherein the wireless device determines that the cell is not barred, based on that the second RAT of the cell is not restricted by the RAT utilization control information.

Clause 113. The method of any one of clauses 90-112, wherein the wireless device selects the cell, based on that the cell is not barred or that the cell is suitable.

Clause 114. The method of any one of clauses 90-113, wherein the wireless device selects the cell, based on that the cell is not in the forbidden TA.

Clause 115. A wireless device comprising one or more processors and memory storing instructions that, when executed by the one or more processors, cause the wireless device to perform the method of any one of clauses 90-113.

Clause 116. A wireless device comprising one or more processors and memory storing instructions that, when executed by the one or more processors, cause the wireless device to perform the method of any one of clauses 90-113.

Clause 117. A system comprising: a wireless device configured to perform the method of any one of clauses 90-113, and a computing device configured to send the RAT utilization control information.

Clause 118. A computer-readable medium storing instructions that, when executed, cause performance of the method any one of clauses 90-113.

Clause 119. A method comprising receiving, by a wireless device and via a first radio access technology (RAT), a non-access stratum (NAS) message comprising a RAT utilization control information, wherein the RAT utilization control information indicates that a second RAT is restricted.

Clause 120. The method of clause 119, further comprising receiving, by the wireless device and from a base station of the first RAT, one or more system information blocks (SIBs) indicating a frequency and a reselection priority of the frequency.

Clause 121. The method of any one of clauses 119-120, further comprising determining, by the wireless device, to perform a measurement of the frequency, based on a RAT of the frequency not being restricted by the RAT utilization control information and the reselection priority.

Clause 122. The method of any one of clauses 119-121, further comprising selecting, by the wireless device and based on the measurement, a cell of the frequency.

Clause 123. The method of any one of clauses 119-122, further comprising sending, by the wireless device and via the cell, a registration request message.

Clause 124. A wireless device comprising one or more processors and memory storing instructions that, when executed by the one or more processors, cause the wireless device to perform the method of any one of clauses 119-122.

Clause 125. A system comprising: a wireless device configured to perform the method of any one of clauses 119-122, and computing device configured to send the NAS message.

Clause 126. A computer-readable medium storing instructions that, when executed, cause performance of the method any one of clauses 119-122.

Clause 127. A method comprising receiving, by a wireless device and from a core network node, a non-access stratum (NAS) message comprising a radio access technology (RAT) utilization control information, wherein the RAT utilization control information indicates that a first RAT is restricted and a second RAT is not restricted.

Clause 128. The method of clause 127, further comprising receiving, by the wireless device and from a base station, a system information block (SIB) indicating a reselection priority of a frequency.

Clause 129. The method of cany one of clauses 127-128, further comprising determining, by the wireless device, to perform a measurement of a frequency, based on at least one of: that a RAT of the frequency is not restricted by the RAT utilization control information; or the reselection priority.

Clause 130. The method of any one of clauses 127-129, further comprising selecting, by the wireless device and based on the measurement, a cell of the frequency.

Clause 131. The method of any one of clauses 127-130, further comprising sending, by the wireless device and via the cell, a registration request message.

Clause 132. A wireless device comprising one or more processors and memory storing instructions that, when executed by the one or more processors, cause the wireless device to perform the method of any one of clauses 127-131.

Clause 133. A wireless device comprising one or more processors and memory storing instructions that, when executed by the one or more processors, cause the wireless device to perform the method of any one of clauses 127-131.

Clause 134. A system comprising: a wireless device configured to perform the method of any one of clauses 66-85, and a core network node configured to send the NAS message.

Clause 135. A computer-readable medium storing instructions that, when executed, cause performance of the method any one of clauses 127-131.

Clause 136. A method comprising receiving, by a wireless device, a radio access technology (RAT) utilization control information indicating that a first RAT is restricted.

Clause 137. The method of clause 136, further comprising determining to perform, by the wireless device, measurement of a frequency, based on a second RAT of the frequency not being restricted by the RAT utilization control information.

Clause 138. The method of any one of clauses 136-137, further comprising sending, by the wireless device and via a cell of the frequency and based on the measurement, a registration request message.

Clause 139. The method of any one of clauses 136-138, further comprising receiving, by the wireless device from a base station, one or more system information blocks (SIB) indicating at least one of a downlink carrier frequency of the frequency, the second RAT of the frequency, a first reselection priority of the frequency, a second reselection priority of a current frequency.

Clause 140. The method of any one of clauses 136-139, further comprising performing measurement of the frequency.

Clause 141. The method of any one of clauses 136-140, further comprising selecting, by the wireless device, the cell of the frequency.

Clause 142. The method of any one of clauses 136-141, wherein the RAT utilization control information indicates that a third RAT and a second RAT are not restricted.

Clause 143. The method of any one of clauses 136-142, wherein the wireless device receives the RAT utilization control information via at least one of the second RAT or the third RAT.

Clause 144. The method of any one of clauses 136-143, wherein the wireless device receives the one or more system information blocks via at least one of the second RAT or the third RAT.

Clause 145. The method of any one of clauses 136-144, wherein the current frequency employes at least one of the second RAT or the third RAT.

Clause 146. The method of any one of clauses 136-145, wherein each of the first RAT, the second RAT and the third RAT is at least one of GSM, EUTRA, NR, UTRA, 6G radio.

Clause 147. The method of any one of clauses 136-146, wherein GSM is associated with GERAN, EUTRA is associated with EUTRAN, NR is associated with the NGRAN, UTRA is associated with UTRAN, and 6G radio is associated with 6G RAN.

Clause 148. The method of any one of clauses 136-147, wherein the determining based on the second RAT of the frequency not being the first RAT is at least one of determining whether the second RAT is restricted by the RAT utilization control information, whether the cell of the frequency is suitable based on the RAT utilization control information, whether a TA of the cell of the frequency belongs to a forbidden TA due to the RAT utilization control information.

Clause 149. The method of any one of clauses 136-148, wherein the one or more SIBs indicates that the first reselection priority is of higher priority than the second reselection priority.

Clause 150. The method of any one of clauses 136-149 wherein the wireless device determines to perform the measurement based on that the first reselection priority is of higher priority than the second reselection priority and that the second RAT is not restricted by the RATUCI.

Clause 151. The method of any one of clauses 136-150, wherein the one or more SIBs indicates that the first reselection priority is of lower priority than the second reselection priority.

Clause 152. The method of any one of clauses 136-151, wherein the wireless device determines to perform the measurement based on that the first reselection priority is of lower priority than the second reselection priority and that the second RAT is not restricted by the RATUCI and that a quality of a serving cell of the current frequency does meet a selection criterion.

Clause 153. The method of any one of clauses 136-152, wherein the wireless device determines one or more candidate cells based on perform the measurements.

Clause 154. The method of any one of clauses 136-153, wherein the wireless device determines a highest ranked cell, of the one or more candidate cells.

Clause 155. The method of any one of clauses 136-154, wherein the wireless device excludes one or more excluded cells from the one or more candidate cell, based on that the one or more excluded cells uses the first RAT, based on the RAT utilization control information.

Clause 156. The method of any one of clauses 136-155, wherein the wireless device excludes one or more not suitable cells from the one or more candidate cell, based on that the one or more not suitable cells are not suitable, based on the RAT utilization control information.

Clause 157. The method of any one of clauses 136-156, wherein the wireless device determines that the cell is suitable, based on that the second RAT of the cell is not restricted by the RAT utilization control information.

Clause 158. The method of any one of clauses 136-157, wherein the wireless device determines that the cell is not barred, based on that the second RAT of the cell is not restricted by the RAT utilization control information.

Clause 159. The method of any one of clauses 136-158, wherein the wireless device selects the cell, based on that the cell is not barred or that the cell is suitable.

Clause 160. The method of any one of clauses 136-159, wherein the wireless device selects the cell, based on that the cell is not in the forbidden TA.

Clause 161. A wireless device comprising one or more processors and memory storing instructions that, when executed by the one or more processors, cause the wireless device to perform the method of any one of clauses 136-160.

Clause 162. A system comprising: a wireless device configured to perform the method of any one of clauses 136-160, and a computing device configured to send the NAS message.

Clause 163. A computer-readable medium storing instructions that, when executed, cause performance of the method any one of clauses 136-160.

Clause 164. A method comprising receiving, by a wireless device from a core network node, a non-access stratum (NAS) message comprising a radio access technology (RAT) utilization control information, wherein the RAT utilization control information indicates that a first RAT is restricted.

Clause 165. The method of clause 164, further comprising receiving, by the wireless device and a base station, a system information block indicating a first reselection priority for a frequency, wherein the first reselection priority is higher than a second reselection priority of a current frequency.

Clause 166. The method of any one of clauses 164-165, further comprising performing, by the wireless device, a measurement of the frequency, based on the second RAT of the frequency is not the first RAT.

Clause 167. The method of any one of clauses 164-166, further comprising selecting, by the wireless device and based on the measurement, a cell of the one or more frequencies.

Clause 168. The method of any one of clauses 164-167, further comprising sending, by the wireless device and based on the selecting the cell, a registration request message.

Clause 169. The method of any one of clauses 164-168, further comprising receiving, by the wireless device from a base station, one or more system information blocks (SIB) indicating at least one of a downlink carrier frequency of the frequency, the second RAT of the frequency, a first reselection priority of the frequency, a second reselection priority of a current frequency.

Clause 170. The method of any one of clauses 164-169, further comprising performing measurement of the frequency.

Clause 171. The method of any one of clauses 164-170, further comprising selecting, by the wireless device, the cell of the frequency.

Clause 172. The method of any one of clauses 164-171, wherein the RAT utilization control information indicates that a third RAT and a second RAT are not restricted.

Clause 173. The method of any one of clauses 164-172, wherein the wireless device receives the RAT utilization control information via at least one of the second RAT or the third RAT.

Clause 174. The method of any one of clauses 164-173, wherein the wireless device receives the one or more system information blocks via at least one of the second RAT or the third RAT.

Clause 175. The method of any one of clauses 164-174, wherein the current frequency employes at least one of the second RAT or the third RAT.

Clause 176. The method of any one of clauses 164-175, wherein each of the first RAT, the second RAT and the third RAT is at least one of GSM, EUTRA, NR, UTRA, 6G radio.

Clause 177. The method of any one of clauses 164-176, wherein GSM is associated with GERAN, EUTRA is associated with EUTRAN, NR is associated with the NGRAN, UTRA is associated with UTRAN, and 6G radio is associated with 6G RAN.

Clause 178. The method of any one of clauses 164-177, wherein the determining based on the second RAT of the frequency not being the first RAT is at least one of determining whether the second RAT is restricted by the RAT utilization control information, whether the cell of the frequency is suitable based on the RAT utilization control information, whether a TA of the cell of the frequency belongs to a forbidden TA due to the RAT utilization control information.

Clause 179. The method of any one of clauses 164-178, wherein the one or more SIBs indicates that the first reselection priority is of higher priority than the second reselection priority.

Clause 180. The method of any one of clauses 164-179 wherein the wireless device determines to perform the measurement based on that the first reselection priority is of higher priority than the second reselection priority and that the second RAT is not restricted by the RATUCI.

Clause 181. The method of any one of clauses 164-180, wherein the one or more SIBs indicates that the first reselection priority is of lower priority than the second reselection priority.

Clause 182. The method of any one of clauses 164-181, wherein the wireless device determines to perform the measurement based on that the first reselection priority is of lower priority than the second reselection priority and that the second RAT is not restricted by the RATUCI and that a quality of a serving cell of the current frequency does meet a selection criterion.

Clause 183. The method of any one of clauses 164-182, wherein the wireless device determines one or more candidate cells based on perform the measurements.

Clause 184. The method of any one of clauses 164-183, wherein the wireless device determines a highest ranked cell, of the one or more candidate cells.

Clause 185. The method of any one of clauses 164-184, wherein the wireless device excludes one or more excluded cells from the one or more candidate cell, based on that the one or more excluded cells uses the first RAT, based on the RAT utilization control information.

Clause 186. The method of any one of clauses 164-185, wherein the wireless device excludes one or more not suitable cells from the one or more candidate cell, based on that the one or more not suitable cells are not suitable, based on the RAT utilization control information.

Clause 187. The method of any one of clauses 164-186, wherein the wireless device determines that the cell is suitable, based on that the second RAT of the cell is not restricted by the RAT utilization control information.

Clause 188. The method of any one of clauses 164-187, wherein the wireless device determines that the cell is not barred, based on that the second RAT of the cell is not restricted by the RAT utilization control information.

Clause 189. The method of any one of clauses 164-188, wherein the wireless device selects the cell, based on that the cell is not barred or that the cell is suitable.

Clause 190. The method of any one of clauses 164-189, wherein the wireless device selects the cell, based on that the cell is not in the forbidden TA.

Clause 191. The method of any one of clauses 136-190, wherein the wireless device selects the cell, based on that the cell is not in the forbidden TA.

Clause 192. A wireless device comprising one or more processors and memory storing instructions that, when executed by the one or more processors, cause the wireless device to perform the method of any one of clauses 164-191.

Clause 193. A system comprising: a wireless device configured to perform the method of any one of clauses 164-191, and a core network node configured to send the NAS message.

Clause 194. A computer-readable medium storing instructions that, when executed, cause performance of the method any one of clauses 164-191.

Clause 195. A method comprising receiving, by a wireless device, a non-access stratum (NAS) message comprising a radio access technology (RAT) utilization control information, wherein the RAT utilization control information indicates that a first RAT is restricted.

Clause 196. The method of clause 195, further comprising performing, by the wireless device and for a cell selection procedure, measurement of one or more candidate cells.

Clause 197. The method of any one of clauses 195-196, further comprising ranking, by the wireless device and based on the measurement, the one or more candidate cells.

Clause 198. The method of any one of clauses 195-197, further comprising determining, by the wireless device, that a highest ranked cell, of one or more candidate cells, is a suitable cell, based on that a second RAT of the cell is not the first RAT.

Clause 199. The method of any one of clauses 195-198, further comprising sending, by the wireless device and via the cell, a registration request message.

Clause 200. A method comprising receiving, by a wireless device, a non-access stratum (NAS) message comprising a radio access technology (RAT) utilization control information, wherein the RAT utilization control information indicates that one or more RATs are restricted to the wireless device.

Clause 201. The method of clause 200, further comprising determining, by the wireless device, whether a cell is a suitable cell, based on the RAT utilization control information and a RAT of the cell.

Clause 202. The method of any one of clauses clause 200-201, further comprising sending, by the wireless device and via the cell, a registration request message.

Clause 203. A wireless device comprising one or more processors and memory storing instructions that, when executed by the one or more processors, cause the wireless device to perform the method of any one of clauses 195-202.

Clause 204. A system comprising: a wireless device configured to perform the method of any one of clauses 195-202, and a computing device configured to send the NAS message.

Clause 205. A computer-readable medium storing instructions that, when executed, cause performance of the method any one of clauses 195-202.

Clause 206. A method comprising receiving, by a wireless device and via a first tracking area (TA) of a first access technology, a first non-access stratum (NAS) message comprising a radio access technology (RAT) utilization control information, wherein the RAT utilization control information indicates the first access technology is restricted for the wireless device.

Clause 207. The method of clause 206, further comprising adding, by the wireless device and based on the first NAS message, an identifier of the first TA, to a list of forbidden TAs.

Clause 208. The method of any one of clauses 206-207, further comprising receiving, by the wireless device and via a second access technology, a second NAS message not comprising the RAT utilization control information.

Clause 209. The method of any one of clauses 206-208, further comprising deleting, by the wireless device and based on the second NAS message, the first TA from the list of forbidden TAs.

Clause 210. The method of any one of clauses 206-209, further comprising sending, by the wireless device and via the first TA, a registration request message.

Clause 211. A method comprising receiving, by a wireless device, a non-access stratum (NAS) message not comprising a radio access technology (RAT) utilization control information.

Clause 212. The method of clause 211, further comprising deleting, by the wireless device and based on the NAS message, a TA from a list of forbidden TAs.

Clause 213. The method of any one of clauses 211-212, further comprising sending, by the wireless device via the TA, a registration request message.

Clause 214. A wireless device comprising one or more processors and memory storing instructions that, when executed by the one or more processors, cause the wireless device to perform the method of any one of clauses 206-213.

Clause 215. A system comprising: a wireless device configured to perform the method of any one of clauses 206-213, and a computing device configured to send the NAS message.

Clause 216. A computer-readable medium storing instructions that, when executed, cause performance of the method any one of clauses 206-213.

Clause 217. A method comprising receiving, by a wireless device and from a home network, one or more configuration parameters, wherein the one or more configuration parameters indicate whether the wireless device is authorized for Prose Direct Discovery when not served by a radio access network (RAN) of an access technology.

Clause 218. The method of clause 217, further comprising sending, by the wireless device to a visited network, a first non-access stratum (NAS) message requesting registration of the wireless device to the visited network.

Clause 219. The method of any one of clauses 217-218, further comprising receiving, by the wireless device and from the visited network, a second NAS message, rejecting the registration, comprising a radio access technology (RAT) utilization control information indicating the access technology.

Clause 220. The method of any one of clauses 217-219, further comprising sending, by the wireless device and using a resource pool of the visited network, a Prose PC5 Discovery message, based on the RAT utilization control information not comprising an identifier indicating the access technology.

Clause 221. A wireless device comprising one or more processors and memory storing instructions that, when executed by the one or more processors, cause the wireless device to perform the method of any one of clauses 217-219.

Clause 222. A system comprising: a wireless device configured to perform the method of any one of clauses 217-219, and a computing device configured to send the one or more configuration parameters.

Clause 223. A computer-readable medium storing instructions that, when executed, cause performance of the method any one of clauses 217-219.

Clause 224. A method comprising receiving, by a wireless device and from a home network, one or more configuration parameters, wherein the one or more configuration parameters indicate whether the wireless device is authorized for Prose Direct Discovery when not served by a radio access network (RAN) of an access technology.

Clause 225. The method of clause 224, further comprising receiving, by the wireless device and from a visited network, a non-access stratum (NAS) message, a radio access technology (RAT) utilization control information indicating the access technology.

Clause 226. The method of any one of clauses 224-225, further comprising, based on the RAT utilization control information, not sending, by the wireless device to a base station of the visited network, a message.

Clause 227. The method of any one of clauses 224-226, further comprising sending, by the wireless device and using a resource pool of the visited network, a Prose PC5 Discovery message.

Clause 228. A wireless device comprising one or more processors and memory storing instructions that, when executed by the one or more processors, cause the wireless device to perform the method of any one of clauses 224-227.

Clause 229. A system comprising: a wireless device configured to perform the method of any one of clauses 224-227, and a computing device configured to send the RAT utilization control information.

Clause 230. A computer-readable medium storing instructions that, when executed, cause performance of the method any one of clauses 224-227.

Clause 231. A method comprising receiving, by a wireless device and from a visited network, a radio access technology (RAT) utilization control information.

Clause 232. The method of clause 231, further comprising sending, by the wireless device and based on the RAT utilization control information, a ProSe PC5 Discovery message for announcement, using one or more radio resources of the visited network.

Clause 233. A wireless device comprising one or more processors and memory storing instructions that, when executed by the one or more processors, cause the wireless device to perform the method of any one of clauses 231-232.

Clause 234. A system comprising: a wireless device configured to perform the method of any one of clauses 231-232, and a computing device configured to send the RAT utilization control information.

Clause 235. A computer-readable medium storing instructions that, when executed, cause performance of the method any one of clauses 231-232.

Clause 236. A method comprising: receiving, by a wireless device, a message comprising control information for access technology utilization, wherein the control information indicates whether one or more access technologies of a public land mobile network (PLMN) are restricted.

Clause 237. The method of clause 236, further comprising, sending a registration message via a cell that is selected based on: measurements of one or more neighboring cells of the PLMN, and whether an access technology, of the one or more access technologies, is restricted by the control information.

Clause 238. The method of any one of clauses 236-237, further comprising, receiving a second message comprising a selection priority of a frequency; wherein the control information further comprises information indicating a restricted radio access technology (RAT); and wherein the selection is further based on a second RAT, of the frequency, not being the restricted RAT.

Clause 239. The method of any one of clauses 236-238, wherein the access technology, of the one or more access technologies, is at least one of: Global System for Mobile communications (GSM), Evolved Universal mobile telecommunications system Terrestrial Radio Access (EUTRA), New Radio (NR), Universal mobile telecommunications system Terrestrial Radio Access (UTRA), or 6G radio.

Clause 240. The method of any one of clauses 236-239, wherein the message is a non-access stratum (NAS) message.

Clause 241. The method of any one of clauses 236-240, further comprising receiving, by the wireless device from a base station, one or more system information blocks (SIBs) indicating one or more downlink carrier frequencies of the one or more neighboring cells, wherein the one or more SIBs further indicate one or more selection priorities; and wherein selecting the cell is further based on the one or more selection priorities.

Clause 242. The method of any one of clauses 236-241, further comprising ranking by the wireless device, the one or more neighboring cells; and wherein the selecting is based on the ranking.

Clause 243. The method of any one of clauses 236-242, wherein the selecting the cell is based on the cell having a strongest signal among the one or more neighboring cells.

Clause 244. The method of any one of clauses 236-243, wherein selecting the cell is based on a selection criterion.

Clause 245. The method of any one of clauses 236-244, further comprising: determining, by the wireless device, whether the cell, of the one or more neighboring cells, is suitable, based on: whether the access technology of the cell is restricted by the control information; and the measurements of the one or more neighboring cells; wherein the determining whether a cell is suitable is further based on the cell not being barred.

Clause 246. The method of any one of clauses 236-245, wherein a first priority of the cell is higher than a second priority of a serving cell.

Clause 247. The method of any one of clauses 236-246, further comprising: determining to perform the measurements of the one or more neighboring cells, based on a quality of a serving cell meeting a selection criterion.

Clause 248. The method of any one of clauses 236-247, wherein the selecting the cell is based on the access technology not being restricted by the control information.

Clause 249. The method of any one of clauses 236-248, further comprising: receiving, by a wireless device, a radio access technology (RAT) utilization control information indicating that a first RAT is restricted; performing, by the wireless device, measurements of the one or more neighboring cells of the PLMN; and wherein the performing measurements is based on a second RAT not being the first RAT.

Clause 250. The method of any one of clauses 246-249, further comprising, receiving, by the wireless device from a base station, one or more system information blocks (SIB) indicating one or more selection criteria of the one or more downlink carrier frequencies; and wherein the selecting is further based on the highest priority selection criteria.

Clause 251. The method of any one of clauses 246-250, further comprising, excluding one or more excluded cells from one or more candidate cells, based on the control information; and wherein the cell is selected from the one or more candidate cells.

Clause 252. The method of any one of clauses 246-251, further comprising, determining to perform the measurement based on a quality of a current cell not meeting a selection criteria.

Clause 253. A wireless device comprising one or more processors and memory storing instructions that, when executed by the one or more processors, cause the wireless device to perform the method of any one of clauses 236-252.

Clause 254. A system comprising: a wireless device configured to perform the method of any one of clauses 236-252, and a computing device configured to send the message comprising control information.

Clause 255. A computer-readable medium storing instructions that, when executed, cause performance of the method any one of clauses 236-252.

Clause 256. A method comprising: receiving, by a wireless device, a message comprising control information for access technology utilization, wherein the control information indicates a first radio access technology (RAT) that is restricted.

Clause 257. The method of clause 256, further comprising, sending a registration message via a cell, of a frequency, that is selected based on: a frequency being configured for the cell and being configured for a second RAT, of the frequency, not being the first RAT, and measurements of one or more cells of the frequency.

Clause 258. The method of any one of clauses 256-257, further comprising receiving, by the wireless device from a base station, one or more system information blocks (SIB) indicating at least one of a downlink carrier frequency of the frequency, the second RAT of the frequency, a first reselection priority of the frequency, and a second reselection priority of a current frequency.

Clause 259. The method of any one of clauses 256-258, wherein the wireless device determines one or more candidate cells based on perform the measurements.

Clause 260. The method of any one of clauses 256-259, wherein the wireless device determines one or more candidate cells based on the measurements of the one or more cells; and wherein the wireless device determines a highest ranked cell, of the one or more candidate cells.

Clause 261. A wireless device comprising one or more processors and memory storing instructions that, when executed by the one or more processors, cause the wireless device to perform the method of any one of clauses 256-260.

Clause 262. A system comprising: a wireless device configured to perform the method of any one of clauses 256-261, and a computing device configured to send the message comprising control information.

Clause 263. A computer-readable medium storing instructions that, when executed, cause performance of the method any one of clauses 256-262.

Clause 264. A method comprising: receiving, by a wireless device, one or more system information blocks (SIBs) indicating one or more downlink carrier frequencies of one or more neighboring cells, wherein the one or more SIBs further indicate one or more selection priorities of the one or more downlink carrier frequencies.

Clause 265. The method of clause 264, further comprising, sending a registration message via a cell that is selected based on: the one or more selection priorities, and measurements of the one or more neighboring cells.

Clause 266. The method of any one of clauses 264-265, further comprising, receiving by the wireless device, a non-access stratum (NAS) message comprising control information for access technology utilization.

Clause 267. The method of any one of clauses 264-266, wherein control information indicates whether one or more access technologies of a public land mobile network (PLMN) are restricted; and further comprising performing, by the wireless device, measurements of the one or more neighboring cells of the PLMN.

Clause 268. The method of any one of clauses 264-267, wherein access technology is at least one of: a Global System for Mobile communications (GSM), Evolved Universal mobile telecommunications system Terrestrial Radio Access (EUTRA), New Radio (NR), Universal mobile telecommunications system Terrestrial Radio Access (UTRA), or 6G radio.

Clause 269. A wireless device comprising one or more processors and memory storing instructions that, when executed by the one or more processors, cause the wireless device to perform the method of any one of clauses 264-268.

Clause 270. A system comprising: a wireless device configured to perform the method of any one of clauses 264-268, and a computing device configured to send the one or more SIBs.

Clause 271. A computer-readable medium storing instructions that, when executed, cause performance of the method any one of clauses 264-268.

A wireless device may receive a non-access stratum (NAS) message. The NAS message may comprise a control information for access technology utilization, wherein the control information indicates whether one or more access technologies of a public land mobile network (PLMN) are restricted. The wireless device may perform measurements of one or more neighboring cells of the PLMN. The wireless device may determine whether a cell, of the one or more neighboring cells, may be suitable, based on whether an access technology of the cell is restricted by the control information and the measurements of the one or more neighboring cells. The wireless device may select the cell based on determining whether a cell is suitable. The wireless device may send, via the cell, a registration request message. The wireless device may receive from a base station, one or more system information blocks (SIB). The SIBs may indicate one or more downlink carrier frequencies of the one or more neighboring cells. The SIBs may further indicate one or more reselection priorities of the one or more downlink carrier frequencies. The access technology may be at least one of GSM, EUTRA, NR, UTRA, 6G radio. The wireless device may rank the one or more neighboring cells. The wireless device may select the cell, based on the access technology not being restricted by the control information. The wireless device may select the cell, based on the cell being strongest among the one or more neighboring cells. The wireless device may determine whether to perform the measurement based on a quality of a serving cell that meets a selection criterion. The cell may meet one or more selection criteria. The wireless device may determine whether to select a cell further based on the cell not being barred. A first priority of the cell may be higher than a second priority of the serving cell. A first priority of the cell may be lower than a second priority of the serving cell. The wireless device may comprise one or more processors and memory, storing instructions that, when executed by the one or more processors, perform the method described herein. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may determine whether a cell, of one or more neighboring cells, may be suitable, based on whether an access technology of the cell is restricted by a control information for access technology utilization. The wireless device may select a cell based on whether the cell is restricted. The wireless device may send, via the cell, a registration request message. The wireless device may receive a non-access stratum (NAS) message. The NAS message may comprise control information for access technology utilization. The control information may indicate whether one or more access technologies of a public land mobile network (PLMN) are restricted. The wireless device may perform measurements of the one or more neighboring cells of the PLMN. The wireless device may receive, from a base station, one or more system information blocks (SIB). The SIBs may indicate one or more downlink carrier frequencies of the one or more neighboring cells. The SIBs may indicate one or more reselection priorities of the one or more downlink carrier frequencies. The access technology may be at least one of GSM, EUTRA, NR, UTRA, 6G radio. The wireless device may rank the one or more neighboring cells. The wireless device may select the cell, based on the access technology not being restricted by the control information. The wireless device may select the cell, based on the cell being the strongest among the one or more neighboring cells. The method of claim 5, wherein the wireless device may determine whether to perform the measurement based on a quality of a serving cell meeting a selection criterion. The cell may meet one or more selection criteria. Determining whether to select a cell may be based on the cell not being barred. A first priority of the cell may be higher than a second priority of the serving cell. A first priority of the cell may be lower than a second priority of the serving cell. The wireless device may comprise one or more processors and memory, storing instructions that, when executed by the one or more processors, perform the method described herein. A system may comprise the wireless device configured to perform the described method, additional operations, and/or include additional elements; and a computing device configured to send the control information. A computer-readable medium may store instructions that, when executed, cause performance of the described method, additional operations, and/or include additional elements.

A wireless device may receive, via a first radio access technology (RAT), a non-access stratum (NAS) message. The NAS message may comprise a RAT utilization control information. The RAT utilization control information may indicate that a second RAT may be restricted. The wireless device may receive, from a base station of the first RAT, one or more system information blocks (SIBs). The SIBs may indicate a frequency and/or a reselection priority of the frequency. The wireless device may determine to perform a measurement of the frequency. The determination may be based on a RAT of the frequency not being the second RAT and the reselection priority. The wireless device may select a cell of the frequency based on the measurement. The wireless device may send, via the cell, a registration request message. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. The wireless device may comprise one or more processors and memory, storing instructions that, when executed by the one or more processors, perform the method described herein. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, from a core network node, a non-access stratum (NAS) message. The NAS message may comprise a radio access technology (RAT) utilization control information. The RAT utilization control information may indicate that a first RAT may be restricted, and a second RAT may not be restricted. The wireless device may receive, from a base station, a system information block (SIB) that may indicate a reselection priority of a frequency. The wireless device may determine to perform a measurement of a frequency. The determination to perform a measurement, for example, may be based on at least one of a RAT of the frequency not being the first RAT, the RAT of the frequency being the second RAT, and the reselection priority. The wireless device may select a cell of the frequency, for example, based on the measurement. The wireless device may send, via the cell, a registration request message. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. The wireless device may comprise one or more processors and memory, storing instructions that, when executed by the one or more processors, perform the method described herein. A system may comprise the wireless device configured to perform the described method, additional operations, and/or include additional elements; and a core network node configured to send the NAS message. A computer-readable medium may store instructions that, when executed, cause performance of the described method, additional operations, and/or include additional elements.

A wireless device may receive, a radio access technology (RAT) utilization control information that may indicate that a first RAT may be restricted. The wireless device may determine to perform a measurement of a frequency. The determination to perform the measurement may be based on a second RAT of the frequency not being the first RAT. The wireless device may send a registration request message, for example, via a cell of the frequency and based on the measurement. The wireless device may receive, from a base station, one or more system information blocks (SIB). The SIBs may indicate at least one of a downlink carrier frequency of the frequency, the second RAT of the frequency, a first reselection priority of the frequency, and/or a second reselection priority of a current frequency. The wireless device may perform a measurement of the frequency. The wireless device may select the cell of the frequency. The RAT utilization control information may indicate that a third RAT and a second RAT may not be restricted. The wireless device may receive the RAT utilization control information via at least one of the second RAT or the third RAT. The wireless device may receive the one or more SIBs via at least one of the second RAT or the third RAT. The current frequency may employe at least one of the second RAT or the third RAT. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. The wireless device may comprise one or more processors and memory, storing instructions that, when executed by the one or more processors, perform the method described herein. A system may comprise the wireless device configured to perform the described method, additional operations, and/or include additional elements; and a computing device configured to send the RAT utilization control information. A computer-readable medium may store instructions that, when executed, cause performance of the described method, additional operations, and/or include additional elements.

A wireless device may receive, via a first radio access technology (RAT), a non-access stratum (NAS) message. The NAS message may comprise a RAT utilization control information. The RAT utilization control information may indicate that a second RAT may be restricted. The wireless device, may receive, from a base station of the first RAT, one or more system information blocks (SIBs). The SIBs may indicate a frequency and/or a reselection priority of the frequency. The wireless device may determine to perform a measurement of the frequency. The determination to perform the measurement may be based on a RAT of the frequency not being restricted by the RAT utilization control information and the reselection priority. The wireless device may select a cell of the frequency, for example, based on the measurement. The wireless device may send, via the cell, a registration request message. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, from a core network node, a non-access stratum (NAS) message. The NAS message may comprise a radio access technology (RAT) utilization control information. The RAT utilization control information may indicate that a first RAT may be restricted, and a second RAT may not be restricted. The wireless device may receive, from a base station, a system information block (SIB) indicating a reselection priority of a frequency. The wireless device may determine to perform a measurement of a frequency. The determination to perform the measurement may be based on at least one of a RAT of the frequency not being restricted by the RAT utilization control information and the reselection priority. The wireless device may select a cell of the frequency; for example, based on the measurement. The wireless device may send, via the cell, a registration request message. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, a radio access technology (RAT) utilization control information. The RAT utilization control information may indicate that a first RAT may be restricted. The wireless device may determine to perform, a measurement of a frequency, based on a second RAT of the frequency not being restricted by the RAT utilization control information. The wireless device may send, via a cell of the frequency and based on the measurement, a registration request message. The wireless device may receive, from a base station, one or more system information blocks (SIB). The SIBs may indicate at least one of a downlink carrier frequency of the frequency, the second RAT of the frequency, a first reselection priority of the frequency, and/or a second reselection priority of a current frequency. The wireless device may perform a measurement of the frequency. The wireless device may select the cell of the frequency. The RAT utilization control information may indicate that a third RAT and a second RAT may not be restricted. The wireless device may receive the RAT utilization control information via at least one of the second RAT or the third RAT. The wireless device may receive the one or more SIBs via at least one of the second RAT or the third RAT. The current frequency may employe at least one of the second RAT or the third RAT. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, from a core network node, a non-access stratum (NAS) message. The NAS message may comprise a radio access technology (RAT) utilization control information. The RAT utilization control information may indicate that a first RAT may be restricted. The wireless device may receive, from a base station, a system information block (SIB). The SIB may indicate a first reselection priority for a frequency. The first reselection priority may be higher than a second reselection priority of a current frequency. The wireless device may perform a measurement of the frequency, for example, based on the second RAT of the frequency not being the first RAT. The wireless device may select a cell of the one or more frequencies, for example, based on the measurement. The wireless device may send a registration request message, based on selecting the cell. The wireless device may receive, from a base station, one or more system information blocks (SIB). The SIBs may indicate at least one of a downlink carrier frequency of the frequency, the second RAT of the frequency, a first reselection priority of the frequency, and/or a second reselection priority of a current frequency. The wireless device may perform a measurement of the frequency. The wireless device may select the cell of the frequency. The RAT utilization control information may indicate that a third RAT and a second RAT may not be restricted. The wireless device may receive the RAT utilization control information via at least one of the second RAT or the third RAT. The wireless device may receive the one or more SIBs via at least one of the second RAT or the third RAT. The current frequency may employe at least one of the second RAT or the third RAT. Each of the first RAT, the second RAT and a third RAT may be at least one of GSM, EUTRA, NR, UTRA, 6G radio. GSM may be associated with GERAN. EUTRA may be associated with EUTRAN. NR may be associated with the NGRAN. UTRA may be associated with UTRAN, and 6G radio may be associated with 6G RAN. Determining that the second RAT of the frequency is not the first RAT may involve determining at least one of whether the second RAT may be restricted by the RAT utilization control information, whether the cell of the frequency may be suitable based on the RAT utilization control information, whether a TA of the cell of the frequency may belong to a forbidden TA due to the RAT utilization control information. The one or more SIBs may indicate that the first reselection priority may be of higher priority than the second reselection priority. The wireless device may determine to perform measurements, for example, based on the first reselection priority being of higher priority than the second reselection priority and the second RAT not being restricted by the RATUCI. The one or more SIBs may indicate that the first reselection priority may be of lower priority than the second reselection priority. The wireless device may determine to perform the measurement, for example, based on the first reselection priority being of lower priority than the second reselection priority and that the second RAT may not be restricted by the RATUCI and that a quality of a serving cell of the current frequency may not meet a selection criterion. The wireless device may determine one or more candidate cells based on performing the measurements. The wireless device may determine a highest ranked cell, of the one or more candidate cells. The wireless device may exclude one or more excluded cells from the one or more candidate cell, for example, based on the one or more excluded cells using the first RAT and/or based on the RAT utilization control information. The wireless device may exclude one or more not suitable cells from the one or more candidate cell, for example, based on that the one or more not suitable cells not being suitable and/or based on the RAT utilization control information. The wireless device may determine that the cell may be suitable, for example, based on the second RAT of the cell not being restricted by the RAT utilization control information. The wireless device may determine that the cell may not be barred, for example, based on the second RAT of the cell not being restricted by the RAT utilization control information. The wireless device may select the cell, for example, based on the cell not being barred or the cell being suitable. The wireless device may select the cell, for example, based on the cell not being in the forbidden TA. A system may comprise the wireless device configured to perform the described method, additional operations, and/or include additional elements; and a core network node configured to send the NAS message. A computer-readable medium may store instructions that, when executed, cause performance of the described method, additional operations, and/or include additional elements.

A wireless device may receive, a non-access stratum (NAS) message. The NAS message may comprise a radio access technology (RAT) utilization control information. The RAT utilization control information may indicate that a first RAT may be restricted. The wireless device may perform, for a cell selection procedure, a measurement of one or more candidate cells. The wireless device may rank the one or more candidate cells based on the measurement. The wireless device may determine, a highest ranked cell, of one or more candidate cells, is a suitable cell, based on a second RAT of the cell not being the first RAT. The wireless device may send, via the cell, a registration request message. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, a non-access stratum (NAS) message. The NAS message may comprise a radio access technology (RAT) utilization control information. The RAT utilization control information may indicate that one or more RATs may be restricted to the wireless device. The wireless device may determine, whether a cell may be a suitable cell, based on the RAT utilization control information and a RAT of the cell. The wireless device may send, via the cell, a registration request message. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, via a first tracking area (TA) of a first access technology, a first non-access stratum (NAS) message. The first NAS message may comprise a radio access technology (RAT) utilization control information. The RAT utilization control information may indicate that the first access technology may be restricted for the wireless device. The wireless device may add an identifier of the first TA, to a list of forbidden Tas, based on the first NAS message. The wireless device may receive, via a second access technology, a second NAS message. The second NAS message may not comprise the RAT utilization control information. The wireless device may delete the first TA from the list of forbidden TAs, based on the second NAS message. The wireless device may send, via the first TA, a registration request message. A system may comprise the wireless device configured to perform the described method, additional operations, and/or include additional elements; and a computing device configured to send the NAS messages. A computer-readable medium may store instructions that, when executed, cause performance of the described method, additional operations, and/or include additional elements.

A wireless device may receive a non-access stratum (NAS) message. The NAS message may not comprise a radio access technology (RAT) utilization control information. The wireless device may delete a TA from a list of forbidden TAs based on the NAS message. The wireless device may send, via the TA, a registration request message. A system may comprise the wireless device configured to perform the described method, additional operations, and/or include additional elements; and a computing device configured to send the NAS message. A computer-readable medium may store instructions that, when executed, cause performance of the described method, additional operations, and/or include additional elements.

A wireless device may receive, from a home network, one or more configuration parameters. The one or more configuration parameters may indicate whether the wireless device may be authorized for Prose Direct Discovery if not served by a radio access network (RAN) of an access technology. The wireless device may send, to a visited network, a first non-access stratum (NAS) message. The first NAS message may request registration of the wireless device to the visited network. The wireless device may receive, from the visited network, a second NAS message. The second NAS message may reject the registration. The second NAS message may comprise a radio access technology (RAT) utilization control information that may indicate the access technology. The wireless device may send, using a resource pool of the visited network, a Prose PC5 Discovery message, based on the RAT utilization control information not comprising an identifier indicating the access technology. A system may comprise the wireless device configured to perform the described method, additional operations, and/or include additional elements; and a computing device configured to send the configuration parameters. A computer-readable medium may store instructions that, when executed, cause performance of the described method, additional operations, and/or include additional elements. A system may comprise the wireless device configured to perform the described method, additional operations, and/or include additional elements; and a computing device configured to send the configuration parameters. A computer-readable medium may store instructions that, when executed, cause performance of the described method, additional operations, and/or include additional elements.

A wireless device may receive, from a home network, one or more configuration parameters. The one or more configuration parameters may indicate whether the wireless device may be authorized for Prose Direct Discovery if not served by a radio access network (RAN) of an access technology. The wireless device may receive, from a visited network, a non-access stratum (NAS) message. The NAS message may comprise a radio access technology (RAT) utilization control information indicating the access technology. The wireless device may not send, to a base station of the visited network, a message based on the RAT utilization control information. The wireless device may send, using a resource pool of the visited network, a Prose PC5 Discovery message. A system may comprise the wireless device configured to perform the described method, additional operations, and/or include additional elements; and a computing device configured to send the configuration parameters. A computer-readable medium may store instructions that, when executed, cause performance of the described method, additional operations, and/or include additional elements.

A wireless device may receive, from a visited network, a radio access technology (RAT) utilization control information. The wireless device may send a ProSe PC5 Discovery message for announcement using one or more radio resources of the visited network, for example, based on the RAT utilization control information. A system may comprise the wireless device configured to perform the described method, additional operations, and/or include additional elements; and a computing device configured to send the configuration parameters. A computer-readable medium may store instructions that, when executed, cause performance of the described method, additional operations, and/or include additional elements.

A wireless device, may receive, a message comprising control information for access technology utilization, wherein the control information may indicate whether one or more access technologies of a public land mobile network (PLMN) are restricted. The wireless device may send (e.g., transmit) a registration message via a cell. The cell may be selected, for example, based on measurements of one or more neighboring cells of the PLMN and whether an access technology, of the one or more access technologies, is restricted by the control information. The wireless device may receive a second message. The second message may comprise a selection priority of a frequency. The control information may further comprise information indicating a restricted access technology (RAT). The selection may be further based on a second RAT. An access technology, of the one or more access technologies, may be at least one of: Global System for Mobile communications (GSM), Evolved Universal mobile telecommunications system Terrestrial Radio Access (EUTRA), New Radio (NR), Universal mobile telecommunications system Terrestrial Radio Access (UTRA), or 6G radio. The message may be a non-access stratum (NAS) message. The wireless device may receive, from a base station, one or more system information blocks (SIBs). The one or more SIBs may indicate one or more downlink carrier frequencies of the one or more neighboring cells. The one or more SIBs may further indicate one or more selection priorities, and selecting the cell may be further based on the one or more selection priorities. The wireless device may rank the one or more neighboring cells, and the selection of the cell may be based on the ranking. Selecting the cell may be based on the cell having a strongest signal among the one or more neighboring cells. Selecting the cell may be based on a selection criterion. The wireless device may determine whether the cell, of the one or more neighboring cells, may be suitable, for example, based on whether the access technology of the cell is restricted by the control information, and the measurements of the one or more neighboring cells. Determining whether a cell may be suitable may be further based on the cell not being barred. A first priority of the cell may be higher than a second priority of a serving cell. The wireless device may determine whether to perform the measurements of the one or more neighboring cells, for example, based on a quality of a serving cell meeting a selection criterion. Selecting the cell is based on the access technology not being restricted by the control information. The wireless device may receive, a radio access technology (RAT) utilization control information indicating that a first RAT is restricted. The wireless device may perform measurements of the one or more neighboring cells of the PLMN. Performing measurements may be based on a second RAT not being the first RAT. The wireless device may receive, from a base station, one or more system information blocks (SIB). The one or more SIBs may indicate one or more selection criteria of the one or more downlink carrier frequencies. The selecting may be further based on the highest priority selection criteria. The wireless device may exclude one or more excluded cells from one or more candidate cells. The wireless may exclude the one or more excluded cells based on the control information; and wherein the cell is selected from the one or more candidate cells. The wireless device may determine to perform the measurement based on a quality of a current cell not meeting a selection criteria.

A system may comprise the wireless device configured to perform the described method, additional operations, and/or include additional elements; and a computing device configured to send the control information. A computer-readable medium may store instructions that, when executed, cause performance of the described method, additional operations, and/or include additional elements.

A wireless device may receive a message comprising control information for access technology utilization, wherein the control information indicates a first radio access technology (RAT) that is restricted. The wireless device may send a registration message via a cell, of a frequency, that may be selected, for example, based a frequency being configured for the cell and being configured for a second RAT that is different from the first RAT, and measurements of one or more cells of the frequency. The wireless device may receive, from a base station, one or more system information blocks (SIB) indicating at least one of a downlink carrier frequency of the frequency, the second RAT of the frequency, a first reselection priority of the frequency, and a second reselection priority of a current frequency. The wireless device may determine one or more candidate cells based on perform the measurements. The wireless device may determine one or more candidate cells based on the measurements of the one or more cells; and wherein the wireless device determines a highest ranked cell, of the one or more candidate cells. A system may comprise the wireless device configured to perform the described method, additional operations, and/or include additional elements; and a computing device configured to send the control information. A computer-readable medium may store instructions that, when executed, cause performance of the described method, additional operations, and/or include additional elements.

A wireless device may receive one or more system information blocks (SIBs). The one or more SIBs may indicate one or more downlink carrier frequencies of one or more neighboring cells. The one or more SIBs may further indicate one or more selection priorities of the one or more downlink carrier frequencies. The wireless device may send a registration message via a cell that may be selected based on the one or more selection priorities, and measurements of the one or more neighboring cells. The wireless device may receive a non-access stratum (NAS) message comprising control information for access technology utilization. The control information may indicate whether one or more access technologies of a public land mobile network (PLMN) are restricted. The wireless device may perform measurements of the one or more neighboring cells of the PLMN. The access technology may be at least one of: a Global System for Mobile communications (GSM), Evolved Universal mobile telecommunications system Terrestrial Radio Access (EUTRA), New Radio (NR), Universal mobile telecommunications system Terrestrial Radio Access (UTRA), or 6G radio. A system may comprise the wireless device configured to perform the described method, additional operations, and/or include additional elements; and a computing device configured to send the SIBs. A computer-readable medium may store instructions that, when executed, cause performance of the described method, additional operations, and/or include additional elements.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a wireless device, a message comprising control information for access technology utilization, wherein the control information indicates whether one or more access technologies of a public land mobile network (PLMN) are restricted; and
sending a registration message via a cell that is selected based on:
measurements of one or more neighboring cells of the PLMN, and
whether an access technology, of the one or more access technologies, is restricted by the control information.

2. The method of claim 1, further comprising:
receiving a second message comprising a selection priority of a frequency;
wherein the control information further comprises information indicating a restricted radio access technology (RAT); and
wherein the selection is further based on a second radio access technology (RAT), of the frequency, not being the restricted RAT.

3. The method of any one of claims 1-2, wherein the access technology, of the one or more access technologies, is at least one of: Global System for Mobile communications (GSM), Evolved Universal mobile telecommunications system Terrestrial Radio Access (EUTRA), New Radio (NR), Universal mobile telecommunications system Terrestrial Radio Access (UTRA), or 6G radio.

4. The method of any one of claims 1-3, wherein the message is a non-access stratum (NAS) message.

5. The method of any one of claims 1-4, further comprising receiving, by the wireless device from a base station, one or more system information blocks (SIBs) indicating one or more downlink carrier frequencies of the one or more neighboring cells, wherein the one or more SIBs further indicate one or more selection priorities; and wherein selecting the cell is further based on the one or more selection priorities.

6. The method of any one of claims 1-5, further comprising ranking by the wireless device, the one or more neighboring cells; and wherein the selecting is based on the ranking.

7. The method of any one of claims 1-6, wherein the selecting the cell is based on the cell having a strongest signal among the one or more neighboring cells.

8. The method of any one of claims 1-7, further comprising:
determining, by the wireless device, whether the cell, of the one or more neighboring cells, is suitable, based on:
whether the access technology of the cell is restricted by the control information,
the measurements of the one or more neighboring cells, and
the cell not being barred.

9. The method of any one of claims 1-8, further comprising:
receiving a radio access technology (RAT) utilization control information indicating that a first RAT is restricted;
performing measurements of the one or more neighboring cells of the PLMN; and
wherein the performing measurements is based on a second RAT not being the first RAT.

10. The method of any one of claims 1-9, further comprising:
receiving, by the wireless device from a base station, one or more system information blocks (SIB) indicating one or more selection criteria of the one or more downlink carrier frequencies; and
wherein the selecting is further based on the highest priority selection criteria.

11. The method of any one of claims 1-10, further comprising, excluding one or more excluded cells from one or more candidate cells, based on the control information; and wherein the cell is selected from the one or more candidate cells.

12. The method of any one of claims 1-11, further comprising, determining to perform the measurement based on a quality of a current cell not meeting a selection criteria.

13. A wireless device comprising:
one or more processors; and
memory storing instructions that, when executed by the one or more processors, cause the computing device to perform the method of any one of claims 1 to 12.

14. A system comprising:
a wireless device configured to perform the method of any one of claims 1 to 12; and
a computing device configured to send the message comprising control information for access technology utilization.

15. A computer-readable medium storing instructions that, when executed, cause performance of the method of any one of claims 1 to 12.
